# EUROPEAN PATENT SPECIFICATION

(11) **EP 3 038 201 B1**
(45) Date of publication and mention of the grant of the patent: **30.10.2019**
(21) Application number: 14875229.8
(22) Date of filing: 05.12.2014
(51) Int. Cl.: H01M 10/0567, H01M 4/505, H01M 4/58, H01M 10/052, H01M 10/0568, H01M 10/0569, H01M 2/02, H01M 4/04, H01M 4/131, H01M 4/133, H01M 4/525, H01M 4/587, H01M 4/62, H01M 4/66, H01M 10/0585, H01M 10/0525, H01M 4/1391, H01M 4/1393, H01M 4/02

(54) **COMPOSITION FOR ADDITION TO ELECTROLYTE SOLUTIONS CONTAINING SILYL GROUP-CONTAINING COMPOUND, ELECTROLYTE SOLUTION FOR NONAQUEOUS ELECTRICITY STORAGE DEVICES CONTAINING SAID COMPOSITION, AND LITHIUM ION SECONDARY BATTERY CONTAINING SAID ELECTROLYTE SOLUTION**
ZUSAMMENSETZUNG ZUR HINZUFÜGUNG ZU ELEKTROLYTLÖSUNGEN MIT EINER SILYLGRUPPENHALTIGEN VERBINDUNG, ELEKTROLYTLÖSUNG FÜR NICHTWÄSSRIGE STROMSPEICHERVORRICHTUNGEN MIT DIESER ZUSAMMENSETZUNG SOWIE LITHIUM-IONEN-SEKUNDÄRBATTERIE MIT DER ELEKTROLYTLÖSUNG
COMPOSITION POUR UN AJOUT À DES SOLUTIONS D'ÉLECTROLYTE CONTENANT UN COMPOSÉ CONTENANT UN GROUPEMENT DE SILYLE, SOLUTION D'ÉLECTROLYTE POUR DES DISPOSITIFS DE STOCKAGE D'ÉLECTRICITÉ NON AQUEUX CONTENANT LADITE COMPOSITION ET BATTERIE SECONDAIRE AU LITHIUM-ION CONTENANT LADITE SOLUTION D'ÉLECTROLYTE

(30) Priority: 25.12.2013 JP 2013267281; 31.03.2014 JP 2014073973
(43) Date of publication of application: 29.06.2016
(73) Proprietor: Asahi Kasei Kabushiki Kaisha, Chiyoda-ku, Tokyo 100-0006 (JP)
(72) Inventor: UEMATSU, Nobuyuki, Tokyo 101-8101 (JP); OZAKI, Fumiaki, Tokyo 101-8101 (JP); NAKAMURA, Ayaka, Tokyo 101-8101 (JP)
(74) Representative: dompatent von Kreisler Selting Werner - Partnerschaft von Patent- und Rechtsanwälten mbB
(86) International application number: PCT/JP2014/082339
(87) International publication number: WO 2015/098471

(56) References cited:
- EP-A1- 2 312 685
- EP-A1- 2 675 010
- WO-A1-2010/016520
- WO-A1-2010/016521
- WO-A1-2011/125180
- WO-A1-2012/108505
- CN-A- 101 771 167
- JP-A- 2003 007 332
- JP-A- 2008 091 326
- JP-A- 2008 186 803
- JP-A- 2010 170 991
- JP-A- 2012 248 816
- JP-A- 2013 145 702
- US-A1- 2013 029 219

## Description

### TECHNICAL FIELD

The present invention relates to the use of a composition containing a silyl group-containing compound, at least one basic compound and at least one silicon compound as an additive for an electrolytic solution, such as an additive for an electrolytic solution for a non-aqueous storage device, for instance, a lithium-ion secondary battery.

### BACKGROUND ART

In recent years, associated with development of electronics technology and increased concern about environmental technology, various electrochemical devices have been developed. Conventionally, a lithium-ion secondary battery, which is a representative of a storage battery device, has been mainly used as a rechargeable battery for mobile devices. However, in recent years, use as a battery for a hybrid car and an electric car has been expected, which has required higher battery performance.

In general, as a positive electrode and a negative electrode for the lithium-ion secondary battery, a porous composite electrode has been used, where powder of each active material is hardened using a binder resin. An electrolytic solution is required to supply lithium-ion by soaking deep inside pores of the electrode, as well as provide smooth movement of lithium-ion into and from the interface between the electrolytic solution and the active materials.

A conventional lithium-ion secondary battery operates under a voltage of around 4 V, and as the electrolytic solution, a non-aqueous electrolytic solution has widely been used, where a lithium salt is dissolved into a non-aqueous solvent mainly composed of a carbonate-type solvent. However, because the carbonate-type solvent is combustible liquid, a safer electrolytic solution has been required in the case where the lithium-ion secondary battery is used in applications to a hybrid car, an electric car, etc. To enhance safety of the electrolytic solution, a method for adding a phosphoric acid-type compound, having a specific structure, to the non-aqueous electrolytic solution has been disclosed (for example, refer to PATENT LITERATURE 1). To enhance flame retardance or self-extinguishing property of the electrolytic solution, a method for adding a phosphate ester to the electrolytic solution has also been disclosed (for example, refer to PATENT LITERATURE 2).

In recent years, the lithium-ion secondary battery having higher energy density has been required, and as one method thereof, it has been studied to increase operating voltage of a battery. To attain higher operating voltage of the battery, as a positive electrode operable under higher potential, a positive electrode active material operable under 4.1 V (vs Li/Li⁺) or higher has been proposed (for example, refer to PATENT LITERATURE 3). However, in the lithium-ion secondary battery provided with the positive electrode containing the positive electrode active material operable under 4.1 V (vs Li/Li⁺) or higher potential, use of the conventional non-aqueous electrolytic solution mainly composed of the carbonate-type solvent causes problems of oxidative decomposition of the carbonate-type solvent at the surface of the positive electrode, decrease in lifetime of the battery, and still more gas generation inside the battery. As a method for solving this problem, in PATENT LITERATURE 4, it has been presented that by the addition of a silyl group-containing compound to the non-aqueous electrolytic solution, lifetime of the battery does not decrease, even in operation of the lithium-ion secondary battery under high voltage. In PATENT LITERATURE 5, it has also been presented a method for improving decrease in charging-discharging efficiency and input-output characteristics of the battery that may occur in adding a phosphate ester, by co-presence of a film forming agent, such as vinylene carbonate, etc., with the phosphate ester, in the non-aqueous electrolytic solution.

In PATENT LITERATURE 4 and PATENT LITERATURE 6, it has been presented further the electrolytic solution containing a compound having an N-Si bond, and the electrolytic solution containing a compound having an O-Si bond. In PATENT LITERATURE 7, it has been presented the electrolytic solution containing the compound having the N-Si bond.

### CITATION LIST

### PATENT LITERATURE

[PATENT LITERATURE 1] JP-A-2001-319685
[PATENT LITERATURE 2] JP-A-08-88023
[PATENT LITERATURE 3] JP-A-2000-515672
[PATENT LITERATURE 4] USP-A-2012/0315536
[PATENT LITERATURE 5] JP-A-11-260401
[PATENT LITERATURE 6] KR-A-10-2013-0098704
[PATENT LITERATURE 7] JP-A-11-16602

CN 101771167 discloses an electrolytic solution comprising:
- LiBF4 and LiPF6 as lithium salts,
- a mixed solvent of ethylene carbonate, propene carbonate, methyl ethyl carbonate and diethyl carbonate,
- vinylene carbonate and vinylethylene carbonate,
- toluene, methyl phenyl ethers anisole,
- 1,3-sulfonic acid propriolactone,
- phenyl isocyanate, and
- three (trimethylsilane) phosphate (0.5 % of electrolyte total weight)
- triethylamine (0.1% of electrolyte total weight,
- heptamethyldisilazane (0.01 % of electrolyte total weight).

EP 2675010 discloses a non-aqueous electrolyte solution for a secondary battery having a positive electrode and a negative electrode capable of the absorbing and releasing of a metal ion, and a separator, the non-aqueous electrolyte solution comprising, in addition to an electrolyte and a non-aqueous solvent, 0.01 mass% or more to less than 3 mass% of a compound having one or more partial structure represented by the following general formula (1) and two or more isocyanate groups in the molecule: 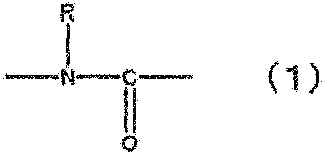 In the general formula (1), R represents hydrogen or a C₁-C₁₂ organic group that may contain an isocyanate group and is constituted of atoms selected from the group consisting of hydrogen atom, carbon atom, nitrogen atom, oxygen atom, sulfur atom, phosphorus atom, and halogen atom.

EP 2312685 discloses a non-aqueous electrolytic solution including an organosilicon compound having a metal atom, a phosphorus atom or a boron atom, and a fluorine-containing alkali metal salt, wherein the content of a fluorinated organosilicon compound generated by reaction of the organosilicon compound and the fluorine-containing alkali metal salt in the non-aqueous electrolytic solution is 0.2 % by mass or less.

US 2013/029219 discloses a nonaqueous electrolyte battery including a nonaqueous electrolyte which is a liquid at 20 °C under a pressure of 1 atmosphere. The nonaqueous electrolyte contains a first compound having a functional group represented by Chemical formula (I), 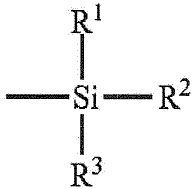 at least one compound selected from a compound having an isocyanato group and a compound having an amino group, a nonaqueous solvent, and an electrolyte.

In the case of a high viscosity liquid of the compound having the O-Si bond, described in PATENT LITERATURE 4, handling is complicated, and it takes longer time in soaking the electrolytic solution, containing the high viscosity additive, into the inside of fine pores of the positive electrode and the negative electrode, which are porous composite electrodes, and thus it decreases productivity of the battery, decreases input-output characteristics of the battery after battery production. There is also a problem that addition of the compound having the O-Si bond to the electrolytic solution gradually decomposes the compound in the electrolytic solution, leading to deterioration of storage stability.

The non-aqueous electrolytic solution described in PATENT LITERATURE 5 only shows the addition of a phosphate ester not containing silicon, therefore, the non-aqueous electrolytic solution described in PATENT LITERATURE 5 does not notice action and effect of the compound having the O-Si bond in the electrolytic solution.

In PATENT LITERATURE 4, 6 and 7, there is no specific disclosure on the electrolytic solution using the compound having the N-Si bond, and the compound having the O-Si bond in combination, therefore the electrolytic solution described in PATENT LITERATURE 4, 6 and 7 has room for improvement of combined use of both compounds therein, and storage stability of the compound having the O-Si bond.

Therefore, a problem to be solved by the present invention is to provide the addition composition for the electrolytic solution, which improves storage stability of the silyl group-containing compound that is a useful additive for the lithium-ion secondary battery, i.e. the non-aqueous storage device

### SOLUTION TO PROBLEM

The present inventors have studied intensively to solve the problems, and as a result, have discovered that the addition composition for the electrolytic solution containing a silyl group-containing compound, and a basic compound and/or a silicon compound is capable of decreasing viscosity, and the electrolytic solution containing the addition composition for the electrolytic solution improves storage stability of the silyl group-containing compound in the electrolytic solution, and still more the lithium-ion secondary battery using the electrolytic solution makes possible to decrease gas generation amount, while maintaining cycle characteristics of the battery and enhancing input-output characteristics, and thus have completed the present invention which is defined in claim 1. Aspects of the present invention are described in the following items 1 to 14.
[1] Use of a composition consisting of:
   (a) a silyl group-containing compound (A), wherein at least one hydrogen atom of an acid selected from the group consisting of a protonic acid having phosphorus atom and/or boron atom, a sulfonic acid, and a carboxylic acid is substituted with a silyl group represented by following general formula (A1): 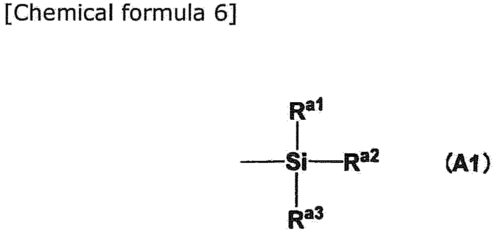 wherein, R^{a1}, R^{a2}, and R^{a3} each independently represent a hydrocarbon group having 1 to 20 carbon atoms, which may be substituted; and
   (b) at least one basic compound (B) selected from the group consisting of Lewis base and a compound represented by general formula Q⁺Y⁻ wherein, Q⁺ represents a quaternary ammonium group, a quaternary phosphonium group, an alkali metal, or an alkaline earth metal, and Y⁻ represents an alkoxy group, or an aryloxy group, and at least one silicon compound (C) represented by following general formula (C): 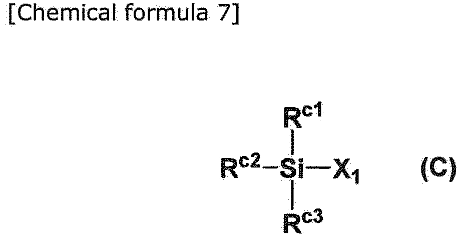
      wherein R^{c1}, R^{c2}, and R^{c3} each independently represent a hydrocarbon group having 1 to 20 carbon atoms, which may be substituted, or an alkoxy group having 1 to 20 carbon atoms, which may be substituted, and X₁ is a group represented by general formula OR¹, wherein R¹ represents a hydrogen atom, a hydrocarbon group having 1 to 20 carbon atoms, which may be substituted, a silyl group having 1 to 20 carbon atoms, SO₂CH₃, or SO₂CF₃, or a halogen atom;
      as an additive for an electrolytic solution,
      characterized in that the composition consists of 0.1 % by mass or more and 10 % by mass or less of the basic compound (B) and the silicon compound (C), relative to 100 % by mass of the silyl group-containing compound (A).
[2] The use according to [1], wherein the silyl group-containing compound (A) comprises at least one selected from the group consisting the compounds represented by general formulae (A2) to (A4): 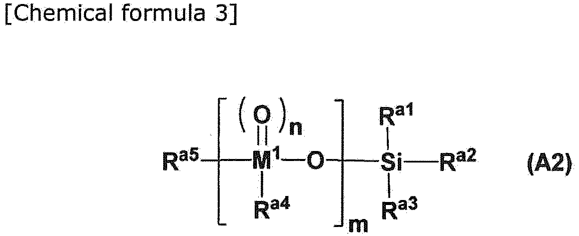 wherein M¹ is a phosphorus atom or a boron atom, m is an integer of 1 to 20, n is 0 or 1 when M¹ is a phosphorus atom, n is 0 when M¹ is a boron atom, R^{a1}, R^{a2}, and R^{a3} are as defined in general formula (A1), and R^{a4} and R^{a5} each independently represent a group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, 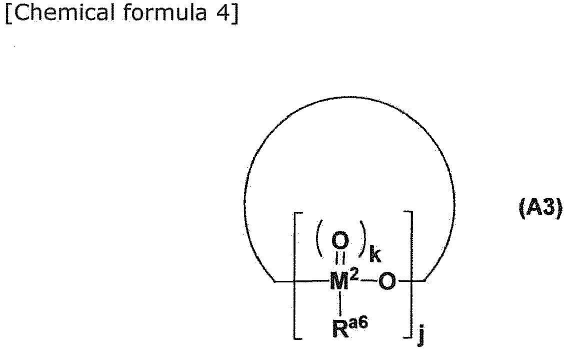 wherein M² is a phosphorus atom or a boron atom, j is an integer of 2 to 20, k is 0 or 1 when M² is a phosphorus atom, k is 0 when M² is a boron atom, and R^{a6} represents a group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, and a group represented by general formula OP(O)ₗ(R^{a7}R^{a8}), wherein l is 0 or 1, R^{a7} and R^{a8} each independently represent an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, 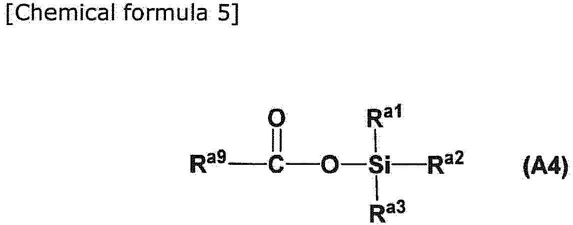 wherein R^{a1}, R^{a2}, and R^{a3} are as defined in general formula (A1), and R^{a9} represents a hydrocarbon group having 1 to 20 carbon atoms, which may be substituted.
[3] The use according to [1] or [2], wherein the Lewis base is a nitrogen-containing organic Lewis base.
[4] The use according to any one of [1] to [3], wherein the basic compound (B) is a compound having an Si-N bond.
[5] The use according to any one of [1] to [4] as an additive for an electrolytic solution of a non-aqueous storage device.
[6] The use according to any one of [1] to [5], wherein the non-aqueous storage device is a lithium-ion secondary battery.
[7] The use according to [5], wherein the non-aqueous storage device comprises a non-aqueous solvent and a lithium salt.
[8] The use according to [7], wherein the lithium salt is at least one selected from the group consisting of LiPF₆, LiBF₄, LiClO₄, LiAsF₆, Li₂SiF₆, LiOSO₂CₖF₂ₖ₊₁, wherein k is an integer of 0 to 8, LiN(SO₂CₖF₂ₖ₊₁)₂, wherein k is an integer of 0 to 8, and LiPFₙ(CₖF₂ₖ₊₁)₆₋ₙ, wherein n is an integer of 1 to 5, and k is an integer of 1 to 8.
[9] The use according to [7] or [8], further comprising at least one lithium salt is selected from the group consisting of lithium difluorophosphate and lithium monofluorophosphate.
[10] The use according to [7] to [9], wherein the non-aqueous solvent comprises a cyclic carbonate and/or a linear carbonate.
[11] The use according to [6], wherein the lithium-ion secondary battery comprises a positive electrode containing a positive electrode active material and a negative electrode containing a negative electrode active material.
[12] The use according to [11], wherein the positive electrode active material has a discharge capacity of 10 mAh/g or more at a potential of 4.1 V (vs Li/Li⁺) or more.
[13] The use according to [12], wherein the positive electrode active material is at least one selected from the group consisting of:
   an oxide represented by following formula (E1):

      LiMn₂₋ₓMaₓO₄ (E1)

      wherein Ma represents at least one selected from the group consisting of transition metals, and x is a number within the range of 0.2≤x≤0.7;
   an oxide represented by following formula (E2):

      LiMn₁₋ᵤMeᵤO₂ (E2)

      wherein Me represents at least one selected from the group consisting of transition metals, except for Mn, and u is a number within the range of 0.1≤u≤0.9;
   a composite oxide represented by following formula (E3):

      zLi₂McO₃-(1-z)LiMdO₂ (E3)

      wherein Mc and Md each independently represent at least one selected from the group consisting of transition metals, and z is a number within the range of 0.1≤z≤0.9;
   a compound represented by following formula (E4):

      LiMb_{1-y}Fe_{y}PO₄ (E4)

      wherein Mb represents at least one selected from the group consisting of Mn and Co, and y is a number within the range of 0≤y≤0.9; and
   a compound represented by following formula (E5):

      Li₂MfPO₄F (E5)

      wherein Mf represents at least one selected from the group consisting of transition metals.
[14] The use according to any one of [11] to [13], wherein positive electrode potential based on lithium is 4.1 V (vs Li/Li⁺) or more, when the battery is fully charged.

Also disclosed is a production method for the electrolytic solution for a non-aqueous storage battery device, comprising a step for adding the silyl group-containing compound (A), and the basic compound (B) and the silicon compound (C) to the electrolytic solution, so as to attain the content of the basic compound (B) and the silicon compound (C) in the electrolytic solution of 0.1 % by mass to 10 % by mass, relative to 100 % by mass of the silyl group-containing compound (A).

### ADVANTAGEOUS EFFECTS OF INVENTION

According to the present invention, the addition composition for the electrolytic solution, containing specific amount of the basic compound and the silicon compound into the silyl group-containing compound, is capable of decreasing viscosity, and the electrolytic solution containing the addition composition for the electrolytic solution improves storage stability of the silyl group-containing compound contained, and still more the electrolytic solution for the non-aqueous storage battery device, which makes possible to decrease gas generation amount, while maintaining cycle characteristics and enhancing input-output characteristics of the battery, and the lithium-ion secondary battery using the electrolytic solution can be provided.

In contrast to conventional technology, where the electrolytic solution using the compound having the N-Si bond and the compound having the O-Si bond in combination has not been studied sufficiently, in the embodiment of the present invention, as will be described later, by the composition, or the electrolytic solution containing combination of the compound having the N-Si bond and the compound having the O-Si bond, storage stability of the compound having the O-Si bond in the composition or the electrolytic solution can be improved further significantly.

### BRIEF DESCRIPTION OF THE DRAWINGS

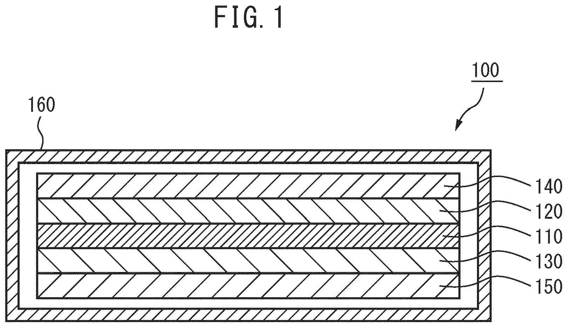

Fig. 1 is a cross-sectional drawing showing schematically one example of the lithium-ion secondary battery in the embodiment of the present invention.

### DESCRIPTION OF EMBODIMENTS

Explanation will be given in detail below on aspects to carry out the present invention (hereafter, referred to simply as embodiments).

### [The addition composition for the electrolytic solution]

According to the present invention, the composition includes
at least one of the compound (a): the silyl group-containing compound (A) as defined above; and
at least one of the compound (b): the basic compound (B) as defined above and the silicon compound (C) as defined above;
and can be used for adding to the electrolytic solution, can be used as an additive for the electrolytic solution, or can be used for producing the electrolytic solution or a non-aqueous storage device. The compounds (a) and (b) contained in the composition are explained below.

### [The compound (a): the silyl group-containing compound (A)]

The silyl group-containing compound (A) is the compound, wherein at least one hydrogen atom of an acid selected from the group consisting of a protonic acid having phosphorus atom and/or boron atom, a sulfonic acid, and a carboxylic acid, is substituted with a silyl group represented by following general formula (A1) : 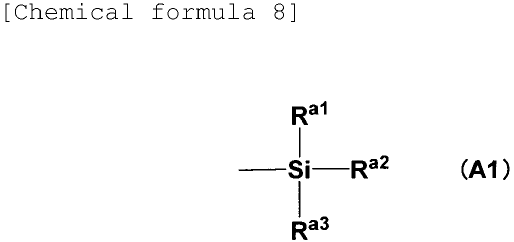 [wherein, R^{a1}, R^{a2}, and R^{a3} each independently represent a hydrocarbon group having 1 to 20 carbon atoms, which may be substituted.].

In an embodiment of the present invention, "the protonic acid having phosphorus atom" is not particularly limited, as long as it is a compound having phosphorus atom, and hydrogen atom which may dissociate as a proton, in a molecule. The protonic acid having phosphorus atom may contain in a molecule not only a halogen atom, such as fluorine atom, chlorine atom, or an organic group, such as an alkoxy group, an alkyl group, but also a dissimilar atom, such as Si, B, O, N. The protonic acid having phosphorus atom may further contain in a molecule a plurality of phosphorus atom, such as a condensed phosphoric acid.

The protonic acid having phosphorus atom is not particularly limited, and for example, orthophosphoric acid, phosphorous acid, phosphonic acid, phosphinic acid, or condensed phosphoric acid is preferable. Among them, orthophosphoric acid, phosphorous acid, phosphonic acid, or condensed phosphoric acid is more preferable. This is because the silyl group-containing compound (A), where at least one hydrogen atom of these protonic acid having phosphorus atom is substituted with silyl group represented by above general formula (A1), is superior in handling, and stability as a compound. The protonic acid having phosphorus atom may also be substituted.

In an embodiment of the present invention, "the protonic acid having boron atom" is not particularly limited, as long as it is a compound having boron atom, and hydrogen atom which may dissociate as a proton, in a molecule. The protonic acid having boron atom may contain in a molecule not only a halogen atom, such as fluorine atom, chlorine atom, or an organic group, such as an alkoxy group, an alkyl group, but also a dissimilar atom, such as Si, B, O, N. The protonic acid having boron atom may further contain in a molecule a plurality of boron atoms. The protonic acid having boron atom is not particularly limited, and, for example, boric acid, boronic acid, or borinic acid is preferable. The protonic acid having boron atom may also be substituted.

In an embodiment of the present invention, "sulfonic acid" is not particularly limited, as long as it is a compound having a SO₃H group (sulfonic acid group) in a molecule, and may have a plurality of sulfonic acid groups. In an embodiment of the present invention, sulfonic acid is also one containing sulfuric acid (HOSO₃H). Sulfonic acid is not particularly limited, and, for example, methanesulfonic acid, ethanesulfonic acid, propanesulfonic acid, butanesulfonic acid, 1,2-ethanedisulfonic acid, trifluoromethanesulfonic acid, perfluorobutanesulfonic acid, benzenesulfonic acid, p-toluenesulfonic acid, sulfuric acid, etc., are preferable.

In an embodiment of the present invention, "a carboxylic acid" is not particularly limited, as long as it is a compound which has a CO₂H group (carboxylic acid group) in a molecule, and may have a plurality of carboxylic acid groups in a molecule. Carboxylic acid is not limited, and includes, for example, acetic acid, trifluoroacetic acid, propionic acid, butyric acid, valeric acid, acrylic acid, methacrylic acid, oleic acid, linoleic acid, linolenic acid, benzoic acid, phthalic acid, isophthalic acid, terephthalic acid, salicylic acid, malonic acid, fumaric acid, succinic acid, glutaric acid, adipic acid, itaconic acid, etc. Among them, a dicarboxylic acid, such as phthalic acid, isophthalic acid, terephthalic acid, malonic acid, fumaric acid, succinic acid, glutaric acid, adipic acid, and itaconic acid are preferable, and adipic acid, itaconic acid, succinic acid, isophthalic acid, and terephthalic acid are more preferable.

In the above general formula (A1), R^{a1} to R^{a3} each independently represent a hydrocarbon group having 1 to 20 carbon atoms, which may be substituted.

In R^{a1} to R^{a3}, "hydrocarbon group which may be substituted" is not particularly limited, and includes, for example, an aliphatic hydrocarbon group, an aromatic hydrocarbon group, such as phenyl group, and a hydrocarbon group substituted with fluorine, such as a trifluoromethyl group in which all hydrogen atoms in the hydrocarbon group are substituted with fluorine atoms. The hydrocarbon group may contain a functional group, if necessary. The functional group is not particularly limited, and includes, for example, a halogen atom, such as a fluorine atom, a chlorine atom, a bromine atom; as well as a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), etc.

With respect to R^{a1} to R^{a3}, a carbon number of the hydrocarbon group is 1 to 20, preferably 1 to 10, more preferably 1 to 6. When the carbon number of R^{a1} to R^{a3} is within the above range, miscibility with a non-aqueous solvent tends to be more superior.

Preferable examples of R^{a1} to R^{a3} include an aliphatic hydrocarbon group, such as methyl group, ethyl group, vinyl group, allyl group, 1-methylvinyl group, n-propyl group, iso-propyl group, n-butyl group, iso-butyl group, sec-butyl group, tert-butyl group, fluoromethyl group, etc.; and an aromatic hydrocarbon group, such as benzyl group, phenyl group, nitrile substituted phenyl group, fluorinated phenyl group, etc. Among them, with respect to availability, handling, and chemical stability, methyl group, ethyl group, vinyl group, allyl group, n-propyl group, iso-propyl group, n-butyl group, tert-butyl group, phenyl group, or fluoromethyl group is more preferable. A ring may also be formed by bonding of two of R^{a1} to R^{a3}. To form a ring, for example, two of R^{a1} to R^{a3} can be substituted with an alkylene group which is substituted or unsubstituted, and saturated or unsaturated.

The silyl group represented by above general formula (A1) is not particularly limited, and for example,-Si(CH₃)₃, -Si(CH₃)₂(C₂H₅), -Si(CH₃)₂(CH=CH₂),-Si(CH₃)₂(CH₂CH₂CH₃), -Si(CH₃)₂(CH₂CH=CH₂),-Si(CH₃)₂(C(CH₃)=CH₂), -Si(CH₃)₂[CH(CH₃)₂],-Si(CH₃)₂[(CH₂)₃CH₃), -Si(CH₃)₂[CH₂CH(CH₃)₂],-Si(CH₃)₂[C(CH₃)₃], -Si(CH₃)₂(C₆H₅), -Si(CH₃)(C₆H₅)₂,-Si(C₆H₅)₃, -Si(C₂H₅)₃, -Si(CH=CH₂)₃, -Si(CH₂CH₂CH₃)₃,-Si[CH(CH₃)₂]₃, -Si(CH₂CH=CH₂)₃, or -Si(CF₃)₃ are preferable; -Si(CH₃)₃, -Si(CH₃)₂(C₂H₅), -Si(CH₃)₂(CH=CH₂),-Si(CH₃)₂(CH₂CH₂CH₃), -Si(CH₃)₂(CH₂CH=CH₂),-Si(CH₃)₂[CH(CH₃)₂], -Si(CH₃)₂[C(CH₃)₃], -Si(CH₃)₂(C₆H₅),-Si(C₂H₅)₃, -Si(CH₂CH₂CH₃)₃, or -Si[CH(CH₃)₂]₃ are more preferable; and -Si(CH₃)₃, -Si(CH₃)₂(CH=CH₂),-Si(CH₃)₂[C(CH₃)₃], or -Si(C₂H₅)₃ are particularly preferable. The silyl group represented by above general formula (A1), by having such a structure, tends to enhance chemical durability in the lithium-ion secondary battery.

In the silyl group-containing compound (A), when an acid selected from the group consisting of the protonic acid having phosphorus atom and/or boron atom, sulfonic acid, or a carboxylic acid, has a plurality of hydrogen atoms, at least one hydrogen atom may be substituted with the silyl group represented by above general formula (A1). In this case, the silyl group-containing compound (A) can also be referred to a silyl ester compound. Residual hydrogen atom unsubstituted may be present as it is, or may be substituted with a functional group, other than the silyl group represented by above general formula (A1). The functional group is not particularly limited, and for example, a saturated or unsaturated hydrocarbon group having 1 to 20 carbon atoms, substituted with halogen, or unsubstituted, is preferable. The saturated or unsaturated hydrocarbon group, substituted with halogen, or unsubstituted, is not particularly limited, and includes, for example, an alkyl group, an alkenyl group, an alkynyl group, allyl group, vinyl group, etc. Two hydrogen atoms contained in the acid selected from the group consisting of a protonic acid having a phosphorus atom and/or a boron atom, a sulfonic acid, and a carboxylic acid, may bond together to form a ring. To form a ring, for example, two hydrogen atoms can bond together to be substituted with the saturated or unsaturated alkylene group, substituted or unsubstituted.

The silyl group-containing compound (A) is not particularly limited, and for example, at least one selected from the group consisting of the compound represented by following general formulae (A2) to (A4): 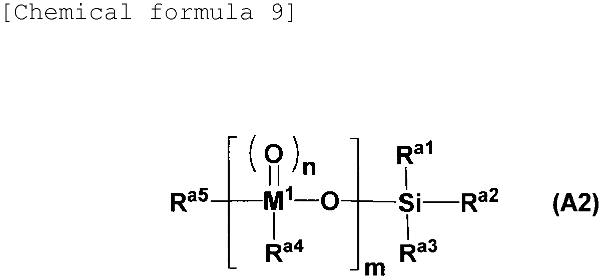 [wherein, M¹ is a phosphorus atom or a boron atom, m is an integer of 1 to 20, n is 0 or 1 when M¹ is phosphorus atom, n is 0 when M¹ is a boron atom, R^{a1}, R^{a2}, and R^{a3} are as defined in general formula (A1), and R^{a4} and R^{a5} each independently represent the group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms.], 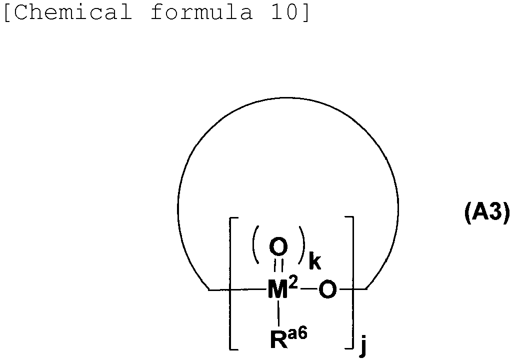 [wherein, M² is a phosphorus atom or a boron atom, j is an integer of 2 to 20, k is 0 or 1 when M² is a phosphorus atom, k is 0 when M² is a boron atom, and R^{a6} represents the group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, and the group represented by general formula OP(O)ₗ(R^{a7}R^{a8}) (wherein, 1 is 0 or 1, R^{a7} and R^{a8} each independently represent an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms.).], 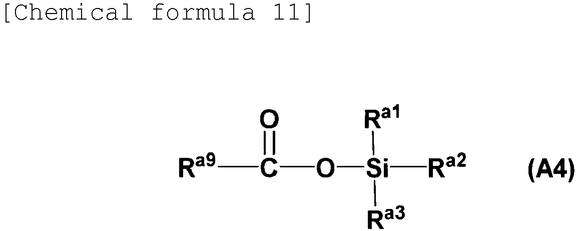 [wherein, R^{a1}, R^{a2}, and R^{a3} are as defined in general formula (A1), and R^{a9} represents a hydrocarbon group having 1 to 20 carbon atoms, which may be substituted.], are preferable.

### [The silyl group-containing compound (A) represented by general formula (A2)]

In above general formula (A2), M¹ is a phosphorus atom or a boron atom, m is an integer of 1 to 20, and n is 0 or 1. When M¹ is a phosphorus atom, n is 0 or 1. When M¹ is a boron atom, n is 0. R^{a1}, R^{a2}, and R^{a3} are the same as in general formula (A1). R^{a4} and R^{a5} each independently represent the group selected from the group consisting of an OH group, an OLi group, a hydrocarbon group having 1 to 20 carbon atoms, which may be substituted, an alkoxy group having 1 to 20 carbon atoms, which may be substituted, and siloxy group having 1 to 20 carbon atoms.

When M¹ is boron atom and n is 0, the silyl group-containing compound represented by general formulation (A2) has a boric acid structure. When M¹ is a phosphorus atom, the silyl group-containing compound represented by general formula (A2) is the compound represented by general formula (A5): 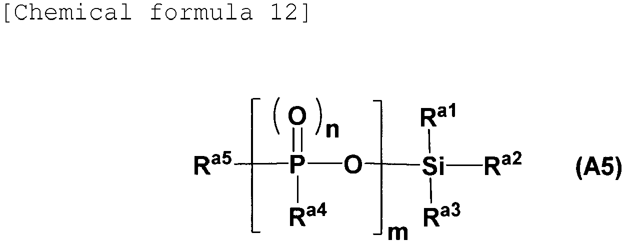 [wherein, m, n, R^{a1}, R^{a2}, R^{a3}, R^{a4} and R^{a5} are as defined in above general formula (A2).]. In general formula (A5), when n is 0, the silyl group-containing compound (A) represented by general formula (A5) has a phosphorous acid structure, and when n is 1, the silyl group-containing compound (A) represented by general formula (A5) has a phosphoric-acid structure.

In above general formula (A2) and above general formula (A5), R^{a4} and R^{a5} each independently represent the group selected from the group consisting of an OH group, an OLi group, a hydrocarbon group having 1 to 20 carbon atoms, which may be substituted, an alkoxy group having 1 to 20 carbon atoms, which may be substituted, a siloxy group having 1 to 20 carbon atoms.

In R^{a4} and R^{a5}, "a hydrocarbon group which may be substituted" is not particularly limited, and includes, for example, an aliphatic hydrocarbon group, an aromatic hydrocarbon group, such as a phenyl group, and a hydrocarbon group substituted with fluorine, such as a trifluoromethyl group in which all hydrogen atoms in the hydrocarbon group are substituted with fluorine atoms. The hydrocarbon group may also have various functional groups. These functional groups are not particularly limited, and include, for example, a halogen atom, such as a fluorine atom, a chlorine atom, a bromine atom, as well as a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group.

In R^{a4} and R^{a5}, a carbon number of the hydrocarbon group is 1 to 20, preferably 1 to 10, more preferably 1 to 6. When the carbon number of the hydrocarbon group is within the above range, miscibility with a non-aqueous solvent tends to be more superior.

In R^{a4} and R^{a5}, a preferable example of the hydrocarbon group includes an aliphatic hydrocarbon group, such as a methyl group, an ethyl group, a vinyl group, an allyl group, an isopropyl group, a propyl group, a butyl group, a pentyl group, a hexyl group, and a fluorohexyl group, and from the standpoint of chemical stability, a methyl group, an ethyl group, an allyl group, a propyl group, a butyl group, pentyl group, a hexyl group, or a fluorohexyl group is more preferable.

In R^{a4} and R^{a5}, "an alkoxy group which may be substituted" is not particularly limited, and includes, for example, an alkoxy group having an aliphatic group, an alkoxy group substituted with fluorine, such as a trifluoromethoxy group or a hexafluoroisopropoxy group in which hydrogen atom in the alkoxy group is substituted with fluorine. The alkoxy group may be substituted with various functional groups, if necessary. These functional groups are not particularly limited, and include, for example, a halogen atom, such as a fluorine atom, a chlorine atom, a bromine atom, as well as a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group, etc.

In R^{a4} and R^{a5}, a carbon number of the alkoxy group is 1 to 20, preferably 1 to 10, more preferably 1 to 6. When the carbon number of the alkoxy group is within the above range, miscibility with a non-aqueous solvent tends to be more superior.

A preferable example of the alkoxy group includes, for example, an aliphatic alkoxy group, such as methoxy group, ethoxy group, vinyloxy group, allyloxy group, propoxy group, butoxy group, cyanoethoxy group, fluoroethoxy group, fluoropropoxy group, and from the standpoint of chemical stability, methoxy group, ethoxy group, vinyloxy group, allyloxy group, propoxy group, butoxy group, cyanoethoxy group, fluoroethoxy group, or fluoropropoxy group is preferable.

In R^{a4} and R^{a5}, the siloxy group represents the group having a structure in which a silicon atom bonds with M atom via an oxygen atom. The siloxy group may also have a siloxane structure, such as Si-O-Si-.

A silicon number of the siloxy group is not particularly limited, and is preferably 1 to 4, more preferably 1 to 3, further preferably 1 to 2, particularly preferably 1. When the silicon number of the siloxy group is within the above range, chemical stability and battery performance tend to be enhanced more.

A carbon number of the siloxy group is also 1 to 20, preferably 3 to 20. When the carbon number of the siloxy group is 3 or more, battery performance tends to be enhanced more. When the carbon number of the siloxy group is 20 or less, chemical stability tends to be enhanced more.

A specific example of siloxy group is not particularly limited, and -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂(C(CH₃)=CH₂), - OSi(CH₃)₂[CH(CH₃)₂], -OSi(CH₃)₂[(CH₂)₃CH₃), - OSi(CH₃)₂[CH₂CH(CH₃)₂], -OSi(CH₃)₂[C(CH₃)₃], -OSi(CH₃)₂(C₆H₅), -OSi(CH₃)(C₆H₅)₂, -OSi(C₆H₅)₃, -OSi(C₂H₅)₃, -OSi(CH=CH₂)₃, - OSi(CH₂CH₂CH₃)₃, -OSi[CH(CH₃)₂]₃, -OSi(CH₂CH=CH₂)₃, or - OSi(CF₃)₃ is preferable; -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂[CH(CH₃)₂], - OSi(CH₃)₂[C(CH₃)₃], -OSi(CH₃)₂(C₆H₅), -OSi(C₂H₅)₃, - OSi(CH₂CH₂CH₃)₃, or -OSi[CH(CH₃)₂]₃ is more preferable; and -OSi(CH₃)₃, -OSi(CH₃)₂(CH=CH₂), -OSi(CH₃)₂[C(CH₃)₃], or - OSi(C₂H₅)₃ is particularly preferable.

### [The silyl group-containing compound (A) represented by general formula (A3)]

In general formula (A3), M² is a phosphorus atom or a boron atom, j is an integer of 2 to 20, and k is 0 or 1. When M² is a phosphorus atom, k is 0 or 1. When M² is a boron atom, k is 0. R^{a6} represents the group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, and general formula OP(O)ₗ(R^{a7}R^{a8}) (wherein, 1 is 0 or 1, R^{a7} and R^{a8} each independently represent an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms.).

In R^{a6}, "a hydrocarbon group which may be substituted" is not particularly limited, and includes, for example, an aliphatic hydrocarbon group, an aromatic hydrocarbon group, such as a phenyl group, and a hydrocarbon group substituted with fluorine, such as a trifluoromethyl group in which all hydrogen atoms in the hydrocarbon group are substituted with fluorine atoms. The hydrocarbon group may also have various functional groups, if necessary. These functional groups are not particularly limited, and include, for example, a halogen atom, such as a fluorine atom, a chlorine atom, a bromine atom, and a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group.

As for R^{a6}, a carbon number of the hydrocarbon group is 1 to 20, preferably 1 to 10, more preferably 1 to 6. When the carbon number of the hydrocarbon group is within the above range, miscibility with a non-aqueous solvent tends to be more superior.

As for R^{a6}, a preferable example of the hydrocarbon group includes an aliphatic hydrocarbon, such as methyl group, an ethyl group, a vinyl group, an allyl group, an isopropyl group, a propyl group, a butyl group, a pentyl group, a hexyl group, and a fluorohexyl group, and from the standpoint of chemical stability, a methyl group, an ethyl group, an allyl group, a propyl group, a butyl group, a pentyl group, hexyl group, or a fluorohexyl group is preferable.

As for R^{a6}, "an alkoxy group which may be substituted" is not particularly limited, and includes, for example, an alkoxy group having an aliphatic group, and an alkoxy group substituted with fluorine, such as trifluoromethoxy group or hexafluoroisopropoxy group in which hydrogen atoms in the alkoxy group are substituted with fluorine atoms. The alkoxy group may be substituted with various functional groups, if necessary. These functional groups are not particularly limited, and include, for example, a halogen atom, such as a fluorine atom, a chlorine atom, a bromine atom, as well as a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group.

As for R^{a6}, a carbon number of the alkoxy group is 1 to 20, preferably 1 to 10, more preferably 1 to 6. When the carbon number of the alkoxy group is within the above range, miscibility with non-aqueous solvent tends to be more superior.

A preferable example of the alkoxy group includes, for example, an aliphatic alkoxy group, such as a methoxy group, an ethoxy group, a vinyloxy group, an allyloxy group, a propoxy group, a butoxy group, a cyanoethoxy group, a fluoroethoxy group, a fluoropropoxy group, etc.; and from the standpoint of chemical stability, a methoxy group, an ethoxy group, a vinyloxy group, an allyloxy group, a propoxy group, a butoxy group, a cyanoethoxy group, a fluoroethoxy group, or a fluoropropoxy group is preferable.

As for R^{a6}, the siloxy group represents the group having a structure in which a silicon atom bonds with M atom via an oxygen atom. The siloxy group may also have a siloxane structure, such as Si-O-Si-.

A silicon number of the siloxy group is not particularly limited, but preferably 1 to 4, more preferably 1 to 3, further preferably 1 to 2, and particularly preferably 1. When the silicon number of the siloxy group is within the above range, chemical stability and battery performance tend to be enhanced more.

A carbon number of the siloxy group is also 1 to 20, and preferably 3 to 20. When the carbon number of the siloxy group is 3 or more, battery performance tends to be enhanced more. When the carbon number of the siloxy group is 20 or less, chemical stability tends to be enhanced more.

A specific example of siloxy group is not particularly limited, but -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂(C(CH₃)=CH₂), - OSi(CH₃)₂[CH(CH₃)₂], -OSi(CH₃)₂[(CH₂)₃CH₃), - OSi(CH₃)₂[CH₂CH(CH₃)₂], -OSi(CH₃)₂[C(CH₃)₃], -OSi(CH₃)₂(C₆H₅), -OSi(CH₃)(C₆H₅)₂, -OSi(C₆H₅)₃, -OSi(C₂H₅)₃, -OSi(CH=CH₂)₃, - OSi(CH₂CH₂CH₃)₃, -OSi[CH(CH₃)₂]₃, -OSi(CH₂CH=CH₂)₃, or - OSi(CF₃)₃ is preferable; -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂[CH(CH₃)₂], - OSi(CH₃)₂[C(CH₃)₃], -OSi(CH₃)₂(C₆H₅), -OSi(C₂H₅)₃, - OSi(CH₂CH₂CH₃)₃, or -OSi[CH(CH₃)₂]₃ is more preferable; and -OSi(CH₃)₃, -OSi(CH₃)₂(CH=CH₂), -OSi(CH₃)₂[C(CH₃)₃], or - OSi(C₂H₅)₃ is particularly preferable.

In general formula OP(O)ₗ(R^{a7}R^{a8}), "a hydrocarbon group which may be substituted" corresponding to R^{a7} or R^{a8} is not particularly limited, and includes, for example, an aliphatic hydrocarbon group, an aromatic hydrocarbon group, such as phenyl group, and a hydrocarbon group substituted with fluorine in which all hydrogen atoms in the hydrocarbon group are substituted with fluorine atoms, such as trifluoromethyl group. The hydrocarbon group may also have various functional groups, if necessary. These functional groups are not particularly limited, and include, for example, a halogen atom, such as a fluorine atom, a chlorine atom, a bromine atom, and a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), etc.

In R^{a7} and R^{a8}, a carbon number of hydrocarbon group is 1 to 20, preferably 1 to 10, and more preferably 1 to 6. When the carbon number of hydrocarbon group is within the above range, miscibility with a non-aqueous solvent tends to be more superior.

As for R^{a7} and R^{a8}, a preferable example of the hydrocarbon group includes an aliphatic hydrocarbon group, such as a methyl group, an ethyl group, a vinyl group, an allyl group, an isopropenyl group, a propyl group, a butyl group, a fluoromethyl group, etc.; an aromatichydrocarbon group such as a benzyl group, a phenyl group, a cyanophenyl group, a fluorophenyl group, etc.; and from the standpoint of chemical stability, a methyl group, an ethyl group, a vinyl group, an allyl group, an isopropenyl group, or a fluoromethyl group are preferable. R^{a7} and R^{a8} may also bond to form a ring. To form a ring, for example, R^{a7} and R^{a8} can be substituted with an alkylene group, which is saturated or unsaturated and is substituted or unsubstituted.

As for R^{a7} and R^{a8}, "an alkoxy group which may be substituted" is not particularly limited, and includes, for example, an alkoxy group having an aliphatic group, an alkoxy group substituted with, such as a trifluoromethoxy group or a hexafluoroisopropoxy group in which hydrogen atoms in the alkoxy group are substituted with fluorine atoms. The alkoxy group may also be substituted with various functional groups if necessary. These functional groups are not particularly limited, and include, for example, a halogen atom such as a fluorine atom, a chlorine atom, a bromine atom, as well as a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group, etc.

As for R^{a7} and R^{a8}, a carbon number of the alkoxy group is 1 to 20, preferably 1 to 10, and more preferably 1 to 6. When the carbon number of the alkoxy group is within the above range, miscibility with a non-aqueous solvent tends to be more superior.

As for R^{a7} and R^{a8}, the siloxy group represents the group having a structure in which a silicon atom bonds with M atom via an oxygen atom. The siloxy group may also have a siloxane structure, such as Si-O-Si-.

A silicon number of the siloxy group is not particularly limited, and preferably 1 to 4, more preferably 1 to 3, further preferably 1 to 2, and particularly preferably 1. When the silicon number of the siloxy group are within the above range, chemical stability and battery performance tend to be enhanced more.

A carbon number of the siloxy group is 1 to 20, and preferably 3 to 20. When the carbon number of the siloxy group is 3 or more, battery performance tends to be enhanced more. When the carbon number of the siloxy group is 20 or less, chemical stability tends to be enhanced more.

A specific example of siloxy group is not particularly limited, and -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂(C(CH₃)=CH₂), - OSi(CH₃)₂[CH(CH₃)₂], -OSi(CH₃)₂[(CH₂)₃CH₃), - OSi(CH₃)₂[CH₂CH(CH₃)₂], -OSi(CH₃)₂[C(CH₃)₃], -OSi(CH₃)₂(C₆H₅), -OSi(CH₃)(C₆H₅)₂, -OSi(C₆H₅)₃, -OSi(C₂H₅)₃, -OSi(CH=CH₂)₃, - OSi(CH₂CH₂CH₃)₃, -OSi[CH(CH₃)₂]₃, -OSi(CH₂CH=CH₂)₃, or - OSi(CF₃)₃ is preferable; -OSi(CH₃)₃, -OSi(CH₃)₂(C₂H₅), - OSi(CH₃)₂(CH=CH₂), -OSi(CH₃)₂(CH₂CH₂CH₃), - OSi(CH₃)₂(CH₂CH=CH₂), -OSi(CH₃)₂[CH(CH₃)₂], - OSi(CH₃)₂[C(CH₃)₃], -OSi(CH₃)₂(C₆H₅), -OSi(C₂H₅)₃, - OSi(CH₂CH₂CH₃)₃, or -OSi[CH(CH₃)₂]₃ is more preferable; and -OSi(CH₃)₃, -OSi(CH₃)₂(CH=CH₂), -OSi(CH₃)₂[C(CH₃)₃], or - OSi(C₂H₅)₃ is particularly preferable.

### [The silyl group-containing compound (A) represented by general formula (A4)]

In above general formula (A4), R^{a1}, R^{a2} and R^{a3} are as defined in above general formula (A1), and R^{a9} represents a hydrocarbon group having 1 to 20 carbon atoms, which may be substituted.

In R^{a9}, "a hydrocarbon group which may be substituted" is not particularly limited, and includes, for example, an aliphatic hydrocarbon group, an aromatic hydrocarbon group such as a phenyl group, and a hydrocarbon group substituted with fluorine, such as a trifluoromethyl group in which hydrogen atoms in the hydrocarbon group are all substituted with fluorine. The hydrocarbon group may also be substituted with various functional groups if necessary. These functional groups are not particularly limited, and include, for example, a halogen atom such as a fluorine atom, chlorine atom, a bromine atom, and a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), etc.

As for R^{a9}, a carbon number of hydrocarbon group is 1 to 20, preferably 1 to 10, and more preferably 1 to 6.

The hydrocarbon group represented by R^{a9} is not particularly limited, but the group represented by following general formula (A6): 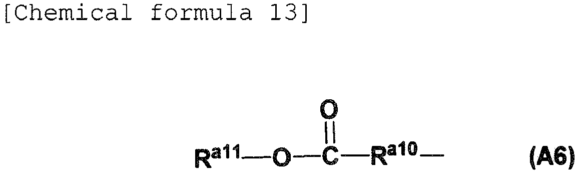 [wherein, R^{a10} represents a hydrocarbon group which may be substituted, R^{a11} represents a hydrocarbon group which may be substituted, or a silyl group substituted with a hydrocarbon group which may be substituted. However, R^{a10} and R^{a11} have 1 to 19 carbon atoms in total.] is preferable. In this case, fundamental skeleton of the silyl group-containing compound (A) represented by above general formula (A4) is a structure of a dicarboxylic acid derivative.

In above general formula (A6), R^{a10} includes preferably a methylene group, an ethylene group, a propylene group, a butylene group, a phenylene group, fluoromethylene group, a fluoroethylene group, a fluoropropylene group, or a fluorobutylene group, from the standpoint of chemical stability of the silyl group-containing compound (A).

In above general formula (A6), R^{a11} includes preferably a methyl group, an ethyl group, a vinyl group, an allyl group, or a trialkylsilyl group, such as a trimethylsilyl group, a triethylsilyl group, and more preferably, a trialkylsilyl group, such as a trimethylsilyl group and a triethylsilyl group, from the standpoint of chemical stability of the silyl group-containing compound (A).

### [A specific example of the silyl group-containing compound (A)]

A specific preferable example of the silyl group-containing compound (A) is not particularly limited, and includes:
a phosphoric acid silyl ester, such as tris(trimethylsilyl) phosphate, tris(dimethylethylsilyl) phosphate, tris(dimethylvinylsilyl) phosphate, tris(dimethyl(n-propyl)silyl) phosphate, tris(allyldimethylsilyl) phosphate, tris(dimethyl(1-methylvinyl)silyl) phosphate, tris(dimethylisopropylsilyl) phosphate, tris(n-butyldimethylsilyl) phosphate, tris(sec-butyldimethylsilyl) phosphate, tris(tert-butyldimethylsilyl) phosphate, tris(dimethylphenylsilyl) phosphate, tris(dipenylmethylsilyl)phosphate, tris(triphenylsilyl) phosphate, tris(triethylsilyl) phosphate, tris(trivinylsilyl) phosphate, tris(tri(n-propyl)silyl) phosphate, tris(triisopropylsilyl) phosphate, tris(triallylsilyl)phosphate, tris[tris(trifluoromethyl)silyl] phosphate, monomethylbis(trimethylsilyl) phosphate, monoethylbis(trimethylsilyl) phosphate, mono(trifluoroethyl)bis(trimethylsilyl) phosphate, mono(hexafluoroisopropyl)bis(trimethylsilyl) phosphate;
a phosphorous acid silyl ester, such as tris(trimethylsilyl) phosphite, tris(dimethylethylsilyl) phosphite, tris(dimethylvinylsilyl) phosphite, tris(dimethyl(n-propyl)silyl) phosphite, tris(allyldimethylsilyl) phosphite, tris(dimethyl(1-methylvinyl)silyl) phosphite, tris(dimethylisopropylsilyl) phosphite, tris(n-butyldimethylsilyl) phosphite, tris(sec-butyldimethylsilyl) phosphite, tris(tert-butyldimethylsilyl) phosphite, tris(dimethylphenylsilyl) phosphite, tris(dipenylmethylsilyl) phosphite, tris(triphenylsilyl) phosphite, tris(triethylsilyl) phosphite, tris(trivinylsilyl) phosphite, tris(tri(n-propyl)silyl) phosphite, tris(triisopropylsilyl) phosphite, tris(triallylsilyl) phosphite, tris[tris(trifluoromethyl)silyl] phosphite;
a linear phosphoric acid silyl ester, such as tetrakis(trimethylsilyl) pyrophosphate, tetrakis(dimethylethylsilyl) pyrophosphate, tetrakis(dimethylvinylsilyl) pyrophosphate, tetrakis(dimethyl(n-propyl)silyl) pyrophosphate, tetrakis(allyldimethylsilyl) pyrophosphate, tetrakis(dimethyl(1-methylvinyl)silyl) pyrophosphate, tetrakis(dimethylisopropylsilyl) pyrophosphate, tetrakis(n-butyldimethylsilyl) pyrophosphate, tetrakis(sec-butyldimethylsilyl) pyrophosphate, tetrakis(tert-butyldimethylsilyl) pyrophosphate, tetrakis(dimethylphenylsilyl) pyrophosphate, tetrakis(dipenylmethylsilyl) pyrophosphate, tetrakis(triphenylsilyl) pyrophosphate, tetrakis(triethylsilyl) pyrophosphate, tetrakis(trivinylsilyl) pyrophosphate, tetrakis(tri(n-propyl)silyl) pyrophosphate, tetrakis(triisopropylsilyl) pyrophosphate, tetrakis(triallylsilyl) pyrophosphate, tetrakis[tris(trifluoromethyl)silyl] pyrophosphate, pentakis(trimethylsilyl) tripolyphosphate, pentakis(dimethylethylsilyl) tripolyphosphate, pentakis(dimethylvinylsilyl) tripolyphosphate, pentakis(dimethyl(n-propyl)silyl) tripolyphosphate, pentakis(allyldimethylsilyl) tripolyphosphate, pentakis(dimethyl(1-methylvinyl)silyl) tripolyphosphate, pentakis(dimethylisopropylsilyl) tripolyphosphate, pentakis(n-butyldimethylsilyl) tripolyphosphate, pentakis(sec-butyldimethylsilyl) tripolyphosphate, pentakis(tert-butyldimethylsilyl) tripolyphosphate, pentakis(dimethylphenylsilyl) tripolyphosphate, pentakis(dipenylmethylsilyl) tripolyphosphate, pentakis(triphenylsilyl) tripolyphosphate, pentakis(triethylsilyl) tripolyphosphate, pentakis(trivinylsilyl) tripolyphosphate, pentakis(tri(n-propyl)silyl) tripolyphosphate, pentakis(triisopropylsilyl) tripolyphosphate, pentakis(triallylsilyl) tripolyphosphate, pentakis[tris(trifluoromethyl)silyl] tripolyphosphate, hexakis(trimethylsilyl) tetrapolyphosphate, hexakis(dimethylethylsilyl) tetrapolyphosphate, hexakis(dimethylvinylsilyl) tetrapolyphosphate, hexakis(dimethyl(n-propyl)silyl) tetrapolyphosphate, hexakis(allyldimethylsilyl) tetrapolyphosphate, hexakis(dimethyl(1-methylvinyl)silyl) tetrapolyphosphate, hexakis(dimethylisopropylsilyl) tetrapolyphosphate, hexakis(n-butyldimethylsilyl) tetrapolyphosphate, hexakis(sec-butyldimethylsilyl) tetrapolyphosphate, hexakis(tert-butyldimethylsilyl) tetrapolyphosphate, hexakis(dimethylphenylsilyl) tetrapolyphosphate, hexakis(dipenylmethylsilyl) tetrapolyphosphate, hexakis(triphenylsilyl) tetrapolyphosphate, hexakis(triethylsilyl) tetrapolyphosphate, hexakis(trivinylsilyl) tetrapolyphosphate, hexakis(tri(n-propyl)silyl) tetrapolyphosphate, hexakis(triisopropylsilyl) tetrapolyphosphate, hexakis(triallylsilyl) tetrapolyphosphate, hexakis[tris(trifluoromethyl)silyl] tetrapolyphosphate;
a cyclic phosphoric acid silyl ester, such as tris(trimethylsilyl) trimetaphosphate, tris(dimethylethylsilyl) trimetaphosphate, tris(dimethylvinylsilyl) trimetaphosphate, tris(dimethyl(n-propyl)silyl) trimetaphosphate, tris(allyldimethylsilyl) trimetaphosphate, tris(dimethyl(1-methylvinyl)silyl) trimetaphosphate, tris(dimethylisopropylsilyl) trimetaphosphate, tris(n-butyldimethylsilyl) trimetaphosphate, tris(sec-butyldimethylsilyl) trimetaphosphate, tris(tert-butyldimethylsilyl) trimetaphosphate, tris(dimethylphenylsilyl) trimetaphosphate, tris(dipenylmethylsilyl) trimetaphosphate, tris(triphenylsilyl) trimetaphosphate, tris(triethylsilyl) trimetaphosphate, tris(trivinylsilyl) trimetaphosphate, tris(tri(n-propyl)silyl) trimetaphosphate, tris(triisopropylsilyl) trimetaphosphate, tris(triallylsilyl) trimetaphosphate, tris[tris(trifluoromethyl)silyl] trimetaphosphate, tetrakis(trimethylsilyl) tetrametaphosphate, tetrakis(dimethylethylsilyl) tetrametaphosphate, tetrakis(dimethylvinylsilyl) tetrametaphosphate, tetrakis(dimethyl(n-propyl)silyl) tetrametaphosphate, tetrakis(allyldimethylsilyl) tetrametaphosphate, tetrakis(dimethyl(1-methylvinyl)silyl) tetrametaphosphate, tetrakis(dimethylisopropylsilyl) tetrametaphosphate, tetrakis(n-butyldimethylsilyl) tetrametaphosphate, tetrakis(sec-butyldimethylsilyl) tetrametaphosphate, tetrakis(tert-butyldimethylsilyl) tetrametaphosphate, tetrakis(dimethylphenylsilyl) tetrametaphosphate, tetrakis(dipenylmethylsilyl) tetrametaphosphate, tetrakis(triphenylsilyl) tetrametaphosphate, tetrakis(triethylsilyl) tetrametaphosphate, tetrakis(trivinylsilyl) tetrametaphosphate, tetrakis(tri(n-propyl)silyl) tetrametaphosphate, tetrakis(triisopropylsilyl) tetrametaphosphate, tetrakis(triallylsilyl) tetrametaphosphate, tetrakis[tris(trifluoromethyl)silyl] tetrametaphosphate;
a polyphosphoric acid silyl ester having a chain structure and/or a cyclic structure, such as trimethylsilyl polyphosphate, dimethylethylsilyl polyphosphate, dimethylvinylsilyl polyphosphate, dimethyl(n-propyl)silyl polyphosphate, allyldimethylsilyl polyphosphate, dimethyl(1-methylvinyl)silyl polyphosphate, dimethylisopropylsilyl polyphosphate, (n-butyl)dimethylsilyl polyphosphate, (sec-butyl)dimethylsilyl polyphosphate, (tert-butyl)dimethylsilyl polyphosphate, dimethylphenylsilyl polyphosphate, dipenylmethylsilyl polyphosphate, triphenylsilyl polyphosphate, triethylsilyl polyphosphate, trivinylsilyl polyphosphate, tri(n-propyl)silyl polyphosphate, triisopropylsilyl polyphosphate, triallylsilyl polyphosphate, tris(trifluoromethyl)silyl polyphosphate;
a phosphonic acid silyl ester, such as bis(trimethylsilyl) butylphosphonate, bis(trimethylsilyl) propylphosphonate, bis(trimethylsilyl) ethylphosphonate, bis(trimethylsilyl) methylphosphonate; a boric acid silyl ester, such as tris(trimethylsilyl)borate, tris(triethylsilyl) borate;
a sulfuric acid silyl ester, such as bis(trimethylsilyl) sulfate, bis(triethylsilyl) sulfate;
a carboxylic acid silyl ester, such as trimethylsilyl acetate, bis(trimethylsilyl) oxalate, bis(trimethylsilyl) malonate, bis(trimethylsilyl) succinate, bis(trimethylsilyl) itaconate, bis(trimethylsilyl) adipate, bis(trimethylsilyl) phthalate, bis(trimethylsilyl) isophthalate, and bis(trimethylsilyl) terephthalate.

Among these, from the standpoint of cycle life, and suppression of gas generation, tris(trimethylsilyl) phosphate, tris(trimethylsilyl) phosphite, tris(triethylsilyl) phosphate, tris(triisopropylsilyl) phosphate, tris(vinyldimethylsilyl) phosphate, tris(allyldimethylsilyl) phosphate, tris(n-propyldimethylsilyl) phosphate, tris(tertbutyldimethylsilyl) phosphate, tris(phenyldimethylsilyl) phosphate, tetrakis(trimethylsilyl) pyrophosphate, pentakis(trimethylsilyl) tripolyphosphate, hexakis(trimethylsilyl) tetrapolyphosphate, tris(trimethylsilyl) trimetaphosphate, tetrakis(trimethylsilyl) tetrametaphosphate, trimethylsilyl polyphosphate bis(trimethylsilyl) butylphosphonate, bis(trimethylsilyl) propylphosphonate, bis(trimethylsilyl) ethylphosphonate, bis(trimethylsilyl) methylphosphonate, monomethylbis(trimethylsilyl) phosphate, monoethylbis(trimethylsilyl) phosphate, mono(trifluoroethyl)bis(trimethylsilyl) phosphate, mono(hexafluoroisopropyl)bis(trimethylsilyl) phosphate, bis(trimethylsilyl) succinate, bis(trimethylsilyl) itaconate, and bis(trimethylsilyl) adipate are more preferable. The silyl group-containing compound (A) exemplified above may be used alone, or in combination.

### [The compound (b): the basic compound (B) and/or the silicon compound (C)]

In an embodiment of the present invention, the composition contains at least one of the basic compound (B) and/or at least one of the silicon compound (C), as the compound (b). The basic compound (B) and the silicon compound (C) are explained below.

### [The basic compound (B)]

The basic compound (B) is at least one selected from the group consisting of the compound represented by Lewis base, or general formula Q⁺ Y⁻ (wherein, Q⁺ represents a quaternary ammonium group, a quaternary phosphonium group, an alkali metal, or an alkaline earth metal, and Y⁻ represents an alkoxy group or an aryloxy group.).

### (Lewis base)

In an embodiment of the present invention, Lewis base is defined as "a material containing an atom having one pair of electrons for chemical bonding". Therefore, Lewis base is not particularly limited, as long as it is a material which contains an atom having a lone pair of electrons for chemical bonding, such as an oxygen atom and a nitrogen atom, and from the standpoint of availability and handling, an organic Lewis base containing at least one nitrogen-containing organic Lewis base selected from the group consisting of an amine compound, an amide compound, an imide compound, the compound having the Si-N bond, and the compound having the P-N bond is preferable.

The amine compound includes, for example, an alkyl amine in which at least one hydrogen atom of ammonia (NH₃) is substituted with an alkyl group having 20 or less carbon atoms, or a cyclic amine.

When the alkylamine has a plurality of alkyl groups, a plurality of alkyl groups may be the same or different. The alkyl amine includes, for example, the following:
a monoalkylamine in which a side chain may be substituted, such as ethylamine, n-propylamine, iso-propylamine, n-butylamine, iso-butylamine, sec-butylamine, tert-butylamine, hexylamine, heptylamine, octylamine, nonylamine, decylamine;
a dialkylamine in which a side chain may be substituted, such as dimethylamine, ethylmethylamine, diethylamine, dipropylamine, diisopropylamine, butylethylamine, dibutylamine, dipentylamine, dihexylamine, diheptylamine, dioctylamine, dicyclohexylamine; and
a trialkylamine in which a side chain may be substituted, such as trimethylamine, triethylamine, tripropylamine, tributylamine, tripentylamine, trihexylamine, triheptylamine, trioctylamine, trinonylamine, tridecanylamine, tridodecylamine, dimethylethylamine, diisopropylethylamine.

From the standpoint of cycle life of a battery to be described later, the trialkylamine is preferable.

The cyclic amine includes, for example, a hetero-cyclic compound containing nitrogen atom as a hetero atom, or an aromatic amine. The hetero-cyclic compound may be a mono-cyclic compound (an aliphatic mono-cyclic amine) or a poly-cyclic compound (an aliphatic poly-cyclic amine). The aliphatic mono-cyclic amine specifically includes piperidine, piperazine, 1,4,7-trimethyl-1,4,7-triazacyclononane, etc. The aliphatic poly-cyclic amine specifically includes 1,5-diazabicyclo[4.3.0]-5-nonene, 1,8-diazabicyclo[5.4.0]-7-undecene, hexamethylenetetramine, 1,4-diazabicyclo[2.2.2]octane, etc. The aromatic amine includes aniline, pyridine, 4-dimethylaminopyridine, pyrrole, indole, pyrazole, imidazole or derivative thereof; dipenylamine, triphenylamine, tribenzylamine, 2,2'-bipyridyl, 1,10-phenanthroline, etc.

The amine compound used in an embodiment of the present invention may contain a plurality of nitrogen atoms in one molecule. The amine compound containing a plurality of nitrogen atoms in one molecule includes, for example, ethylenediamine, N,N,N',N'-tetramethylethylenediamine, N,N,N',N'-tetraethylethylenediamine, triethylenediamine, p-phenyenediamine, etc. From the standpoint of cycle life, ethylene diamine, N,N,N',N'-tetramethylethylenediamine, or N,N,N',N'-tetraethylethylenediamine is preferable.

The amide compound includes the compound represented by following formula (B1):

R^{B1}-CO-NR^{B2}R^{B3} (B1).

In above formula (B1), R^{B1} to R^{B3} are each independently a hydrogen atom, a hydrocarbon group having 1 to 20 carbon atoms, which may be substituted, or the group having a cyclic skeleton which may be substituted. R^{B1} to R^{B3} may be the same or different, and may bond together to form a ring.

In the above formula (B1) further, when R^{B1} is the group represented by following formula (B1'):

R^{B1'}-O- (B1')

(wherein, R^{B1'} is a hydrocarbon group having 1 to 20 carbon atoms, which may be substituted, or the group having a cyclic skeleton which may be substituted), the amide compound represented by above formula (B1) is generally referred to as a carbamic acid ester, but in the present specification, this is contained in the amide compound.

The amide compound also includes, for example, an acetamide, such as N,N-dimethylacetamide, N,N-dimethyltrifluoroacetamide; N,N-dimethylformamide, α-lactam, β-lactam, γ-lactam, δ-lactam; methyl carbamate, ethyl carbamate, methyl N,N-dimethylcarbamate, ethyl N,N-dimethylcarbamate, etc.

The imide compound includes the compound represented by following general formula (B2):

R^{B4}-CO-NR^{B5}-CO-R^{B6} (B2).

In formula (B2), R^{B4} to R^{B6} are each independently a hydrogen atom, a hydrocarbon group having 1 to 20 carbon atoms, which may be substituted, or the group having a cyclic skeleton which may be substituted. R^{B4} to R^{B6} may be the same or different, and may bond together to form a ring.

The imide compound includes, for example, maleimide, N-methylmaleimide, N-ethylmaleimide, N-phenylmaleimide, phthalimide, N-methylphthalimide, N-ethylphthalimide, N-phenylphthalimide, etc.

As the compound having the Si-N bond, the compound having high capability of dehydration and/or acid neutralization may be used. The compound having the Si-N bond and high capability of dehydration and/or acid neutralization includes, for example, the compound represented by general formulae (B3) to (B5) to be described below.

Among the compounds having the Si-N bond, one example of the compound in which 1 to 3 of Si elements bond to an N element includes the compound represented by following general formula (B3): 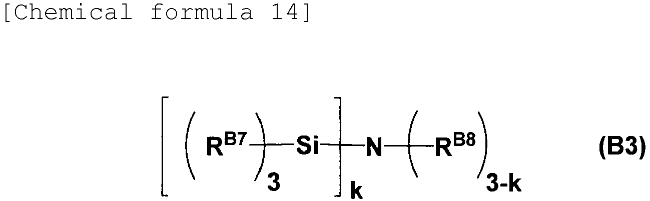 In above general formula (B3), k is an integer of 1 to 3. From the standpoint of chemical stability, the compound having a monosilazane structure in which k is 1 in above general formula (B3), and the compound having a disilazane structure in which k is 2 in above general formula (B3) are preferable.

In above general formula (B3), R^{B7} represents a hydrogen atom, or a hydrocarbon group having 1 to 20 carbon atoms, which may be substituted. Three R^{B7}s may also be the same or different.

A carbon number of R^{B7} is 1 to 20, and from the standpoint of handling and availability of the compound represented by general formula (B3), it is preferably 1 to 10, and more preferably 1 to 6.

In above general formula (B3), (R^{B7})₃Si group is not particularly limited, and for example, (CH₃)₃Si, (C₂H₅)(CH₃)₂Si, (CH₂=CH)(CH₃)₂Si, (CH₃CH₂CH₂)(CH₃)₂Si, (CH₂=CHCH₂)(CH₃)₂Si, [(CH₃)₂CH](CH₃)₂Si, [(CH₃)₂CHCH₂](CH₃)₂Si, [(CH₃)₃C](CH₃)₂Si, (C₆H₅)(CH₃)₂Si, (C₂H₅)₃Si, (CH₃CH₂CH₂)₃Si, [(CH₃)₂CH]₃Si, or (C₆H₅)₃Si is preferable; (CH₃)₃Si, (CH₂=CH)(CH₃)₂Si, (CH₃CH₂CH₂)(CH₃)₂Si, (CH₂=CHCH₂)(CH₃)₂Si, [(CH₃)₂CH](CH₃)₂Si, [(CH₃)₃C](CH₃)₂Si, (C₂H₅)₃Si, or [(CH₃)₂CH]₃Si is more preferable, and (CH₃)₃Si is particularly preferable.

In above general formula (B3), R^{B8} represents a hydrogen atom or a hydrocarbon group having 1 to 20 carbon atoms, which may be substituted. R^{B8} may form a double bond with a nitrogen atom. When there is a plurality of R^{B8}s, a plurality of R^{B8}s may be the same or different, and may form a ring, and the ring formed by a plurality of R^{B8}s may be a heterocyclic group having N, O, etc.

From the standpoint of further enhancing battery performance, in above general formula (B3), R^{B8} is preferably a hydrogen atom or a hydrocarbon group having 1 to 10 carbon atoms, which may be substituted.

A specific example of R^{B8} is a hydrogen atom, a methyl group, an ethyl group, an n-propyl group, an iso-propyl group, an n-butyl group, an iso-butyl, a sec-butyl group, a tert-butyl group, a trifluoromethyl group, a cyclohexyl group, an acetylimino group, a trifluoroacetylimino group, or the group represented by following formula (B3a), obtained by forming a ring with two R^{B8}s:

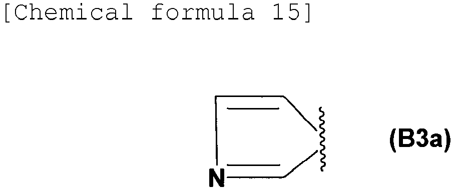

Among the compound having the Si-N bond, as one example of the compound in which one or more N elements are bonded to an Si element, a compound represented by following general formula (B4): 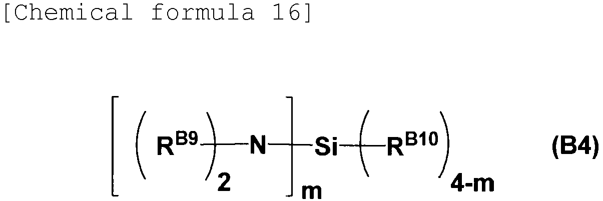 is exemplified.

In general formula (B4), m is an integer of 1 to 4. R^{B9} represents a hydrogen atom, or a hydrocarbon group having 1 to 20 carbon atoms, which may be substituted. Two R^{B9}s may also be the same or different, and may form a ring by bonding them, and the ring formed by bonding two R^{B9}s may be a hetero-cyclic group having N, O atom, etc. R^{B9} is preferably a methyl group, an ethyl group, an n-propyl group, an iso-propyl group, an n-butyl group, an iso-butyl, a sec-butyl group, a tert-butyl group, or any one of the group represented by following general formulae (B4a) to (B4d) obtained by forming a ring with two R^{B9}s: 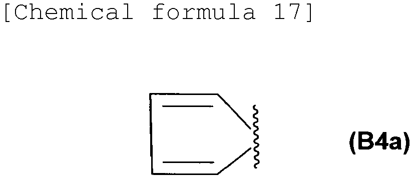 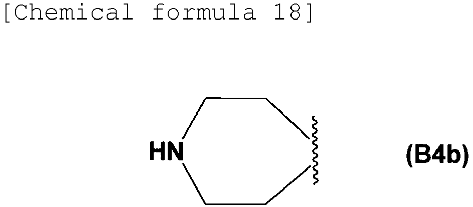 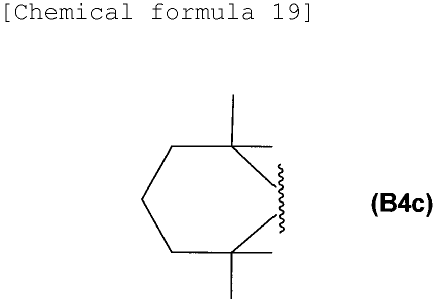 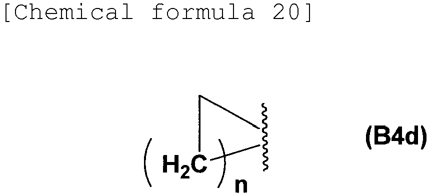 [wherein, n is an integer of 1 to 5.].

In above general formula (B4) also, R^{B10} represents a hydrogen atom, a fluorine atom, a chlorine atom, a bromine atom, or a hydrocarbon group having 1 to 20 carbon atoms, which may be substituted. When 2 or more of R^{B10} exist, 2 or more of R^{B10} may be the same or different. When R^{B9}, R^{B10} and m are as above described, affinity between the composition of the present embodiment and the electrolytic solution tend to be enhanced more.

In above general formula (B4), R^{B10} is preferably a hydrogen atom, a fluorine atom, a chlorine atom, methyl group, an ethyl group, an n-propyl group, an iso-propyl group, an n-butyl group, an iso-butyl, a sec-butyl group, or a tert-butyl group to improve chemical stability of the compound having the Si-N bond.

Among the compound having the Si-N bond, as one example of the compound having a cyclic structure containing a Si atom and an N atom, the compound represented by following general formula (B5): 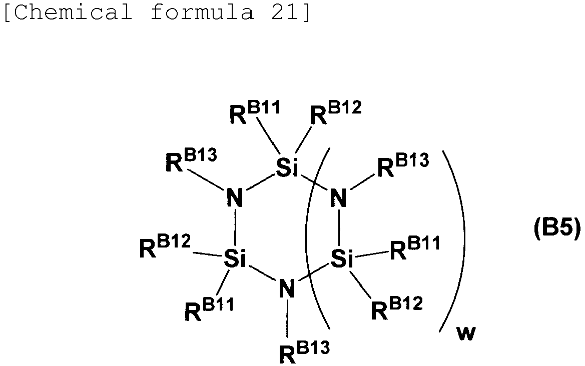 is exemplified.

In above general formula (B5), R^{B11}, R^{B12} and R^{B13} each independently represent a hydrogen atom or a hydrocarbon group having 1 to 20 carbon atoms, which may be substituted, preferably, a methyl group, an ethyl group, an n-propyl group, an iso-propyl group, an n-butyl group, an iso-butyl, a sec-butyl group, or a tert-butyl group; and more preferably, a methyl group. Among the compound represented by general formula (B5), all of a plurality of R^{B11}s, a plurality of R^{B12}s, or a plurality of R^{B13}s may be the same or different. R^{B11}, R^{B12} and R^{B13} are also may be the same or different. When R^{B11}, R^{B12} and R^{B13} are as described above, chemical stability tends to be enhanced. In above general formula (B5), w is an integer of 0 to 4, and from the standpoint of chemical stability, preferably 1 or 2.

From the standpoint of cycle life, a specific preferable example of the compound having the Si-N bond includes, for example, 1,1,1,3,3,3-hexamethyldisilazane (HMDS), 1,1,3,3,5,5-hexamethylcyclotrisilazane, N,O-bis(trimethylsilyl)acetamide (BSA), N,O-bis(trimethylsilyl)trifluoroacetamide (BSTFA), N-trimethylsilylimidazole (TMSI), 1,3-dipenyl-1,1,3,3-tetramethyldisilazane, 1,3-bis(chloromethyl)tetramethyldisilazane, 1,3-divinyl-1,1,3,3-tetramethyldisilazane, heptamethyldisilazane, octamethylcyclotetrasilazane, N,N'-bis(trimethylsilyl)-1,4-butanediamine, N-methyl-N-(trimethylsilyl)acetamide (MTMSA), N-methyl-N-(trimethylsilyl)trifluoroacetamide (MSTFA), N-(trimethylsilyl)dimethylamine (TMSDMA), N-(trimethylsilyl)diethylamine (TMSDEA), N-methyl-N-(tert-butyldimethylsilyl)trifluoroacetamide (MTBSTFA), N,N'-bis(trimethylsilyl)urea (BTSU), tris(dimethylamino)silane, tetrakis(dimethylamide)silane, tris(dimethylamino)chlorosilane, methyltris(dimethylamino)silane, N,N-diethylaminosilane, N,N-diisopropylaminosilane, etc.

From the standpoint of cycle life, and suppression of gas generation, a preferable specific example of the compound having the Si-N bond includes 1,1,1,3,3,3-hexamethyldisilazane(HMDS), 1,1,3,3,5,5-hexamethylcyclotrisilazane, N-(trimethylsilyl)dimethylamine(TMSDMA), octamethylcyclotetrasilazane, or methyltris(dimethylamino)silane, and a particularly preferable specific example thereof is 1,1,1,3,3,3-hexamethyldisilazane(HMDS), N-(trimethylsilyl)dimethylamine(TMSDMA), or heptamethyldisilazane.

In the embodiment of the present invention, as the compound having P-N bond, a phosphazene compound represented by following general formula (B6): 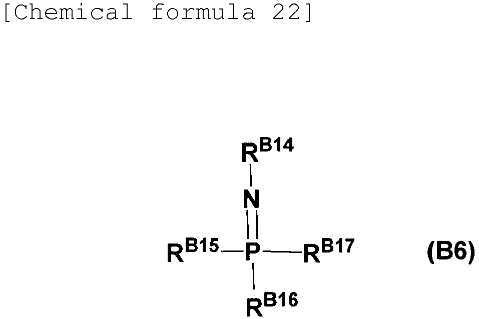 is exemplified.

In general formula (B6), R^{B14} is a hydrocarbon group having 1 to 20 carbon atoms, and R^{B15} to R^{B17} are each independently the group represented by following general formula (B7): 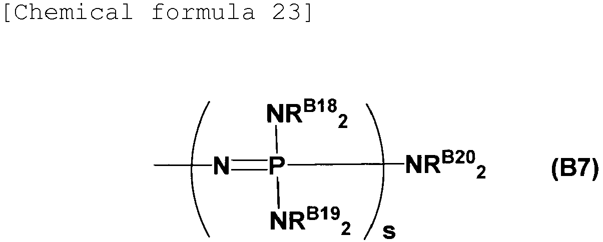 [Wherein, R^{B18}, R^{B19} and R^{B20} are each independently a hydrocarbon group having 1 to 10 carbon atoms, s is an integer of 0 to 10, R^{B18} to R^{B20} may be the same or different, and two R^{B18}s, two R^{B19}s, two R^{B20}s each independently may form a ring by bonding them.].

The phosphazene compound represented by above general formula (B6) is not particularly limited, and from the standpoint of availability and handling, at least one selected from the following compound groups is preferable:

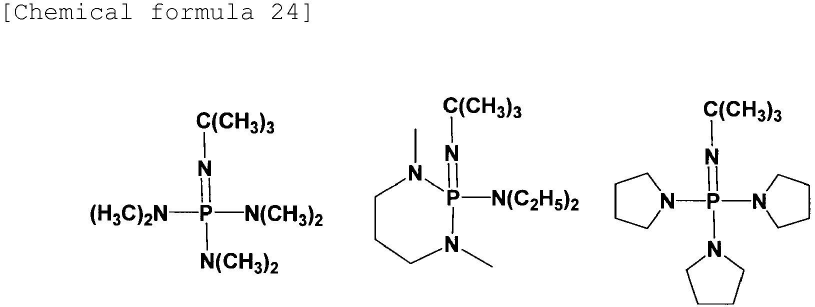

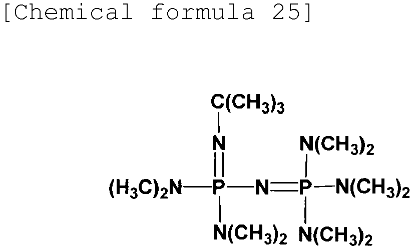

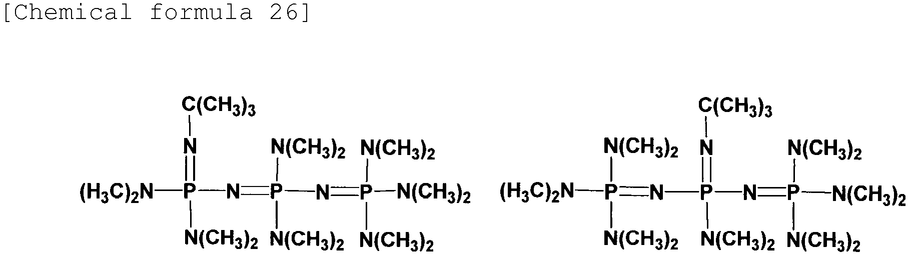

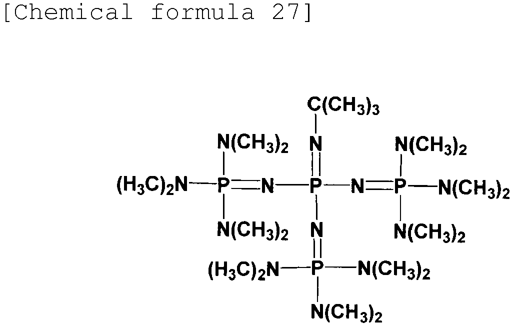

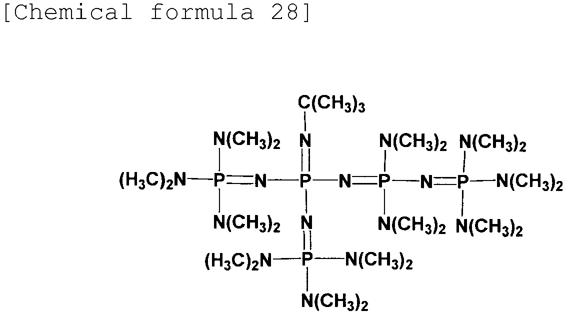

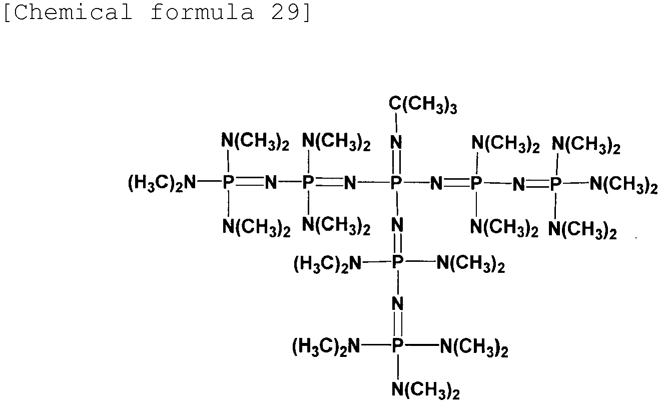

### (The compound represented by general formula Q⁺Y⁻)

In an embodiment of the present invention, as the basic compound (B), the compound represented by general formula Q⁺Y⁻ (wherein, Q⁺ represents a quaternary ammonium group, a quaternary phosphonium group, an alkali metal, or an alkaline earth metal, and Y⁻ represents an alkoxy group, or an aryloxy group.) may be used.

As Q⁺, the following are exemplified:
a quaternary ammonium group, such as tetramethylammonium, tetraethylammonium, tetrapropylammonium, tetrabutylammonium, tetraoctylammonium;
a quaternary phophsnium group, such as tetramethylphosphonium, tetraethylphosphonium, tetrapropylphosphonium, tetrabutylphosphonium, tetraoctylphosphonium;
an alkali metal, such as Li, Na, and K; and an alkaline earth metal, such as Ca, Sr, and Ba.

As Y⁻, the following are exemplified:
an alkoxy group, such as a methoxy group, an ethoxy group, a propoxy group, an allyloxy group, a butoxy group, a benzyloxy group; and an aryloxy group represented by the following general formula: 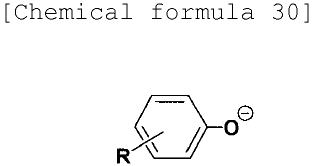 (wherein, R represents a hydrogen atom, an alkyl group which may be substituted, an alkoxy group which may be substituted, an amino group, a nitro group, or a halogen atom.)

The basic compound represented by above general formula Q⁺Y⁻ is not particularly limited, and from the standpoint of availability and handling, at least one selected from the following compound groups is preferable:

CH₃OLi, C₂H₅OLi(CH₃)₃COLi

CH₃ONa, C₂H₅ONa(CH₃)₃CONa

CH₃OK, C₂H₅OK, (CH₃)₃COK

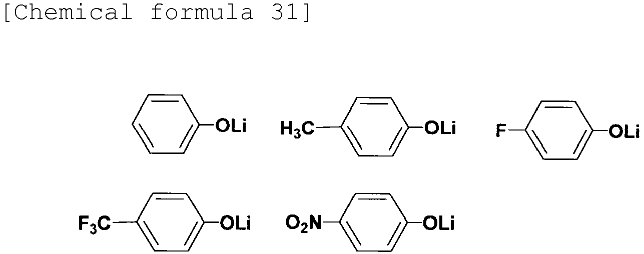

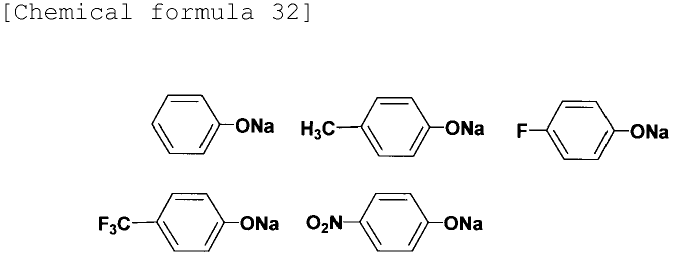

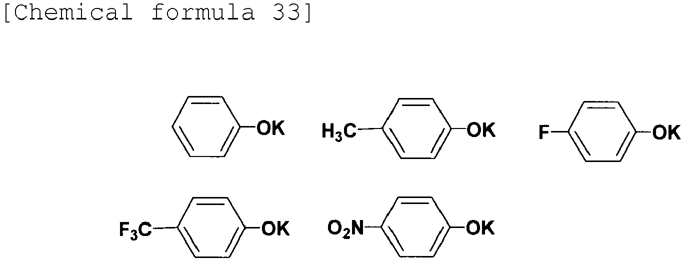

### [The silicon compound (C)]

The silicon compound (C) is at least one compound represented by following general formula (C): 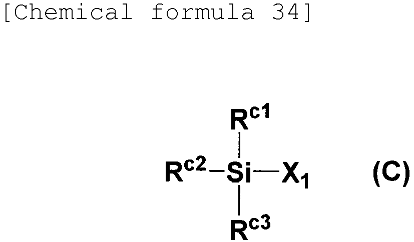 [wherein, R^{c1}, R^{c2}, and R^{c3} each independently represent a hydrocarbon group having 1 to 20 carbon atoms, which may be substituted, an alkoxy group having 1 to 20 carbon atoms, which may be substituted, and X₁ shows the group represented by general formula OR¹ (wherein, R¹ represents a hydrogen atom, a hydrocarbon group having 1 to 20 carbon atoms, which may be substituted, a silyl group having 1 to 20 carbon atoms, SO₂CH₃, or SO₂CF₃), or a halogen atom.].

As for R^{c1} to R^{c3}, "a hydrocarbon group which may be substituted" is not particularly limited, and include, for example, an aliphatic hydrocarbon group, an aromatic hydrocarbon group, such as phenyl group, and a hydrocarbon group substituted with fluorine, such as a trifluoromethyl group in which all hydrogen atoms in the hydrocarbon group are substituted with fluorine atoms. The hydrocarbon group may also have a functional group, if necessary. Such a functional group is not particularly limited, and include, for example, a halogen atom such as a fluorine atom, a chlorine atom, a bromine atom, and a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), etc.

As for R^{c1} to R^{c3}, a carbon number of the hydrocarbon group is 1 to 20, preferably 1 to 10, and more preferably 1 to 6. When the carbon number of the hydrocarbon group is within the above range, miscibility with a non-aqueous solvent tends to be more superior.

As for R^{c1} to R^{c3}, "a hydrocarbon group which may be substituted" is preferably, an aliphatic hydrocarbon group, such as a methyl group, an ethyl group, a vinyl group, an allyl group, an isopropenyl group, a propyl group, a butyl group, a fluoromethyl group; an aromatic hydrocarbon group, such as a benzyl group, a phenyl group, a cyanophenyl group, a fluorophenyl group, and from the standpoint of chemical stability, more preferably a methyl group, an ethyl group, a vinyl group, an allyl group, an isopropenyl group, or a fluoromethyl group. Two of R^{c1} to R^{c3} may also bond to form a ring. To form a ring, for example, two of R^{c1} to R^{c3} can be substituted with an alkylene group, which is saturated or unsaturated and is substituted or unsubstituted.

As for R^{c1} to R^{c3}, "an alkoxy group which may be substituted" is not particularly limited, and includes, for example, an alkoxy group having an aliphatic group, an alkoxy group substituted with fluorine, such as a trifluoromethoxy group or a hexafluoroisopropoxy group in which hydrogen atom in the alkoxy group is substituted with fluorine. The alkoxy group may be substituted with various functional groups, if necessary. These functional groups are not particularly limited, and include, for example, a halogen atom, such as a fluorine atom, a chlorine atom, a bromine atom, as well as, a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group, etc.

As for R^{c1} to R^{c3}, a carbon number of the alkoxy group is 1 to 20, preferably 1 to 10, and more preferably 1 to 6. When the carbon number of the alkoxy group is within the above range, miscibility with a non-aqueous solvent tends to be more superior.

As for R¹ within above general formula OR¹, "a hydrocarbon group which may be substituted" is not particularly limited, and includes, for example, an aliphatic hydrocarbon group, an aromatic hydrocarbon group, such as a phenyl group, and a hydrocarbon group substituted with fluorine, such as a trifluoromethyl group in which all hydrogen atoms within the hydrocarbon group are substituted with fluorine atoms. The hydrocarbon group may also have functional groups, if necessary. These functional groups are not particularly limited, and include, for example, a halogen atom, such as a fluorine atom, a chlorine atom, bromine atom, and a nitrile group (-CN), an ether group (-0-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), etc.

As for R¹ in above general formula OR¹, a carbon number of the hydrocarbon group is 1 to 20, preferably 1 to 10, and more preferably 1 to 6. When the carbon number of the hydrocarbon group is within the above range, miscibility with a non-aqueous solvent tends to be more superior.

"The silyl group" corresponding to R¹ in above general formula OR¹ is the group having a structure in which carbon atom bonds to O atom via silicon atom. The silyl group is not particularly limited, and includes, for example, the silyl group having an aliphatic group, the silyl group substituted with fluorine in which hydrogen atoms in the silyl group are substituted with fluorine atoms, such as a trifluoromethylsilyl group. The silyl group may be substituted with various functional groups, if necessary. These functional groups are not particularly limited, and include a halogen atom, such as a fluorine atom, a chlorine atom, a bromine atom, as well as, a nitrile group (-CN), an ether group (-O-), a carbonate group (-OCO₂-), an ester group (-CO₂-), a carbonyl group (-CO-), a sulfide group (-S-), a sulfoxide group (-SO-), a sulfone group (-SO₂-), an urethane group (-NHCO₂-), an aromatic group, such as a phenyl group and a benzyl group.

As for R¹ in above general formula OR¹, a carbon number of the silyl group is 1 to 20, preferably 1 to 10, and more preferably 1 to 6. When the carbon number of the silyl group is within the above range, miscibility with a non-aqueous solvent tends to be more superior.

As R^{c1}R^{c2}R^{c3}Si group in above general formula (C), (CH₃)₃Si, (C₂H₅)₃Si, (C₃H₇)₃Si, (tert-C₄H₉)(CH₃)₂Si, (CH₂=CH)₃Si, (CH₂=CHCH₂)₃Si, or (CF₃)₃Si are preferable, and (CH₃)₃Si is more preferable. When R^{c1}R^{c2}R^{c3}Si group has above structure, chemical durability within the lithium-ion secondary battery tends to be enhanced more.

A more preferable specific example of the silicon compound (C) includes, from the standpoint of availability and handling, when X₁ is OR¹:

(CH₃)₃SiOH;

(CH₃)₃SiOSi(CH₃)₃;

(C₂H₅)₃SiOSi(C₂H₅)₃;

(C₂H₅)(CH₃)₂SiOSi(CH₃)₂(C₂H₅);

(CH₂=CH)(CH₃)₂SiOSi(CH₃)₂(CH=CH₂);

(C₃H₇)₃SiOSi(C₃H₇)₃;

(C₃H₇)(CH₃)₂SiOSi(CH₃)₂(C₃H₇);

(C₄H₉)(CH₃)₂SiOSi(CH₃)₂(C₄H₉);

(C₄H₉)₃SiOSi(C₄H₉)₃;

(CH₃)₃SiOSO₂CF₃;

(CH₃)₃SiOSO₂CH₃; etc,

and when X₁ is a halogen atom,

(CH₃)₃SiF;

(CH₃)₃SiCl;

(C₂H₅)₃SiF;

(C₂H₅)₃SiCl;

(iso-C₃H₇)₃SiF;

(iso-C₃H₇)₃SiCl

(tert-C₄H₉)(CH₃)₂SiF;

(tert-C₄H₉)(CH₃)₂SiCl;

(ClCH₂)(CH₃)₂SiF;

(ClCH₂)(CH₃)₂SiCl;

(C₆H₅)₃SiF;

(C₆H₅)₃SiCl; etc.

### [Combined use of the compound (a) and the compound (b)]

The addition composition for the electrolytic solution containing the silyl group-containing compound (A), as the compound (a),and the basic compound (B) and the silicon compound (C), as the compound (b), or the electrolytic solution added with the addition composition for the electrolytic solution is capable of suppressing decomposition of the compound (a), and thus improving storage stability significantly, and still more, the lithium-ion secondary battery using the electrolytic solution is capable of enhancing input-output characteristics, and suppressing gas generation, while maintaining improvement effect of cycle characteristics of the battery. As for reason for this, detailed mechanism is not clear, however, it is considered that by cooperation of the compound (a) and the compound (b), decomposition of the compound (a), i.e. the silyl group-containing compound (A), is suppressed, and storage stability of the silyl group-containing compound (A) is improved, and still more, by action of both of the compound (a) and the compound (b) on a positive electrode, or a negative electrode, or both of them, input-output characteristics can be enhanced, and decomposition of the electrolytic solution and gas generation can be suppressed, while maintaining improving effect of cycle characteristics of the battery.

In the present embodiment, composition ratio of the addition composition for the electrolytic solution is important. By controlling the basic compound (B) and the silicon compound (C), as the compound (b), in specific amount, relative to the silyl group-containing compound (A) as the compound (a), input-output characteristics can be enhanced sufficiently, while maintaining cycle characteristics of the battery.

Specifically, in view of decreasing viscosity of the addition composition for the electrolytic solution or the electrolytic solution, and enhancing input-output characteristics of the battery, it is important that content of the compound (b) in the addition composition for the electrolytic solution is 0.1 % by mass to 10 % by mass, relative to 100 % by mass of the compound (a). When the content of the compound (b) is below 1 ppm by mass, effect of decreasing viscosity of the addition composition for the electrolytic solution or the electrolytic solution cannot be obtained sufficiently, as well as effect of enhancing input-output characteristics of the battery cannot be obtained. When the content of the compound (b) is over 100 % by mass, cycle lifetime of the battery decreases. The content of the compound (b), or composition ratio of the addition composition for the electrolytic solution can be confirmed by NMR measurement, such as ¹⁹F-NMR, ³¹P-NMR, ²⁹Si-NMR, etc., element analysis, such as ICP-MS, ICP-AES etc., gas chromatograph measurement, and GC-MS measurement. In various measurement methods, the content of the compound (b), or composition ratio of the addition composition for the electrolytic solution can be determined by preparing a calibration curve using a standard substance.

### [A production method for the addition composition for the electrolytic solution and aspects thereof]

The production method for the addition composition for the electrolytic solution includes, for example, following methods 1) to 3):
1) the method for obtaining the addition composition for the electrolytic solution by adding, in specified amount, the compound (b), i.e. the basic compound (B) and the silicon compound (C) to the compound (a), i.e. the silyl group-containing compound (A);
2) the method for obtaining the addition composition for the electrolytic solution by making an un-reacted compound (b) remained, so as to attain the content described above, relative to the silyl group-containing compound (A), by using the compound (b), i.e. the basic compound (B) and the silicon compound (C), as a raw material in synthesizing the compound (a), i.e. the silyl group-containing compound (A), and by controlling the purification (distillation) condition after the synthetic reaction; and
3) the method for obtaining the addition composition for the electrolytic solution by using the compound (b), i.e. the basic compound (B) and the silicon compound (C), as a raw material in synthesizing the compound (a), i.e. the silyl group-containing compound (A), and by co-presence of a compound (D) in a reaction system, as another raw material than the compound (a), so as to make the compound (D) and the compound (b) reacted, and further by mixing, into the compound (a), a compound (D') having a molecular structure different from the compound (D) .

In the method 3), the compound (D) is not particularly limited, and for example, by using an alcohol having a hydrocarbon group having 1 to 20 carbon atoms, which may be substituted, silanol having 1 to 20 carbon atoms, water, etc., as the compound (D), the group represented by above general formula OR¹ can be introduced into X₁ of the silicon compound represented by above general formula (C). In this case, R¹ in above general formula OR¹ is a hydrogen atom, a hydrocarbon group having 1 to 20 carbon atoms, which may be substituted, or a silyl group having 1 to 20 carbon atoms.

A compound, other than the silyl group-containing compound (A), the basic compound (B) and silicon compound (C) may be added, if necessary, to the addition composition for the electrolytic solution containing at least one type of the compound (a) and at least one type of the compound (b). Such a compound is not particularly limited, and includes, for example, a lithium salt, an unsaturated bond-containing carbonate, a halogen atom-containing carbonate, a carboxylic anhydride, a sulfur atom-containing compound (for example, sulfide, disulfide, sulfonic acid ester, sulfite, sulfate, sulfonic anhydride, etc.), a nitrile group-containing compound, etc.

A specific example of the compound, other than the silyl group-containing compound (A), the basic compound (B), and the silicon compound (C) includes the following:
a lithium salt, for example, lithium monofluorophosphate, lithium difluorophosphate, lithium bis(oxalato)borate, lithium difluoro(oxalato)borate, lithium tetrafluoro(oxalato)phosphate, lithium difluorobis(oxalato)phosphate, etc.;
an unsaturated bond-containing carbonate, for example, vinylene carbonate, vinylethylene carbonate, etc.;
a halogen atom-containing carbonate, for example, fluoroethylene carbonate, trifluoromethylethylene carbonate, etc.;
a carboxylic anhydride, for example, acetic anhydride, benzoic anhydride, succinic anhydride, maleic ahhydride, etc.;
a sulfur atom-containing compound, for example, ethylenesulfide, 1,3-propanesultone, 1,3-propenesultone, 1,4-butanesultone, ethylenesulfate, vinylene sulfate etc.; and
a nitrile group-containing compound, for example, succinonitrile, etc.

By containing the compound, other than the silyl group-containing compound (A), the basic compound (B), and the silicon compound (C), into the addition composition for the electrolytic solution containing the compound (a) and the compound (b), cycle characteristics of the lithium-ion secondary battery using the addition composition for the electrolytic solution tends to be more enhanced.

In the embodiment of the present invention, an aspect of the addition composition for the electrolytic solution may be liquid, a solid or a mixture (a slurry state) of the liquid and the solid. The electrolytic solution for the non-aqueous storage battery device can be produced by adding the addition composition for the electrolytic solution into an electrolytic solution prepared from a non-aqueous solvent and a lithium salt to be described later. Alternatively, a composition containing the compound (a) and the compound (b) may be added to a solid electrolyte.

### <The electrolytic solution for the non-aqueous storage battery device>

In one embodiment of the present invention, the electrolytic solution for the non-aqueous storage battery device (hereafter, it may also be referred to simply as "an electrolytic solution"), contains a non-aqueous solvent, a lithium salt and the addition composition for the electrolytic solution. In another embodiment of the present invention, the electrolytic solution for the non-aqueous storage battery device, containing the non-aqueous solvent and the lithium salt, may be prepared in advance, into which the addition composition for the electrolytic solution may be added as an additive. In the present technical field, in general, the additive is added in relatively small amount relative to the electrolytic solution, specifically, it can be added in 50 % by mass or less, in 40 % by mass or less, in 30 % by mass or less, in 20 % by mass or less, in 10 % by mass or less, in 5 % by mass or less, in 1 % by mass or less, or in 0.5 % by mass, relative to the electrolytic solution. Explanation will be given below on the non-aqueous solvent and the lithium salt.

### [A non-aqueous solvent]

A non-aqueous solvent includes, for example, an aprotonic polar solvent, etc.

The aprotonic polar solvent includes, for example, a cyclic carbonate, such as ethylene carbonate, propylene carbonate, 1,2-butylene carbonate, 2,3-butylene carbonate, 1,2-pentylene carbonate, 2,3-pentylene carbonate, trifluoromethylethylene carbonate, fluoroethylene carbonate, 4,5-difluoroethylene carbonate;
a lactone, such as γ-butyrolactone, γ-valerolactone;
a cyclic sulfone, such as sulfolane;
a cyclic ether, such as tetrahydrofuran, dioxane;
a linear carbonate, such as ethyl methyl carbonate, dimethyl carbonate, diethyl carbonate, methyl propyl carbonate, methyl isopropyl carbonate, dipropyl carbonate, methyl butyl carbonate, dibutyl carbonate, ethyl propyl carbonate, methyl trifluoroethyl carbonate;
a nitrile, such as acetonitrile;
a linear ether, such as dimethyl ether;
a linear carboxylic acid ester, such as methyl propionate; and
a linear diether, such as dimetoxyethane.

Among these, the carbonate, such as the cyclic carbonate, and the linear carbonate are preferable, therefore, explanation will be given below on the carbonate.

### [The carbonate]

The carbonate is not particularly limited, and it is preferable to use a carbonate-type solvent, such as the cyclic carbonate, and the linear carbonate. As the carbonate-type solvent, it is further preferable to use a combination of the cyclic carbonate and the linear carbonate. The electrolytic solution tends to show more superior ionic conductivity by containing the carbonate.

### (The cyclic carbonate)

The cyclic carbonate is not particularly limited, and includes, for example, ethylene carbonate, propylene carbonate, fluoroethylene carbonate, etc. Among these, at least one selected from the group consisting of ethylene carbonate and propylene carbonate is preferable. The electrolytic solution tends to show more superior ionic conductivity by containing the cyclic carbonate.

### (The linear carbonate)

The linear carbonate is not particularly limited, and for example, at least one selected from the group consisting of dimethyl carbonate, diethyl carbonate, and ethyl methyl carbonate is preferable. The electrolytic solution tends to have more superior ionic conductivity by containing the linear carbonate.

### (The carbonate-type solvent)

When the cyclic carbonate and the linear carbonate are used in combination, as the carbonate-type solvent, mixing ratio of the cyclic carbonate and the linear carbonate is preferably 1 : 10 to 5 : 1 by volume (volume of the cyclic carbonate: volume of the linear carbonate), more preferably 1 : 5 to 3 : 1, and further preferably 1 : 5 to 1 : 1. When the mixing ratio is within the above range, ionic conductivity of the lithium-ion secondary battery tends to be more superior.

When the carbonate-type solvent is used, another non-aqueous solvent, such as acetonitrile, sulfolane can further be added to the electrolytic solution, if necessary. Battery property of the lithium-ion secondary battery tends to be improved more by using such another non-aqueous solvent.

The non-aqueous solvent explained above may be used alone as a single type, or as two or more types in combination.

### [The lithium salt]

The lithium salt is not particularly limited, as long as having function, as an electrolyte, of taking a role of ion conductivity of the electrolytic solution. The lithium salt may still more have function to suppress oxidative decomposition of the electrolytic solution by acting on a positive electrode, or a negative electrode, or both of the positive electrode and the negative electrode.

A suitable lithium salt includes, for example, LiPF₆, LiBF₄, LiClO₄, LiAsF₆, Li₂SiF₆, LiOSO₂CₖF₂ₖ₊₁ (wherein, k is an integer of 0 to 8), LiN (SO₂CₖF₂ₖ₊₁)₂ (wherein, k is an integer of 0 to 8), LiPFₙ(CₖF₂ₖ₊₁)₆₋ₙ (wherein, n is an integer of 1 to 5, and k is an integer of 1 to 8.); etc. From the standpoint of availability of a lithium salt, ease of handling, and ease of dissolving, LiPF₆, LiBF₄, LiN (SO₂CₖF₂ₖ₊₁)₂ (wherein, k is an integer of 0 to 8.}, and LiPFₙ(CₖF₂ₖ₊₁)₆₋ₙ (n is an integer of 1 to 5, and k is an integer of 1 to 8.) are preferable, LiPF₆, LiBF₄, LiN (SO₂CₖF₂ₖ₊₁)₂ (wherein, k is an integer of 0 to 8.) are more preferable, and LiPF₆ is particularly preferable. Among a plurality of lithium salts having the structure listed above, one type or two or more types in combination may be used.

It is preferable that content of the lithium salt is 1 % by mass to 40 % by mass, more preferably 5 % by mass to 35 % by mass, and particularly preferably 7 % by mass to 30 % by mass, relative to 100 % by mass of the non-aqueous solvent described above. When the content is 1 % by mass or higher, ion conductivity of the lithium-ion secondary battery tends to be more superior. When the content is 40 % by mass or lower, solubility of the lithium salt at low temperature also tends to be enhanced more. The content of the lithium salt, relative to the non-aqueous solvent, can be confirmed by NMR measurement, such as ¹⁹F-NMR, ¹¹B-NMR, ³¹P-NMR, etc. The content of the lithium salt in the electrolytic solution in the lithium-ion secondary battery can also be confirmed by NMR measurement, such as ¹⁹F-NMR, ¹¹B-NMR, ³¹P-NMR, etc., as well as elemental analysis, such as ICP-MS, ICP-AES, etc.

### [The electrolytic solution added with the addition composition for the electrolytic solution]

A desired electrolytic solution can be prepared by adding the addition composition for the electrolytic solution to the electrolytic solution prepared from the non-aqueous solvent and the lithium salt. The desired electrolytic solution may also be prepared by adding, each in predetermined amount, at least one of the compound (a) and at least one of the compound (b) into the electrolytic solution prepared from the non-aqueous solvent and the lithium salt.

It is preferable that the addition composition for the electrolytic solution is added into the electrolytic solution prepared from the non-aqueous solvent and the lithium salt, so that the compound (a) is contained in an amount of 0.01 % by mass to 10 % by mass, relative to 100 % by mass of the electrolytic solution prepared from the non-aqueous solvent and the lithium salt. When the content of the compound (a) in the electrolytic solution is 0.01 % by mass or higher, cycle lifetime of the lithium-ion secondary battery tends to be enhanced more. When the content is 10 % by mass or lower, battery output also tends to be enhanced more. From this viewpoint, the content of the compound (a) in the electrolytic solution is more preferably 0.02 % by mass to 10 % by mass, still more preferably 0.1 % by mass to 8 % by mass, and particularly preferably 0.5 % by mass to 5 % by mass, relative to 100 % by mass of the electrolytic solution. The content of the compound (a) in the electrolytic solution can be confirmed by NMR measurement. The content of the compound (a) in the electrolytic solution in the lithium-ion secondary battery can be confirmed by NMR measurement similarly as above.

### [Other additive for the electrolytic solution]

In the electrolytic solution pertaining to the present embodiment, an additive, other than the above non-aqueous solvent, the above lithium salt and the above silyl group-containing compound (A), may be added, if necessary. Such an additive is not particularly limited, and includes, for example, another lithium salt, an unsaturated bond-containing carbonate, a halogen atom-containing carbonate, a carboxylic anhydride, a sulfur atom-containing compound (for example, sulfide, disulfide, a sulfonic acid ester, sulfite, sulfate, sulfonic anhydride, etc.), a nitrile group-containing compound, etc.

A specific example of another additive is as follows:
a lithium salt, for example, lithium monofluorophosphate, lithium diluorophosphate, lithium bis(oxalato)borate, lithium difluoro(oxalato)borate, lithium tetrafluoro(oxalato)phosphate, lithium difluorobis(oxalato)phosphate, etc.;
an unsaturated bond-containing carbonate, for example, vinylene carbonate, vinylethylene carbonate, etc.;
a halogen atom-containing carbonate, for example, fluoroethylene carbonate, trifluoromethylethylene carbonate, etc.;
a carboxylic anhydride, for example, acetic anhydride, benzoic anhydride, succinic anhydride, maleic anhydride, etc. ;
a sulfur atom-containing compound, for example, ethylene sulfite, 1,3-propane sultone, 1,3-propene sultone, 1,4-butane sultone, ethylene sulfate, vinylene sulfate, etc.; and
a nitrile group-containing compound, for example, succinonitrile, etc.

By using the additive, cycle property of a battery tends to be enhanced. Among these, from the standpoint of further enhancing cycle property of a battery, at least one selected from the group consisting of lithium difluorophosphate and lithium monofluorophosphate is preferable.

For example, content of at least one additive selected from the group consisting of lithium difluorophosphate and lithium monofluorophosphate is preferably 0.001 % by mass or higher, more preferably 0.005 % by mass or higher, and still more preferably 0.02 % by mass or higher, relative to 100 % by mass of the electrolytic solution. When this content is 0.001 % by mass or higher, cycle lifetime of the lithium-ion secondary battery tends to be enhanced more. This content is preferably 3 % by mass or lower, more preferably 2 % by mass or lower, and still more preferably 1 % by mass or lower. When this content is 3 % by mass or lower, ion conductivity of the lithium-ion secondary battery tends to be enhanced more.

The content of other additives in the electrolytic solution can be confirmed by NMR measurement of, such as ³¹P-NMR, ¹⁹F-NMR etc.

### <The non-aqueous storage battery device>

The electrolytic solution pertaining to the present embodiment is suitably used as the electrolytic solution for the non-aqueous storage battery device. Here, the non-aqueous storage battery device means a storage battery device not using an aqueous solution for the electrolytic solution in the storage battery device. An example of the non-aqueous storage battery device includes the lithium-ion secondary battery, a sodium ion secondary battery, a calcium ion secondary battery, and a lithium-ion capacitor. Among these, as the non-aqueous storage battery device, the lithium-ion secondary battery and the lithium-ion capacitor are preferable and the lithium-ion secondary battery is more preferable, in view of practical applicability and durability.

### <The lithium-ion secondary battery>

In one embodiment of the present invention, the lithium-ion secondary battery (hereafter, it may also be referred to simply as "battery") is provided with the electrolytic solution, a positive electrode containing a positive electrode active material, and a negative electrode containing a negative electrode active material. This battery may have a similar composition as that of a conventional lithium-ion secondary battery, except for being provided with the electrolytic solution described above.

### [A positive electrode]

The positive electrode is not particularly limited, as long as it acts as the positive electrode of the lithium-ion secondary battery; therefore, a known positive electrode may be used. It is preferable that the positive electrode contains at least one material selected from the group consisting of material enabling intercalating and discharging lithium-ion as the positive electrode active material. Such materials include, for example, a composite oxide represented by following general formulae (6a) and (6b):

LiₓMO₂ (6a)

Li_{y}M₂O₄ (6b)

(wherein, M represents one or more types of metals selected from transition metals; x is an integer of 0 to 1: and y is an integer of 0 to 2), a metal chalcogenide having a tunnel structure or a layered structure, and a metal oxide, olivine-type phosphoric acid-containing compound, etc.

More specifically, as the positive electrode active material, for example, lithium cobalt oxide represented by LiCoO₂; lithium manganese oxide represented by LiMnO₂, LiMn₂O₄, Li₂Mn₂O₄; lithium nickel oxide represented by LiNiO₂; a lithium-containing composite metal oxide represented by Li_{z}MO₂ (wherein, M represents two or more of elements selected from the group consisting of Ni, Mn, Co, Al, and Mg, and z is a number of more than 0.9 and less than 1.2.); and olivine-type iron phosphate represented by LiFePO₄ may be used. As the positive electrode active material, for example, oxide of metal other than lithium, such as S, MnO₂, FeO₂, FeS₂, V₂O₅, V₆O₁₃, TiO₂, TiS₂, MoS₂ and NbSe₂, may also be used. As the positive electrode active material, a conductive polymer represented by polyaniline, polythiophene, polyacetylene, and polypyrrol may be used.

It is preferable to use the lithium-containing compound as the positive electrode active material, because it tends to be capable of providing high voltage and high energy density. The lithium-containing compound is not particularly limited, as long as it contains lithium, and may be for example, a composite oxide containing lithium and a transition metal element; a phosphate compound containing lithium and a transition metal element; a metal silicate compound containing lithium and a transition metal element; etc. The metal silicate compound containing lithium and a transition metal element includes, for example, the compound represented by LiₜMᵤSiO₄ (M is as defined in above general formula (6a), t is a number of 0 to 1, and u is a number of 0 to 2.).

From the standpoint of obtaining higher voltage, particularly, the composite oxide and the phosphate compound, both of which containing lithium and at least one transition metal elements selected from the group consisting of cobalt (Co), nickel (Ni), manganese (Mn), iron (Fe), copper (Cu), zinc (Zn), chromium (Cr), vanadium (V) and titanium (Ti), are preferable.

More specifically, as the lithium-containing compound, a lithium-containing metal oxide; a lithium-containing metal calcogenide; and a lithium-containing metal phosphate compound are preferable, and the lithium-containing metal oxide, and the lithium-containing metal calcogenide are more preferable. The lithium-containing metal oxide, and the lithium-containing metal calcogenide include, for example, the compound represented each by following general formulae (7a) and (7b):

LiᵥM^{I}O₂ (7a);

Li_{w}M^{II}PO₄ (7b);

[wherein, M^{I} and M^{II} each represent at least one transition metal, and v and w are each different dependent on a charging-discharging state of a battery, however, usually v is a number of 0.05 to 1.10, and w is a number of 0.05 to 1.10.].

The compound represented by general formula (7a) has, in general, a layered structure, and the compound represented by general formula (7b) has, in general, the olivine structure. It is also preferable that, as for these compounds, a part of the transition metal elements is substituted with Al, Mg or other transition metal elements, or it is included in grain boundary, or a part of oxygen atoms is substituted with fluorine atoms etc., to stabilize structures of these compounds. It is also preferable to coat other positive electrode active materials onto at least a part of the positive electrode active material surface.

The positive electrode active material explained above may be used alone as a single type, or as two or more types in combination.

Number average particle size (primary particle size) of the positive electrode active material is preferably 0.05 µm to 100 µm, and more preferably 1 µm to 10 µm. The number average particle size of the positive electrode active material can be measured by a wet-type particle size measurement apparatus (for example, a laser diffraction/scattering-type particle size distribution meter, and a dynamic light scattering-type particle size distribution meter). Alternatively, the number average particle size of the positive electrode active material can also be obtained by randomly extracting 100 particles observed using a transmission electron microscope, analyzing them using image analysis software (for example, image analysis software, developed by Asahi Kasei Engineering Corp., trade name, "A zokun"), and calculating arithmetic mean. In this case, when the number average particle size for the same sample differs among measurement methods, a calibration curve, prepared using a standard sample as an object, may be used.

In the present embodiment, in view of realizing higher voltage, it is preferable that the positive electrode contains a positive electrode active material having a discharge capacity of 10 mAh/g or higher at a potential of 4.1 V (vs Li/Li⁺) or higher. The battery pertaining to the present embodiment is useful, in view of enabling enhancement of cycle lifetime, even when such a positive electrode is provided. Here, the positive electrode active material having a discharge capacity of 10 mAh/g or higher, at a potential of 4.1 V (vs Li/Li⁺) or higher, is the positive electrode active material which is capable of making a charge and discharge reaction as a positive electrode of the lithium-ion secondary battery at a potential of 4.1 V (vs Li/Li⁺) or higher, and the positive electrode active material where discharge capacity in discharge under a constant current of 0.1 C is 10 mAh or higher, relative to 1 g mass of the active material. Therefore, as long as the positive electrode active material has a discharge capacity of 10 mAh/g or higher, at a potential of 4.1 V (vs Li/Li⁺) or higher, it may have discharge capacity at a potential of 4.1 V (vs Li/Li⁺) or lower.

It is preferable that discharge capacity of the positive electrode active material to be used in the present embodiment is 10 mAh/g or higher, more preferably 15 mAh/g or higher, and still more preferably 20 mAh/g or higher, at a potential of 4.1 V (vs Li/Li⁺) or higher. When the discharge capacity of the positive electrode active material is 10 mAh/g or higher, at a potential of 4.1 V (vs Li/Li⁺) or higher, a battery is driven under high voltage and high energy density can be attained. The discharge capacity of the positive electrode active material can also be measured by a method described in Examples.

The positive electrode active material is preferably at least one selected from the group consisting of:
an oxide represented by following formula (E1):

   LiMn₂₋ₓMaₓO₄ (E1)

   [wherein, Ma represents at least one selected from the group consisting of transition metals, and x is a number in the range of 0.2≤x≤0.7.],
an oxide represented by following formula (E2):

   LiMn₁₋ᵤMeᵤO₂ (E2)

   [wherein, Me represents at least one selected from the group consisting of transition metals other than Mn, and u is a number in the range of 0.1≤u≤0.9.],
a composite oxide represented by following formula (E3):

   zLi₂McO₃-(1-z)LiMdO₂ (E3)

   [wherein, Mc and Md each independently represent at least one selected from the group consisting of transition metals, and z is a number in the range of 0.1≤z≤0.9.],
a compound represented by following formula (E4):

   LiMb_{1-y}Fe_{y}PO₄ (E4)

   [wherein, Mb represents at least one selected from the group consisting of Mn and Co, and y is a number in the range of 0≤y≤0.9.], and
a compound represented by following formula (E5):

   Li₂MfO₄F (E5)

   [wherein, Mf represents at least one selected from the group consisting of transition metals.]. By using the positive electrode active material, structural stability of the positive electrode active material tends to be more superior.

The oxide represented by formula (E1) may be a spinel-type positive electrode active material. The spinel-type positive electrode active material is not particularly limited, and for example:
an oxide represented by following formula (E1a):

   LiMn₂₋ₓNiₓO₄ (E1a)

   [wherein, x is a number in the range of 0.2≤x≤0.7.] is preferable; and
an oxide represented by following formula (E1b):

   LiMn₂₋NiₓO₄ (E1b)

   [wherein, x is a number in the range of 0.3≤x≤0.6.] is more preferable.

The oxide represented by Formula (E1a) or (E1b) is not particularly limited, and includes, for example, LiMn_{1.5}Ni_{0.5}O₄ and LiMn_{1.6}Ni_{0.4}O₄. By using spinel-type oxide represented by formula (E1), stability of the positive electrode active material tends to be more superior.

From the view point of stability, electron conductivity, etc., of the positive electrode active material, the spinel-type oxide represented by formula (E1) may still more contain a transition metal or a transition metal oxide, other than the above structure, within a range of 10 % by mole or lower, relative to mole number of Mn atom. The compound represented by formula (E1) may be used alone, as a single type, or as two or more types in combination.

The oxide represented by formula (E2) may be a layered oxide-type positive electrode active material. The layered oxide-type positive electrode active material is not particularly limited. However, for example, a layered oxide represented by following formula (E2a) is preferable:

LiMn_{1-v-w}CoᵥNi_{w}O₂ (E2a)

(wherein, v is number within a range of 0.1≤v≤0.4; and w is number within a range of 0.1≤w≤0.8)

The layered oxide represented by formula (E2a) is not particularly limited, and includes, for example, LiMn_{1/3}Co_{1/3}Ni_{1/3}O₂, LiMn_{0.1}Co_{0.1}Ni_{0.8}O₂, LiMn_{0.3}Co_{0.2}Ni_{0.5}O₂, etc. Use of the compound represented by formula (E2) has tendency to provide more superior stability of the positive electrode active material. The compound represented by formula (E2) may be used alone, as a single type, or as two or more types in combination.

The composite oxide represented by formula (E3) may be a composite layered oxide. The composite layered oxide is not particularly limited and, for example, the composite layered oxide represented by following formula (E3a) is preferable:

zLi₂MnO₃-(1-z)LiNiₐMn_{b}Co_{c}O₂ (E3a)

(wherein, z is number within a range of 0.3≤z≤0.7; a is number within a range of 0.2≤a≤0.6; b is number within a range of 0.2≤b≤0.6; c is number within a range of 0.05≤c≤0.4; and a, b, and c satisfy relation of a + b + c = 1.)

In formula (E3a), the composite oxide, wherein 0.4≤z≤0.6, a + b + c=1, 0.3≤a≤0.4, 0.3≤b≤0.4, and 0.2≤c≤0.3, is more preferable. Use of the composite oxide represented by formula (E3) has tendency to provide more superior stability of the positive electrode active material. From the view point of stability, electron conductivity etc. of the positive electrode active material, the composite oxide represented by formula (E3) may still more contain a transition metal or a transition metal oxide, other than the above structure, within a range of 10 % by mole or lower, relative to total mole number of Mn, Ni, and Co atoms. The compound represented by formula (E3) may be used alone, as a single type, or as two or more types in combination.

The compound represented by formula (E4) may be the olivine-type positive electrode active material. The olivine-type positive electrode active material is not particularly limited and, for example, the compound represented by following formula (E4a):

LiMn_{1-y}Fe_{y}PO₄ (E4a)

(wherein, y is number within a range of 0.05≤y≤0.8),
or the compound represented by following formula (E4b):

LiCo_{1-y}Fe_{y}PO₄ (E4b)

(wherein, y is number within a range of 0.05≤y≤0.8)
is preferable.

Use of the compound represented by formula (E4) has tendency to provide more superior stability and electron conductivity of the positive electrode active material. The compound represented by formula (E4) may be used alone, as a single type, or as two or more types in combination.

The compound represented by formula (E5) may be a fluorinated olivine-type positive electrode active material. The fluorinated olivine-type positive electrode active material is not particularly limited, and for example, Li₂FePO₄F, Li₂MnPO₄F and Li₂CoPO₄F are preferable. Use of the compound represented by formula (E5) has tendency to provide more superior stability of the positive electrode active material. From the view point of stability, electron conductivity, etc., of the positive electrode active material, the compound represented by formula (E5) may still more contain a transition metal or a transition metal oxide, other than the above structure, within a range of 10 % by mole or lower, relative to total mole number of Mn, Fe and Co atoms. The compound represented by formula (E5) may be used alone, as a single type, or as two or more types in combination.

The positive electrode active material, having a discharge capacity of 10 mAh/g or higher, at a potential of 4.1 V (vs Li/Li⁺) or higher, may be used alone, as a single type, or as two or more types in combination. As the positive electrode active material, the positive electrode active material having a discharge capacity of 10 mAh/g or higher, at a potential of 4.1 V (vs Li/Li⁺) or higher, and the positive electrode active material not having a discharge capacity of 10 mAh/g or higher, at a potential of 4.1 V (vs Li/Li⁺) or higher may also be used in combination. As the positive electrode active material not having a discharge capacity of 10 mAh/g or higher at a potential of 4.1 V (vs Li/Li⁺) or higher, for example, LiFePO₄, LiV₃O₈, etc., are included.

### [Positive electrode potential based on lithium in fully-charged state]

It is preferable that the positive electrode potential, based on lithium is 4.1 V (vs Li/Li⁺) or higher, more preferably 4.15 V (vs Li/Li⁺) or higher, and still more preferably 4.2 V (vs Li/Li⁺) or higher, when the lithium-ion secondary battery pertaining to the present embodiment is fully charged. If the positive electrode potential is 4.1 V (vs Li/Li⁺) or higher, charging and discharging capacity of the positive electrode active material which the lithium-ion secondary battery has, tends to be utilized efficiently. When the positive electrode potential is 4.1 V (vs Li/Li⁺) or higher, energy density of the lithium-ion secondary battery tends to be enhanced more. The positive electrode potential based on lithium can be controlled by controlling voltage of the battery in a fully-charged state.

The positive electrode potential, based on lithium in full charge, can be easily measured by disassembling the lithium-ion secondary battery in a fully-charged state, in an Ar glove box, taking out the positive electrode, and assembling again the battery using metal lithium as an opposing electrode to measure voltage. In the case of using a carbon negative electrode active material at the negative electrode, because potential of the carbon negative electrode active material in a fully-charged state is 0.05 V (vs Li/Li⁺), potential of the positive electrode in a fully-charged state can be easily calculated by adding 0.05 V to voltage (Va) of the lithium-ion secondary battery in a fully-charged state. For example, in the lithium-ion secondary battery using the carbon negative electrode active material at the negative electrode, in the case where voltage (Va) of the lithium-ion secondary battery in a fully-charged state is 4.1 V, potential of the positive electrode in a fully-charged state can be calculated as 4.1 V + 0.05 V = 4.15 V. In addition, the "(vs Li/Li⁺)" shows potential based on lithium.

### [A production method for the positive electrode active material]

The positive electrode active material can be produced by a similar method to a production method for a general inorganic oxide. The production method for the positive electrode active material is not particularly limited, and includes, for example, a method for obtaining the positive electrode active material containing the inorganic oxide, by calcinating a mixture of metal salts (for example, a sulfate salt and/or a nitrate salt) in a predetermined ratio, under environment of oxygen-containing atmosphere. Alternatively, a method of obtaining the positive electrode active material containing the inorganic oxide by adding a carbonate salt and/or a hydroxide salt to a solution in which a metal salt is dissolved, so as to precipitate another metal salt having difficult solubility; by separating the metal salt having difficult solubility from the solution by means of extraction; and by mixing the separated metal salt with lithium carbonate and/or lithium hydroxide, as a lithium source, and then calcinating the mixture under an oxygen-containing atmosphere; can be included.

### [A production method for the positive electrode]

An example of the production method for the positive electrode is shown below. Firstly, paste containing a positive electrode mixture is prepared, by dispersing, into a solvent, the positive electrode mixture, obtained by mixing a conductive agent, a binder, etc., as needed, to the positive electrode active material. Then this paste is coated on a positive electrode collector, and dried to form a positive electrode mixture layer, which is pressed as needed to adjust thickness thereof, to prepare the positive electrode.

The positive electrode collector is not particularly limited, and includes, for example, the one composed of a metal foil, such as an aluminum foil, a stainless steel foil, etc.

### [A negative electrode]

The negative electrode is not particularly limited, as long as it acts as the negative electrode of the lithium-ion secondary battery, therefore, a known negative electrode may be used. It is preferable that the negative electrode contains at least one material selected from the group consisting of materials enabling intercalating and discharging lithium-ion as the negative electrode active material. The negative electrode active material is not particularly limited, and includes, for example, metal lithium; a carbon negative electrode active material; a negative electrode active material containing an element capable of forming an alloy with lithium, such as a silicon alloy negative electrode active material and a tin alloy negative electrode active material; a silicon oxide negative electrode active material; a tin oxide negative electrode active material; and a lithium-containing compound represented by a lithium titanate negative electrode active material. These negative electrode active materials may be used alone, as a single type, or as two or more types in combination.

The carbon negative electrode active material is not particularly limited, and includes, for example, hard carbon, soft carbon, artificial graphite, natural graphite, graphite, pyrolytic carbon, coke, glassy carbon, a calcinated substance of an organic polymeric compound, mesocarbon microbeads, a carbon fiber, active charcoal, carbon colloid, and carbon black. Coke is not particularly limited, and includes, for example, pitch coke, needle coke and petroleum coke. The calcinated substance of the organic polymeric compound is also not particularly limited, and includes one carbonized by calcinating a polymeric material at appropriate temperature, such as a phenolic resin and a furan resin.

The negative electrode active material containing an element capable of forming an alloy with lithium is not particularly limited, and may be, for example, a single body of a metal or a metalloid, an alloy or a compound, and the one having one type or two or more types of phases thereof at least at a part. The alloy includes the one composed of two or more types of metal elements, as well as the one having at least one metal elements, and at least one metalloid elements. The alloy may also include a non-metal element, as long as showing metallic property as a whole.

The metal element and the metalloid element are not particularly limited, and include, for example, titanium (Ti), tin (Sn), lead (Pb), aluminum (Al), indium (In), silicon (Si), zinc (Zn), antimony (Sb), bismuth (Bi), gallium (Ga), germanium (Ge), arsenic (As), silver (Ag), hafnium (Hf), zirconium (Zr) and yttrium (Y). Among these, the group IV or group XIV metal elements and metalloid elements in the long periodic Table are preferable, and titanium, silicon and tin are particularly preferable.

The silicon alloy may contain the second constituting element other than silicon, for example, tin, magnesium, nickel, copper, iron, cobalt, manganese, zinc, indium, silver, titanium, germanium, bismuth, antimony and chromium.

The titanium compound, the tin compound, and the silicon compound include, for example, the one having oxygen (O) or carbon (C), and may have the above second constituting element in addition to titanium, tin, or silicon.

A material which is capable of intercalating and discharging lithium-ion includes also a lithium-containing compound. As the lithium-containing compound, the same one as exemplified as the positive electrode material can be used.

The negative electrode active material may be used alone, as a single type, or as two or more types in combination.

Number average particle size (primary particle size) of the negative electrode active material is preferably 0.1 µm to 100 µm, and more preferably 1 µm to 10 µm. The number average particle size of the negative electrode active material is measured similarly as in the number average particle size of the positive electrode active material.

### [A production method of a negative electrode]

The negative electrode is obtained as follows. First, a negative electrode mixture, in which a conductive agent, a binder, etc. are added and mixed into the above negative electrode active material, as necessary, is dispersed in a solvent, to prepare paste containing the negative electrode mixture. Next, this paste is coated on a negative electrode collector, dried to form a negative electrode mixture layer. The negative electrode can be prepared by pressurizing it as necessary, and adjusting the thickness.

The negative electrode collector is not particularly limited, and includes, for example, the one constituted with a metal foil, such as a copper foil, a nickel foil, or a stainless steel foil.

### (The conductive agent or the binder used in preparation of the positive electrode and the negative electrode)

In preparation of the positive electrode and the negative electrode, the conductive agent used as necessary is not particularly limited, and includes, carbon black, for example, graphite, acetylene black and Ketjen black, as well as a carbon fiber.

In preparation of the positive electrode and the negative electrode, the binder used as necessary is not particularly limited, and includes, for example, polyvinylidene fluoride (PVDF), polytetrafluoroethylene (PTFE), polyacrylic acid, styrene-butadiene rubber and fluororubber.

### [A separator]

The lithium-ion secondary battery pertaining to present embodiment preferably comprises a separator between the positive electrode and the negative electrode from the standpoint of providing safety such as short circuit prevention of the positive and negative electrodes, shutdown, etc. For example, a known separator to be equipped with in the lithium-ion secondary battery can be used. As the separator, an insulated thin film having large ion permeability, excellent mechanical strength is preferable.

The separator is not particularly limited, and includes, for example, woven fabric, nonwoven fabric, and a microporous film made of a synthetic resin, and among them, the microporous film made of the synthetic resin is preferable. Nonwoven fabric is also not particularly limited, and includes, for example, a porous film made of a heat resistant resin, such as ceramic, polyolefin, polyester, polyamide, liquid crystalline polyester and aramid. The microporous film made of the synthetic resin is also not particularly limited, and includes, for example, a microporous film containing polyethylene or polypropylene, as a main constituent, or a polyolefin-type microporous film, such as a microporous film containing both of polyethylene and polypropylene. The separator may be the one on which one type of the microporous film is layered as one layer, or layered as multiple layers, and two or more types of microporous films may be layered.

### [Composition of the lithium-ion secondary battery]

The lithium-ion secondary battery pertaining to the present embodiment is not particularly limited, and comprises, for example, a layered body, formed with a separator, and a positive electrode and a negative electrode sandwiching the separator from both sides; a positive electrode collector (which is arranged at the exterior side of the positive electrode) and a negative electrode collector (which is arranged at the exterior side of the negative electrode), sandwiching the layered body; and a battery outer casing for accommodating these. The layered body, in which the positive electrode, the separator and the negative electrode are stacked, is immersed in the electrolytic solution pertaining to the present embodiment.

Fig. 1 is a schematic cross-sectional view showing one example of the lithium-ion secondary battery pertaining to the present embodiment. The lithium-ion secondary battery 100 shown in Fig. 1 comprises a separator 110, a positive electrode 120 and a negative electrode 130, which sandwich the separator 110 from both sides, still more, a positive electrode collector 140 (which is arranged at the exterior side of the positive electrode), and a negative electrode collector 150 (which is arranged at the exterior side of the negative electrode), which sandwich the layered body thereof, and a battery outer casing 160, which accommodates these. The layered body, in which the positive electrode 120, the separator 110 and the negative electrode 130 are stacked, is immersed in the electrolytic solution.

### [A production method for the lithium-ion secondary battery]

The lithium-ion secondary battery pertaining to the present embodiment can be prepared by a known method, by using the electrolytic solution, the positive electrode, the negative electrode, and the separator as needed. For example, the lithium-ion secondary battery can be prepared; by winding the positive electrode and the negative electrode in a stacked state by intervening the separator between them to form a layered body with a wound structure; or to form the layered body intervening with the separator between a plurality of positive electrodes and negative electrodes each stacked alternately, and then accommodating the layered body inside a battery case (outer casing), adding the electrolytic solution pertaining to the present embodiment to the case, and sealing the layered body by immersing it into the electrolytic solution.

In immersing the positive electrode, the negative electrode and optionally the separator, into the electrolytic solution, (i) the electrolytic solution containing the non-aqueous solvent, the lithium salt and the addition composition for the electrolytic solution pertaining to the present embodiment may be used, (ii) the addition composition for the electrolytic solution pertaining to the present embodiment may be added to the electrolytic solution not containing the addition composition for the electrolytic solution pertaining to the present embodiment, or (iii) the compound (a) and the compound (b) may be added to the electrolytic solution not containing the addition composition for the electrolytic solution pertaining to the present embodiment, so that the compound (b) attains 1 ppm by mass to 100 % by mass, relative to 100 % by mass of the compound (a).

Shape of the lithium-ion secondary battery pertaining to the present embodiment is not particularly limited and, for example, a cylinder shape, an eclipse shape, a rectangular-cylinder shape, a button shape, a coin shape, a flat shape, a laminate shape, etc., is suitably adopted.

### EXAMPLES

The present invention will be explained in more detail below, using Examples. Analysis methods and evaluation methods used in Examples and Comparative Examples are as follows.

Nuclear magnetic resonance analysis (NMR): Molecular structure analysis using ¹H-NMR and ³¹P-NMR
Measurement apparatus: JNM-GSX400G-type nuclear magnetic resonance apparatus (manufactured by JEOL Ltd.)
Solvent: deuterium-chloroform
Standard substances:
   ¹H-NMR chloroform (7.26 ppm)
   ³¹P-NMR 85 % phosphoric acid (0 ppm)

### Gas chromatography mass spectrometry (GC-MS)

GC apparatus: Agilent 6890 (Agilent Technologies Co., Ltd.)
Capillary column: DB-1 (column length 30 m, inner diameter 0.25 mm, film thickness 0.25 µm) (Agilent Technologies Co., Ltd.)
MS apparatus: Agilent 5973 (Agilent Technologies Co., Ltd.)
Ionization method: Electron ionization method (EI)

### Viscosity

Measurement temperature: 23 °C
Measurement apparatus: Vibration-type viscometer (manufactured by Seconic Corp.)

### (1) Evaluation of battery performance by the lithium-ion secondary battery using a LiNi_{0.5}Mn_{1.5}O₄ positive electrode

### <Synthesis of the positive electrode active material>

Nickel sulfate and manganese sulfate were dissolved into water in an amount to attain a ratio of 1 : 3 as a molar ratio of the transition metal elements, to prepare a nickel-manganese mixed aqueous solution, so as to attain a total of metal ion concentration of 2 mol/L. Next, this nickel-manganese mixed aqueous solution was dropped into a 1650 mL of sodium carbonate aqueous solution with a concentration of 2 mol/L, heated at 70 °C, taking 120 minutes in an addition speed of 12.5 mL/min. During the dropping, air was also blown while bubbling into the aqueous solution in a flow rate of 200 mL/min, under stirring. In this way, a precipitated substance was generated, and the resulting precipitated substance was washed sufficiently with distilled water, and dried to obtain a nickel-manganese compound. The resulting nickel-manganese compound and lithium carbonate, having a particle size of 2 µm, were weighed so as to attain a molar ratio of lithium: nickel: manganese of 1 : 0.5 : 1.5, and subjected to dry-type mixing for 1 hour, and then the resulting mixture was calcinated at 1000 °C, for 5 hours under oxygen atmosphere to obtain the positive electrode active material represented by LiNi_{0.5}Mn_{1.5}O₄.

### <Preparation of a positive electrode sheet>

The positive electrode active material obtained as above, graphite power (produced by TIMCAL Co., Ltd., trade name "KS-6") and acetylene black powder (produced by Denka Co., Ltd., trade name "HS-100"), as conductive agents, and a polyvinylidene fluoride solution (produced by Kureha Corp., trade name "L#7208"), as a binder, were mixed so as to attain a solid content mass ratio of 80 : 5 : 5 : 10. To the resulting mixture, N-methyl-2-pyrrolidone, as a dispersing solvent, was added so as to attain a solid content of 35 % by mass, and by further mixing, a slurry-like solution was prepared. This slurry-like solution was coated onto one side of an aluminum foil having a thickness of 20 µm, and after a solvent was removed by drying, it was rolled by a roll press to obtain a positive electrode sheet.

Using the positive electrode obtained as above, metal Li as a negative electrode, and a solution containing a LiPF₆ salt in an amount of 1 mol/L, in a mixed solvent obtained by mixing ethylene carbonate and ethyl methyl carbonate in a volume ratio of 1 : 2, as an electrolytic solution, a half-cell was prepared, and by discharging under 0.1 C after charging up to 4.85 V under 0.02 C, it was confirmed to be a positive electrode active material having a discharge capacity of 111 mAh/g at a potential of 4.4 V (vs Li/Li⁺) or higher.

### <Preparation of a negative electrode sheet>

Graphite power (produced by Osaka Gas Chemicals Co., Ltd., trade name "OMAC1.2H/SS") and another graphite power (produced by TIMCAL Co., Ltd., trade name "SFG6"), as negative electrode active materials, styrene-butadiene rubber (SBR), as a binder, and an aqueous solution of carboxymethylcellulose were mixed in a solid content mass ratio of 90 : 10 : 1.5 : 1.8. The resulting mixture was added in water as a dispersing solvent, so as to attain a solid content concentration of 45 % by mass, to prepare a slurry-like solution. This slurry-like solution was coated onto one side of a copper foil having a thickness of 18 µm, a solvent was removed by drying, and then it was rolled by a roll press to obtain a negative electrode sheet.

### <Preparation of a battery>

A positive electrode and a negative electrode were obtained by punching out the positive electrode sheet and the negative electrode sheet obtained as above, in a disk-like shape having a diameter of 16 mm. A layered body, where the resulting positive electrode and the negative electrode were stacked at both sides of a separator (a film thickness of 25 µm, porosity of 50 %, a pore size 0.1 µm to 1 µm), composed of a polypropylene microporous film, was inserted into a stainless steel disk-type battery case (outer casing). Then 0.2 mL of an electrolytic solution to be described later in Examples and Comparative Examples was added to immerse the layered body into the electrolytic solution, and then the battery case was sealed to prepare the lithium-ion secondary battery.

### <Evaluation of battery performance>

The resulting lithium-ion secondary battery was accommodated in a thermostat chamber (manufactured by Futaba Co., Ltd., trade name, "PLM-73S") set at 25 °C, which was connected to a charge-discharge apparatus (manufactured by Aska Electronic Co., Ltd., trade name, "ACD-01") and stood still for 20 hours. The battery was charged under a constant current of 0.2 C till attaining 4.9 V, and still more charged under a constant voltage of 4.9 V for 3 hours, and then discharged down to 3.0 V, under a constant current of 0.2 C, which charge-discharge cycle was repeated three times to carry out initial charge-discharge of the battery. In addition, 1 C is current value in discharging the entire capacity of the battery in 1 hour.

### (4.9 V discharge capacity retention ratio)

After the initial charge-discharge, the battery was charged under a constant current of 1.0 C till attaining 4.9 V, and still more charged under a constant voltage of 4.9 V for 2 hours, then discharged down to 3.0 V under a constant current of x C (here, x is 1/3 and 5), in a thermostat chamber set at 25 °C, to measure discharge capacity at x C. Ratio of discharge capacity under 5 C, relative to discharge capacity under 1/3 C was calculated as 4.9 V discharge capacity retention ratio.

### (4.9 V cycle capacity retention ratio)

After the initial charge-discharge, the battery was charged under a constant current of 1.0 C till attaining 4.9 V, and still more charged under a constant voltage of 4.9 V for 2 hours, then discharged down to 3.0 V under a constant current of 1.0 C, in a thermostat chamber set at 50 °C. This series of charge-discharge was used as 1 cycle, and 79 charge-discharge cycles were repeated still more, resulting in 80 charge-discharge cycles in total. Discharge capacity per mass of the positive electrode active material was confirmed for 1 cycle and 80 cycles. By dividing discharge capacity at 80 cycles with discharge capacity at 1 cycle, 4.9 V cycle capacity retention ratio (80 cy) was calculated.

### (2) Evaluation of battery performance by the lithium-ion secondary battery using a LiNi_{1/3}Mn_{1/3}Co_{1/3}O₂ positive electrode

### <Preparation of a positive electrode sheet>

Lithium-nickel-manganese-cobalt mixed oxide (LiNi_{1/3}Mn_{1/3}Co_{1/3}O₂) having a number average particle size of 11 µm, as the positive electrode active material, graphite carbon power having a number average particle size of 6.5 µm and acetylene black powder having a number average particle size of 48 nm, as conductive agents, and PVDF, as a binder, were mixed so as to attain a mass ratio of mixed oxide: graphite carbon power: acetylene black powder: PVDF = 100 : 4.2 : 1.8 : 4.6. To the resulting mixture, N-methyl-2-pyrrolidone was added, and was mixed further, so as to attain a solid content of 68 % by mass, to prepare a slurry-like solution. This slurry-like solution was coated onto one side of an aluminum foil having a thickness of 20 µm, a solvent was removed by drying, and then it was rolled by a roll press to obtain a positive electrode sheet.

### <Preparation of a negative electrode sheet>

Graphite carbon power (I) with a number average particle size of 12.7 µm and graphite carbon powder (II) with a number average particle size of 6.5 µm, as negative electrode active materials, and carboxymethylcellulose solution (solid content concentration 1.83 % by mass) and diene-type rubber (glass transition temperature: -5 °C, number average particle size in a dry state: 120 nm, dispersing medium: water, solid content concentration: 40 % by mass), as binders, were mixed so as to attain a solid content mass ratio of graphite carbon power (I): graphite carbon powder (II): carboxymethylcellulose solution: diene-type rubber = 90 : 10 : 1.44 : 1.76, and a total solid content concentration of 45 % by mass, to prepare a slurry-like solution.
This slurry-like solution was coated onto one side of a copper foil having a thickness of 10 µm, a solvent was removed by drying, and then it was rolled by a roll press to obtain a negative electrode sheet.

### <Preparation of a battery>

A positive electrode and a negative electrode were obtained by punching out the positive electrode sheet and the negative electrode sheet obtained as above, in a disk-like shape having a diameter of 16 mm. A layered body, where the resulting positive electrode and the negative electrode were stacked at both sides of a separator (a film thickness of 25 µm, porosity of 50 %, a pore size of 0.1 µm to 1 µm), composed of a polypropylene microporous film, was inserted into a stainless steel disk-type battery case (outer casing). Then 0.2 mL of the electrolytic solution to be described later in Examples and Comparative Examples was added to the battery case, so as to immerse the layered body into the electrolytic solution, and then the battery case was sealed to prepare the lithium-ion secondary battery.

### <Evaluation of battery performance>

The resulting lithium-ion secondary battery was accommodated in a thermostat chamber (manufactured by Futaba Co., Ltd., trade name, "PLM-73S") set at 25 °C, which was connected to a charge-discharge apparatus (manufactured by Aska Electronic Co., Ltd., trade name, "ACD-01") and stood still for 20 hours. Next, the battery was charged under a constant current of 0.2 C till attaining 4.2 V, and still more charged under a constant voltage of 4.2 V for 3 hours, and then discharged down to 3.0 V, under a constant current of 0.2 C, which charge-discharge cycle was repeated three times to carry out initial charge-discharge of the battery.

After the initial charge-discharge, the battery was charged under a constant current of 1.0 C till attaining 4.2 V, and still more charged under a constant voltage of 4.2 V for 2 hours, then discharged down to 3.0 V under a constant current of x C (here, x is 1/3 and 5), in a thermostat chamber set at 25 °C, to measure discharge capacity at x C. Ratio of discharge capacity under 5 C, relative to discharge capacity under 1/3 C was calculated as 4.2 V discharge capacity retention ratio.

### (3) Evaluation of gas generation of the lithium-ion secondary battery using a LiNi_{0.5}Mn_{1.5}O₄ positive electrode

A positive electrode and a negative electrode were obtained by punching out, in a square shape, the positive electrode sheet and the negative electrode sheet obtained similarly as above (1). A sheet-like lithium-ion secondary battery was prepared by charging the electrolytic solution described in the following Example and Comparative Examples into a 0.5 mL bag, and vacuum sealing, after inserting the layered body, where the resulting positive electrode and negative electrode were stacked at both side of a separator (a film thickness of 25 µm, porosity of 50 %, and pore size of 0.1 µm to 1 µm), into a bag made of a laminated film, prepared by coating both sides of an aluminum foil (a thickness of 40 µm) with a resin layer, while protruding the terminals of the positive electrode and the negative electrode.

The resulting sheet-like lithium-ion secondary battery was accommodated in a thermostat chamber (manufactured by Futaba Co., Ltd., trade name, "PLM-73S") set at 25 °C, which was connected to a charge-discharge apparatus (manufactured by Aska Electronic Co., Ltd., trade name, "ACD-01") and stood still for 20 hours. Then the battery was charged under a constant current of 0.2 C till attaining 4.9 V, and then still more charged under a constant voltage of 4.9 V for 8 hours, and still more discharged down to 3.0 V, under a constant current of 0.2 C, which charge-discharge cycle was repeated three times to carry out initial charge-discharge of the battery.

After the initial charge-discharge, the battery was immersed in a water bath to measure volume thereof, then it was charged under a constant current of 1.0 C till attaining 4.9 V, and then continuously charged under a constant voltage of 4.9 V for 9 days, and discharged down to 3.0 V under a constant current of 1.0 C, under an environment of 50 °C. After cooling the battery to room temperature, the battery was immersed in the water bath to measure volume thereof, to determine gas generation amount (mL) after battery operation, from volume change of the battery before and after continuous charging.

### [Example 1, according to the invention]

A mixture of ammonium dihydrogen phosphate (4.0 g) and 1,1,1,3,3,3-hexamethyldisilazane (16.8 g) was heated at 100 °C for 8 hours under nitrogen atmosphere. The resulting reaction mixture was distilled under reduced pressure (0.23 kPa) to obtain colorless liquid (10.2 g). Using ¹H-NMR, ³¹P-NMR, GC-MS, and gas chromatograph, the resulting liquid was found to be a composition (P-1) containing:
300 ppm by mass of trimethylsilanol;
400 ppm by mass of 1,1,1,3,3,3-hexamethyldisiloxane; and
29500 ppm by mass of 1,1,1,3,3,3-hexamethyldisilazane;
relative to 100 % by mass of tris(trimethylsilyl) phosphate.

Composition ratio of each component in the composition (P-1) was determined using the gas chromatograph. Analysis result of each component is as follows:
tris(trimethylsilyl) phosphate:
   ¹H-NMR 0.57 ppm (s, 9H)
   ³¹P-NMR -24.30 ppm
   GC-MS (EI) 314 (M⁺)
trimethylsilanol: GC-MS(EI)90(M⁺);
1,1,1,3,3,3-hexamethyldisiloxane: GC-MS (EI) 147 (M⁺-CH₃);
1,1,1,3,3,3-hexamethyldisilazane: GC-MS(EI)161(M⁺).

Measurement result of viscosity of the composition (P-1) at 23 °C was 2.8 mPa·s.

### [Example 2]

A mixture of ammonium dihydrogen phosphate (40 g) and 1,1,1,3,3,3-hexamethyldisilazane (168 g) was heated at 100 °C for 8 hours under nitrogen atmosphere. The resulting reaction mixture was distilled under reduced pressure (0.12 kPa) to obtain colorless liquid (91 g). Using GC-MS and gas chromatograph, the resulting liquid was found to be a composition (P-2) containing:
500 ppm by mass of trimethylsilanol; and
400 ppm by mass of 1,1,1,3,3,3-hexamethyldisiloxane;
relative to 100 % by mass of tris(trimethylsilyl) phosphate.

Measurement result of viscosity (at 23 °C) of the composition (P-2) was 3.3 mPa·s.

### [Example 3, according to the invention]

Acetonitrile (50 ml) and trimethylchlorosilane (27.2 g) were added to sodium phosphate (8.20 g), and heated at 60 °C for 4 hours. The resulting reaction mixture was filtrated, and the solvent was removed under reduced pressure, followed by distillation under reduced pressure (0.23 kPa) to obtain colorless liquid (6.45 g). From the gas chromatograph, the resulting liquid was found to be a composition (P-3) containing:
400 ppm by mass of trimethylsilanol;
600 ppm by mass of 1,1,1,3,3,3-hexamethyldisiloxane; and
5000 ppm by mass of trimethylchlorosilane;
relative to 100 % by mass of tris(trimethylsilyl) phosphate.

Measurement result of viscosity (at 23 °C) of the composition (P-3) was 3.1 mPa·s.

### [Example 4]

Trimethylchlorosilane (0.06 g) was added to tris(trimethylsilyl) phosphate (9.95 g, produced by Tokyo Chemical Industry Co., Ltd.), to obtain a composition (P-4). Content of trimethylchlorosilane in the composition (P-4) was 6000 ppm by mass, relative to 100 % by mass of tris(trimethylsilyl) phosphate. Measurement result of viscosity (at 23 °C) of the composition (P-4) was 3.1 mPa·s.

### [Example 5]

Triethylchlorosilane (0.1 g) was added to tris(trimethylsilyl) phosphate (9.9 g, produced by Tokyo Chemical Industry Co., Ltd.) to obtain a composition (P-5). Content of triethylchlorosilane in the composition (P-5) was 10000 ppm by mass, relative to 100 % by mass of tris(trimethylsilyl) phosphate. Measurement result of viscosity (at 23 °C) of the composition (P-5) was 3.0 mPa·s.

### [Example 6]

Trimethylsilyl trifluoromethanesulfonate (0.13 g) was added to tris(trimethylsilyl) phosphate (9.87 g, produced by Tokyo Chemical Industry Co., Ltd.) to obtain a composition (P-6). Content of trimethylsilyl trifluoromethanesulfonate in the composition (P-6) was 13000 ppm by mass, relative to 100 % by mass of tris(trimethylsilyl) phosphate. Measurement result of viscosity (at 23 °C) of the composition (P-6) was 2.9 mPa·s.

### [Example 7]

Dimethoxydimethylsilane (0.065 g) was added to tris(trimethylsilyl) phosphate (9.935 g, produced by Tokyo Chemical Industry Co., Ltd.) to obtain a composition (P-7). Content of dimethoxydimethylsilane in the composition (P-7) was 6500 ppm by mass, relative to 100 % by mass of tris(trimethylsilyl) phosphate. Measurement result of viscosity (at 23 °C) of the composition (P-7) was 3.1 mPa·s.

### [Example 8]

N,O-bis(trimethylsilyl)acetamide (0.1 g) was added to tris(trimethylsilyl) phosphate (9.9 g, produced by Tokyo Chemical Industry Co., Ltd.) to obtain a composition (P-8). Content of N,O-bis(trimethylsilyl)acetamide in the composition (P-8) was 10000 ppm by mass, relative to 100 % by mass of tris(trimethylsilyl) phosphate. Measurement result of viscosity (at 23 °C) of the composition (P-8) was 3.0 mPa·s.

### [Example 9]

N,O-bis(trimethylsilyl)trifluoroacetamide (0.13 g) was added to tris(trimethylsilyl) phosphate (9.87 g, produced by Tokyo Chemical Industry Co., Ltd.) to obtain a composition (P-9). Content of N,O-bis(trimethylsilyl)trifluoroacetamide in the composition (P-9) was 13000 ppm by mass, relative to 100 % by mass of tris(trimethylsilyl) phosphate. Measurement result of viscosity (at 23 °C) of the composition (P-9) was 2.9 mPa·s.

### [Example 10]

1,1,1,3,3,3-hexamethyldisilazane (0.05 g) was added to tris(trimethylsilyl) phosphate (9.95 g, produced by Tokyo Chemical Industry Co., Ltd.), to obtain a composition (P-10). Content of 1,1,1,3,3,3-hexamethyldisilazane in the composition (P-10) was 5000 ppm by mass, relative to 100 % by mass of tris(trimethylsilyl) phosphate. Measurement result of viscosity (at 23 °C) of the composition (P-10) was 3.1 mPa·s.

### [Example 11]

1,1,1,3,3,3-hexamethlyldisiloxane (0.1 g) was added to tris(trimethylsilyl) phosphite (9.9 g, produced by Sigma Aldrich Co., Ltd.), to obtain a composition (P-11). Content of 1,1,1,3,3,3-hexamethlyldisiloxane in the composition (P-11) was 10000 ppm by mass, relative to 100 % by mass of tris(trimethylsilyl) phosphite. Measurement result of viscosity (at 23 °C) of the composition (P-11) was 1.1 mPa·s.

### [Example 12]

1,1,1,3,3,3-hexamethlyldisiloxane (0.5 g) was added to trimethylsilyl polyphosphate (9.5 g, produced by Sigma Aldrich Co., Ltd.), to obtain a composition (P-12). Content of 1,1,1,3,3,3-hexamethlyldisiloxane in the composition (P-12) was 50000 ppm by mass, relative to 100 % by mass of trimethylsilyl polyphosphate. Measurement result of viscosity (at 23 °C) of the composition (P-12) was 550 mPa·s.

### [Comparative Example 1]

Measurement result of viscosity at 23 °C of tris(trimethylsilyl) phosphate (produced by Tokyo Chemical Industry Co., Ltd.), using a vibration-type viscometer, was 3.4 mPa·s.

### [Comparative Example 2]

Measurement result of viscosity at 23 °C of tris(trimethylsilyl) phosphite (produced by Sigma Aldrich Co., Ltd.), using a vibration-type viscometer, was 1.3 mPa·s.

### [Comparative Example 3]

Measurement result of viscosity at 23 °C of trimethylsilyl polyphosphate (produced by Sigma Aldrich Co., Ltd.), using a vibration-type viscometer, was 600 mPa·s.

Results of Examples 1 to 12 and Comparative Examples 1 to 3 are shown in Table 1. From Table 1, it has been understood that the compositions (P-1) to (p-12) have low viscosity.

### [Table 1]

**Table-1**

| | Composition | Compound (a) | Compound (b) | Comp. (b) based on 100 % by mass of comp. (a) (ppm by mass) | Viscosity (mPa·s) |
|---|---|---|---|---|---|
| Example 1 | P-1 | tris(trimethylsilyl)phosphate | trimethylsilanol | 300 | 2.8 |
| | | | 1,1,1,3,3,3-hexamethyldisiloxane | 400 | |
| | | | 1,1,1,3,3,3-hexamethyldisilazane | 29500 | |
| Example 2 | P-2 | tris(trimethylsilyl)phosphate | trimethylsilanol | 500 | 3.3 |
| | | | 1,1,1,3,3,3-hexamethyldisiloxane | 400 | |
| Example 3 | P-3 | tris(trimethylsilyl)phosphate | trimethylsilanol | 400 | 3.1 |
| | | | 1,1,1,3,3,3-hexamethyldisiloxane | 600 | |
| | | | trimethylchlorosilane | 5000 | |
| Example 4 | P-4 | tris(trimethylsilyl)phosphate | trimethylchlorosilane | 6000 | 3.1 |
| Example 5 | P-5 | tris(trimethylsilyl)phosphate | triethylchlorosilane | 10000 | 3.0 |
| Example 6 | P-6 | tris(trimethylsilyl)phosphate | trimethylsilyl trifluoromethane sulfonate | 13000 | 2.9 |
| Example 7 | P-7 | tris(trimethylsilyl)phosphate | dimethoxydimethylsilane | 6500 | 3.1 |
| Example 8 | P-8 | tris(trimethylsilyl)phosphate | N,O-bis(trimethylsilyl)acetamide | 10000 | 3.0 |
| Example 9 | P-9 | tris(trimethylsilyl)phosphate | N,O-bis(trimethylsilyl)trifluoroacetamide | 13000 | 2.9 |
| Example 10 | P-10 | tris(trimethylsilyl)phosphate | 1,1,1,3,3,3-hexamethyldisilazane | 5000 | 3.1 |
| Example 11 | P-11 | tris(trimethylsilyl)phosphite | 1,1,1,3,3,3-hexamethyldisiloxane | 10000 | 1.1 |
| Example 12 | P-12 | trimethylsilyl polyphosphate | 1,1,1,3,3,3-hexamethyldisiloxane | 50000 | 550 |
| Comparative Example 1 | - | tris(trimethylsilyl)phosphate | None | - | 3.4 |
| Comparative Example 2 | - | tris(trimethylsilyl)phosphite | None | - | 1.3 |
| Comparative Example 3 | - | trimethylsilyl polyphosphate | None | - | 600 |

### [Example 13]

0.10 g of the composition (P-1) of Example 1 was added to 9.90 g of a solution (LGB00069, produced by Kishida Chemical Co., Ltd.) which contains 1 mol/L of LiPF₆, as a lithium salt, in a mixed solvent of ethylene carbonate and ethyl methyl carbonate, in a volume ratio of 1 : 2, to prepare an electrolytic solution (D-1). A sheet-like lithium-ion secondary battery was prepared using the electrolytic solution (D-1), in accordance with the method (1) and/or (2) to carry out evaluation of battery performance.

### [Examples 14 to 24]

Electrolytic solutions (D-2) to (D-12) were obtained by similar operation as in Example 13, except for using the compositions (P-2) to (P-12), instead of the composition (P-1). A sheet-like lithium-ion secondary battery was prepared using each of the electrolytic solutions (D-2) to (D-12), in accordance with the method (1) and/or (2) to carry out evaluation of battery performance.

### [Comparative Example 4]

0.10 g of tris(trimethylsilyl) phosphate described in Comparative Example 1 was added to 9.90 g of a solution (LGB00069, produced by Kishida Chemical Co., Ltd.) which contains 1 mol/L of LiPF₆, as a lithium salt, in a mixed solvent of ethylene carbonate and ethyl methyl carbonate, in a volume ratio of 1 : 2, to prepare an electrolytic solution (C-1). A sheet-like lithium-ion secondary battery was prepared using the electrolytic solution (C-1), in accordance with the method (1) and/or (2) to carry out evaluation of battery performance.

### [Comparative Example 5]

An electrolytic solution (C-2) was obtained by similar operation as in Comparative Example 4, except for using tris(trimethylsilyl) phosphite described in Comparative Example 2, instead of tris(trimethylsilyl) phosphate. A sheet-like lithium-ion secondary battery was prepared using the electrolytic solution (C-2), in accordance with the method (1) and/or (2) to carry out evaluation of battery performance.

### [Comparative Example 6]

An electrolytic solution (C-3) was obtained by similar operation as in Comparative Example 4, except for using trimethylsilyl polyphosphate described in Comparative Example 3, instead of tris(trimethylsilyl) phosphate. A sheet-like lithium-ion secondary battery was prepared using the electrolytic solution (C-3), in accordance with the method (1) and/or (2) to carry out evaluation of battery performance.

Evaluation results of battery performance of Examples 13 to 24 and Comparative Examples 4 to 6 are shown in Table 2. From Table 2, it has been understood that the electrolytic solutions for the non-aqueous storage battery device, obtained in Examples 13 to 24, have high discharge capacity retention ratio.

### [Table 2]

**Table-2**

| | Electrolytic solution | composition | 4.9 V discharge capacity retention ratio (%) | 4.2 V discharge capacity retention ratio (%) |
|---|---|---|---|---|
| Example 13 | D-1 | P-1 | 92 | 93 |
| Example 14 | D-2 | P-2 | 86 | 88 |
| Example 15 | D-3 | P-3 | 90 | 91 |
| Example 16 | D-4 | P-4 | 90 | 91 |
| Example 17 | D-5 | P-5 | 89 | 90 |
| Example 18 | D-6 | P-6 | 89 | 90 |
| Example 19 | D-7 | P-7 | 89 | 90 |
| Example 20 | D-8 | P-8 | 89 | 90 |
| Example 21 | D-9 | P-9 | 91 | 92 |
| Example 22 | D-10 | P-10 | 91 | 92 |
| Example 23 | D-11 | P-11 | 92 | 92 |
| Example 24 | D-12 | P-12 | 92 | 92 |
| Comparative Example 4 | C-1 | Comparative Example 1 | 81 | 82 |
| Comparative Example 5 | C-2 | Comparative Example 2 | 80 | 81 |
| Comparative Example 6 | C-3 | Comparative Example 3 | 81 | 83 |

### [Example 25]

0.10 g of tris(trimethylsilyl) phosphate, as the compound (a), and 0.005 g of heptamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-13). Content of the compound (a) was 1 % by mass and content of the compound (b) was 500 ppm by mass, in the electrolytic solution (D-13).

The electrolytic solution (D-13) was put into a stainless steel (SUS) container, sealed, and stored in a thermostat chamber at 25 °C to obtain an electrolytic solution after storage for 2 weeks (D_{2w}-13), and an electrolytic solution after storage for 6 weeks (D_{6w}-13). As for the compound (a) contained in the resulting electrolytic solution (D_{2w}-13) and electrolytic solution (D_{6w}-13), residual ratio of the compound (a) was calculated using ³¹P-NMR measurement (an internal standard: trimethyl phosphate). As a result, residual ratios of the compound (a) after 2 weeks and after 6 weeks were both 97 %.

### [Example 26]

An electrolytic solution (D-14) was obtained by similar operation as in Example 25, except for using 1,1,1,3,3,3-hexamethyldisilazane, instead of heptamethyldisilazane as the compound (b). It was confirmed next, by similar operation as in Example 25, except for using the electrolytic solution (D-14), instead of the electrolytic solution (D-13), that residual ratios of the compound (a) after 2 weeks and after 6 weeks were 92 % and 91 %, respectively.

### [Example 27]

An electrolytic solution (D-15) was obtained by similar operation as in Example 25, except for using 1,1,3,3,5,5-hexamethylcyclotrisilazane, instead of heptamethyldisilazane as the compound (b). It was confirmed next, by similar operation as in Example 25, except for using the electrolytic solution (D-15), instead of the electrolytic solution (D-13), that residual ratios of the compound (a) after 2 weeks and after 6 weeks were 96 % and 85 %, respectively.

### [Example 28]

An electrolytic solution (D-16) was obtained by similar operation as in Example 25, except for using N-(trimethyl)dimethylamine, instead of heptamethyldisilazane as the compound (b). It was confirmed next, by similar operation as in Example 25, except for using the electrolytic solution (D-16), instead of the electrolytic solution (D-13), that residual ratios of the compound (a) after 2 weeks and after 6 weeks were 95 % and 94 %, respectively.

### [Example 29]

An electrolytic solution (D-17) was obtained by similar operation as in Example 25, except for using triethylamine, instead of heptamethyldisilazane as the compound (b). It was confirmed next, by similar operation as in Example 25, except for using the electrolytic solution (D-17), instead of the electrolytic solution (D-13), that residual ratios of the compound (a) after 2 weeks and after 6 weeks were both 89 %.

### [Example 30]

An electrolytic solution (D-18) was obtained by similar operation as in Example 25, except for using ethylenediamine, instead of heptamethyldisilazane as the compound (b). It was confirmed next, by similar operation as in Example 25, except for using the electrolytic solution (D-18), instead of the electrolytic solution (D-13), that residual ratios of the compound (a) after 2 weeks and after 6 weeks were both 87 %.

### [Example 31]

An electrolytic solution (D-19) was obtained by similar operation as in Example 25, except for using N,N,N',N'-tetramethlyethylenediamine, instead of heptamethyldisilazane as the compound (b). It was confirmed next, by similar operation as in Example 25, except for using the electrolytic solution (D-19), instead of the electrolytic solution (D-13), that residual ratios of the compound (a) after 2 weeks and after 6 weeks were 86 % and 85 %, respectively.

### [Example 32]

An electrolytic solution (D-20) was obtained by similar operation as in Example 25, except for using octamethylcyclotetrasilazane, instead of heptamethyldisilazane as the compound (b). It was confirmed next, by similar operation as in Example 25, except for using the electrolytic solution (D-20), instead of the electrolytic solution (D-13), that residual ratios of the compound (a) after 2 weeks and after 6 weeks were 84 % and 83 %, respectively.

### [Example 33]

An electrolytic solution (D-21) was obtained by similar operation as in Example 25, except for using methyl tris(dimethylamino)silane, instead of heptamethyldisilazane as the compound (b). It was confirmed next, by similar operation as in Example 25, except for using the electrolytic solution (D-21), instead of the electrolytic solution (D-13), that residual ratios of the compound (a) after 2 weeks and after 6 weeks were 81 % and 75 %, respectively.

### [Example 34]

An electrolytic solution (D-22) was obtained by similar operation as in Example 25, except for using N,O-bis(trimethylsilyl)acetamide, instead of heptamethyldisilazane as the compound (b). It was confirmed next, by similar operation as in Example 25, except for using the electrolytic solution (D-22), instead of the electrolytic solution (D-13), that residual ratios of the compound (a) after 2 weeks and after 6 weeks were 76 % and 57 %, respectively.

### [Comparative Example 7]

An electrolytic solution (C-4) was obtained by similar operation as in Example 25, except for not using heptamethyldisilazane as the compound (b). It was confirmed next, by similar operation as in Example 25, except for using the electrolytic solution (C-4), instead of the electrolytic solution (D-13), that residual ratios of the compound (a) after 2 weeks and after 6 weeks were 74 % and 24 %, respectively.

Results of Examples 25 to 34 and Comparative Example 7 are shown in Table 3. From Table 3, it has been shown that, in the electrolytic solution containing the compound (a), co-presence of the compound (b) contributes to increase residual ratio of the compound (a) in the electrolytic solution, and thus good storage stability.

### [Table 3]

**Table-3**

| | Electrolytic Solution | Compound (a) | Compound (b) | Residual ratio of compound (a) after storage for 2 weeks, at 25 °C (%) | Residual ratio of compound (a) after storage for 6 weeks, at 25 °C (%) |
|---|---|---|---|---|---|
| Example. 25 | D-13 | tris(trimethylsilyl)phosphate 1 % by mass | heptamethyldisilazane 500 ppm by mass | 97 | 97 |
| Example. 26 | D-14 | tris(trimethylsilyl)phosphate 1 % by mass | 1,1,1,3,3,3-hexamethyldisilazane 500 ppm by mass | 92 | 91 |
| Example. 27 | D-15 | tris(trimethylsilyl)phosphate 1 % by mass | 1,1,3,3,5,5-hexamethylcyclotrisilazane 500 ppm by mass | 96 | 85 |
| Example. 28 | D-16 | tris(trimethylsilyl)phosphate 1 % by mass | N-(trimethylsilyl)dimethylamine 500 ppm by mass | 95 | 94 |
| Example. 29 | D-17 | tris(trimethylsilyl)phosphate 1 % by mass | triethylamine 500 ppm by mass | 89 | 89 |
| Example. 30 | D-18 | tris(trimethylsilyl)phosphate 1 % by mass | ethylenediamine 500 ppm by mass | 87 | 87 |
| Example. 31 | D-19 | tris(trimethylsilyl)phosphate 1 % by mass | N,N,N',N'-tetramethylethylenediamine 500 ppm by mass | 86 | 85 |
| Example. 32 | D-20 | tris(trimethylsilyl)phosphate 1 % by mass | octamethylcyclotetrasilazane 500 ppm by mass | 84 | 83 |
| Example. 33 | D-21 | tris(trimethylsilyl)phosphate 1 % by mass | methyltris(dimethylamino)silane 500 ppm by mass | 81 | 75 |
| Example. 34 | D-22 | tris(trimethylsilyl)phosphate 1 % by mass | N,O-bis(trimethylsilyl)acetamide 500 ppm by mass | 76 | 57 |
| Comparative Example.7 | C-4 | tris(trimethylsilyl)phosphate 1 % by mass | None | 74 | 24 |

### [Example 35]

The electrolytic solution (D-13) prepared in Example 25 was put into a SUS container, sealed, and stored in a thermostat chamber at 45 °C for 1 week to obtain an electrolytic solution (D'-13). As for the compound (a) contained in the electrolytic solution (D'-13), residual ratio of the compound (a) was measured using ³¹P-NMR measurement (an internal standard: trimethyl phosphate). As a result, residual ratio of the compound (a) was 100 %.

A lithium-ion secondary battery was prepared using the electrolytic solution (D'-13) by the method (1) to carry out evaluation of battery performance. As a result, the lithium-ion secondary battery provided with the electrolytic solution (D'-13) showed a discharge capacity at 1 cycle of 121 mAh/g, a discharge capacity at 80 cycles of 92 mAh/g, and a 4.9 V cycle capacity retention ratio (80 cy) of 76 %.

### [Example 36]

Just after preparation of the electrolytic solution (D-13) in Example 25, a lithium-ion secondary battery was prepared using the electrolytic solution (D-13) by the method (1) to carry out evaluation of battery performance. As a result, discharge capacity at 1 cycle was 121 mAh/g, discharge capacity at 80 cycles was 91 mAh/g, and 4.9 V cycle capacity retention ratio (80 cy) was 75 %.

### [Comparative Example 8]

The electrolytic solution (C-4) prepared in Comparative Example 7 was put into a SUS container, sealed, and stored in a thermostat chamber at 45 °C for 1 week to obtain an electrolytic solution (C'-4). The compound (a) contained in the electrolytic solution (C'-4) was measured using ³¹P-NMR (an internal standard: trimethyl phosphate). As a result, a residual ratio of the compound (a) was 0 %.

A lithium-ion secondary battery was prepared using the electrolytic solution (C'-4) by the method (1) to carry out evaluation of battery performance. As a result, the lithium-ion secondary battery provided with the electrolytic solution (C'-4) showed a discharge capacity at 1 cycle of 114 mAh/g, a discharge capacity at 80 cycles of 73 mAh/g, and a 4.9 V cycle capacity retention ratio (80 cy) of 64 %.

### [Comparative Example 9]

Just after preparation of the electrolytic solution (C-4) in Comparative Experiment 7, a lithium-ion secondary battery was prepared using the electrolytic solution (C-4) by the method (1) to carry out evaluation of battery performance. As a result, discharge capacity at 1 cycle was 121 mAh/g, discharge capacity at 80 cycles was 91 mAh/g, and 4.9 V cycle capacity retention ratio (80 cy) was 75 %.

Evaluation results of Examples 35 to 36 and Comparative Examples 8 to 9 are shown in Table 4. From Table 4, it has been understood that, the electrolytic solution containing the compound (b) in the compound (a) provides good storage stability of the compound (a) in the electrolytic solution, as well as maintains battery performance.

### [Table 4]

**Table-4**

| | Electrolytic solution | Compound (a) | Compound (b) | Storage for 1 week, at 45 °C | Residual ratio of compound (a) after storage for 1 weeks, at 45 °C (%) | Battery Evaluation | | |
|---|---|---|---|---|---|---|---|---|
| | | | | | | 1 cy Dischage capacity (mAh/g) | 80 cy Dischage capacity (mAh/g) | 80 cy Cycle capacity retention ratio (%) |
| Example. 35 | D-13 | tris(trimethylsilyl) phosphate 1 % by mass | Heptamethyl disilazane 500 ppm by mass | Done [electrolytic solution (D'-13)] | 100 | 121 | 92 | 76 |
| Example. 36 | D-13 | tris(trimethylsilyl)phosphate 1 % by mass | Heptamethyl 500 disilazane mass ppm by | Not done | - | 121 | 91 | 75 |
| Comparative. Example.8 | C-4 | tris(trimethylsilyl)phosphate 1 % by mass | None | Done [electrolytic solution (C'-4)] | 0 | 114 | 73 | 64 |
| Comparative. Example.9 | C-4 | tris(trimethylsilyl)phosphate 1 % by mass | None | Not done | - | 121 | 91 | 75 |

### [Example 37]

0.05 g of tris(trimethylsilyl) phosphate, as the compound (a), and 0.003 g of 1,1,1,3,3,3-hexamethyldisilazane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-23). Content of tris(trimethylsilyl) phosphate, 1,1,1,3,3,3-hexamethyldisilazane, and LiPF₆, in the electrolytic solution (D-23), was 0.5 % by mass, 300 ppm by mass, and 13 % by mass, respectively.

A lithium-ion secondary battery was prepared using the electrolytic solution (D-23), in accordance with the method (1) to carry out evaluation of battery performance. As a result, the lithium-ion secondary battery provided with the electrolytic solution (D-23) showed a discharge capacity at 1 cycle of 118 mAh/g, a discharge capacity at 80 cycles of 86 mAh/g, and a 4.9 V cycle capacity retention ratio (80 cy) of 73 %. After charging the lithium-ion secondary battery of the present Example up to 4.9 V, it was disassembled in an Ar glove box to take out the positive electrode, and assembled again using metal lithium as an opposing electrode to measure potential of the positive electrode. As a result, it was found to be 4.95 V (vs Li/Li⁺).

A sheet-like lithium-ion secondary battery was prepared using the electrolytic solution (D-23) in accordance with the method (3) to carry out gas generation evaluation. As a result, it has been shown that gas generation amount after battery operation was 2.04 mL.

### [Example 38]

0.10 g of tris(trimethylsilyl) phosphate, as the compound (a), and 0.005 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-24). Battery evaluation was carried out similarly as in Example 37, except for using the electrolytic solution (D-24) instead of the electrolytic solution (D-23).

### [Example 39]

0.20 g of tris(trimethylsilyl) phosphate, as the compound (a), and 0.005 g of 1,1,1,3,3,3-hexamethyldisilazane, as the compound (b), were added to 9.80 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-25). Battery evaluation was carried out similarly as in Example 37, except for using the electrolytic solution (D-25) instead of the electrolytic solution (D-23).

### [Example 40]

0.05 g of tris(trimethylsilyl) phosphate, as the compound (a), and 0.05 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-26). Battery evaluation was carried out similarly as in Example 37, except for using the electrolytic solution (D-26) instead of the electrolytic solution (D-23).

### [Example 41]

0.05 g of tris(trimethylsilyl) phosphate, as the compound (a), and 0.001 g of 1,1,1,3,3,3-hexamethyldisilazane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-27). Battery evaluation was carried out similarly as in Example 37, except for using the electrolytic solution (D-27) instead of the electrolytic solution (D-23).

### [Example 42]

0.05 g of tris(trimethylsilyl) phosphate, as the compound (a), and 0.003 g of triethylamine, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-28). Battery evaluation was carried out similarly as in Example 37, except for using the electrolytic solution (D-28) instead of the electrolytic solution (D-23).

### [Example 43]

0.05 g of tris(trimethylsilyl) phosphate, as the compound (a), and 0.003 g of tris(dimethylamino)silane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-29). Battery evaluation was carried out similarly as in Example 37, except for using the electrolytic solution (D-29) instead of the electrolytic solution (D-23).

### [Example 44]

0.05 g of tris(trimethylsilyl) phosphate, as the compound (a), and 0.003 g of heptamethyldisilazane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-30). Battery evaluation was carried out similarly as in Example 37, except for using the electrolytic solution (D-30) instead of the electrolytic solution (D-23).

### [Example 45]

0.05 g of tris(trimethylsilyl) phosphate, as the compound (a), and 0.003 g of 1,1,3,3,5,5-hexamethylcyclotrisilazane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-31). Battery evaluation was carried out similarly as in Example 37, except for using the electrolytic solution (D-31) instead of the electrolytic solution (D-23).

### [Example 46]

Under nitrogen atmosphere, 10.9 g of trimethylchlorosilane was gradually added to 3.3 g of potassium pyrophosphate and stirred at 60 °C for 8 hours. Under nitrogen atmosphere, a solid component was removed by filtration, and volatile components were removed under reduced pressure to obtain 2.3 g of tetrakis(trimethylsilyl) pyrophosphate (P₂O₇(Si(CH₃)₃)₄), and identified using ³¹P-NMR and ¹H-NMR. tetrakis(trimethylsilyl) pyrophosphate:
³¹P-NMR -30 ppm (s)
¹H-NMR 1.54 ppm (s)

0.10 g of tetrakis(trimethylsilyl) pyrophosphate, obtained above as the compound (a), and 0.003 g of 1,1,1,3,3,3-hexamethyldisilazane, as the compound (b),

were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-32). Battery evaluation was carried out similarly as in Example 37, except for using the electrolytic solution (D-32) instead of the electrolytic solution (D-23).

### [Example 47]

0.10 g of trimethylsilyl polyphosphate (produced by Sigma Aldrich Co., Ltd.), as the compound (a), and 0.003 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-33). Battery evaluation was carried out similarly as in Example 37, except for using the electrolytic solution (D-33) instead of the electrolytic solution (D-23).

### [Example 48]

0.10 g of tris(trimethylsilyl) phosphite, (P(OSi(CH₃)₃)₃, produced by Sigma Aldrich Co., Ltd.), as the compound (a), and 0.003 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-34). Battery evaluation was carried out similarly as in Example 37, except for using the electrolytic solution (D-34) instead of the electrolytic solution (D-23).

### [Example 49]

0.10 g of bis(trimethylsilyl) adipate ((CH₃)₃SiO₂C(CH₂)₄CO₂Si(CH₃)₃, produced by Gelest Inc. , Ltd.), as the compound (a), and 0.003 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-35). Battery evaluation was carried out similarly as in Example 37, except for using the electrolytic solution (D-35) instead of the electrolytic solution (D-23).

### [Example 50]

0.10 g of tris(trimethylsilyl) borate (B(OSi(CH₃)₃)₃, produced by Sigma Aldrich Co., Ltd.), as the compound (a), and 0.003 g of 1,1,1,3,3,3-hexamethyldisilazane, as the compound (b), were added to 9.90 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-36). Battery evaluation was carried out similarly as in Example 37, except for using the electrolytic solution (D-36) instead of the electrolytic solution (D-23).

### [Example 51]

0.05 g of tris(trimethylsilyl) phosphate, as the compound (a), 0.003 g of 1,1,1,3,3,3-hexamethyldisilazane, as the compound (b), and 0.01 g of lithium difluoro phosphate, as another additive, were added to 9.94 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-37). Battery evaluation was carried out similarly as in Example 37, except for using the electrolytic solution (D-37) instead of the electrolytic solution (D-23).

### [Example 52]

0.05 g of tris(trimethylsilyl) phosphate, as the compound (a), and 0.003 g of octamethylcyclotetrasilazane, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-38). Battery evaluation was carried out similarly as in Example 37, except for using the electrolytic solution (D-38) instead of the electrolytic solution (D-23).

### [Example 53]

0.05 g of tris(trimethylsilyl) phosphate, as the compound (a), and 0.003 g of N,N,N',N'-tetramethylethylenediamine, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-39). Battery evaluation was carried out similarly as in Example 37, except for using the electrolytic solution (D-39) instead of the electrolytic solution (D-23).

### [Example 54]

0.05 g of tris(trimethylsilyl) phosphate, as the compound (a), and 0.003 g of N,N-dimethylacetamide, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-40). Battery evaluation was carried out similarly as in Example 37, except for using the electrolytic solution (D-40) instead of the electrolytic solution (D-23).

### [Example 55]

0.05 g of tris(trimethylsilyl) phosphate, as the compound (a), and 0.003 g of potassium tert-butoxide, as the compound (b), were added to 9.95 g of a solution which contains 1 mol/L of LiPF₆, as a lithium salt, in a mixed solvent of ethylene carbonate and ethyl methyl carbonate, in a volume ratio of 1 : 2, to prepare an electrolytic solution (D-41). Battery evaluation was carried out similarly as in Example 37, except for using the electrolytic solution (D-41) instead of the electrolytic solution (D-23).

### [Comparative Example 10]

A solution which contains 1 mol/L of LiPF₆, in a mixed solvent of ethylene carbonate and ethyl methyl carbonate, in a volume ratio of 1 : 2, was used as an electrolytic solution (C-5). Content of LiPF₆ in the electrolytic solution (C-5) was 13 % by mass.

Battery performance of the lithium-ion secondary battery provided with the electrolytic solution (C-5) was carried out, according to the method (1), similarly as in Example 37. As a result, discharge capacity at 1 cycle was 106 mAh/g, discharge capacity at 80 cycles was 61 mAh/g, and 4.9 V cycle capacity retention ratio (80 cy) was 58 %. Evaluation of gas generation was also carried out, according to the method (2), and gas generation amount after battery operation was 4.73 mL.

### [Comparative Example 11]

Battery evaluation was carried out similarly as in Example 37, except for not using 1,1,1,3,3,3-hexamethyldisilazane, as the compound (b).

### [Comparative Example 12]

Battery evaluation was carried out similarly as in Example 37, except for using 10.00 g of a solution which contains 1 mol/L of LiPF₆, as a lithium salt, in a mixed solvent of ethylene carbonate and ethyl methyl carbonate, in a volume ratio of 1 : 2, and not using tris(trimethylsilyl) phosphate, as the compound (a).

### [Comparative Example 13]

Battery evaluation was carried out similarly as in Example 37, except for using 8.95 g of a solution which contains 1 mol/L of LiPF₆, as a lithium salt, in a mixed solvent of ethylene carbonate and ethyl methyl carbonate, in a volume ratio of 1 : 2, and using 1.00 g of 1,1,1,3,3,3-hexamethyldisilazane, as the compound (b).

Results of Examples 37 to 55 and Comparative Examples 10 to 13 are shown in Table 5. It has been understood that combined use of the compound (a) and the compound (b) contributes to good cycle performance and good effect of suppressing gas generation, even in the lithium-ion secondary battery using a positive electrode operating under 4.95 V (vs Li/Li⁺).

### [Table 5]

**Table 5**

| | Electrolytic solution | Lithium salt | Content of Compound (a) in electrolytic solution | Content of Compound (b) in electrolytic solution | Other additive | Battery Evaluation | | | Evaluation of gas generation |
|---|---|---|---|---|---|---|---|---|---|
| | | | | | | 1 cy Discharge capacity (mAh/g) | 80 cy Discharge capacity (mAh/g) | 80 cy Cycle capacity retention ratio (%) | Amount of gas generation (mL) |
| Ex. 37 | D-23 | LiPF₆ 13 % by mass | tris(trimethylsilyl)phosphate 0.5 % by mass | 1,1,1,3,3,3-hexamethyl disilazane 300 ppm by mass | None | 118 | 86 | 73 | 2.04 |
| Ex. 38 | D-24 | LiPF₆ 13 % by mass | tris(trimethylsilyl)phosphate 1.0 % by mass | 1,1,1,3,3,3-hexamethyl disilazane 500 ppm by mass | None | 118 | 91 | 77 | 1.68 |
| Ex. 39 | D-25 | LiPF₆ 13 % by mass | tris(trimethylsilyl)phosphate 2.0 % by mass | 1,1,1,3,3,3-hexamethyl disilazane 500 ppm by mass | None | 117 | 92 | 79 | 1.46 |
| Ex. 40 | D-26 | LiPF₆ 13 % by mass | tris(trimethylsilyl)phosphate 0.5 % by mass | 1,1,1,3,3,3-hexamethyl disilazane 0.5 % by mass | None | 117 | 83 | 71 | 2.25 |
| Ex. 41 | D-27 | LiPF₆ 13 % by mass | tris(trimethylsilyl)phosphate 0.5 % by mass | 1,1,1,3,3,3-hexamethyl disilazane 100 ppm by mass | None | 118 | 86 | 73 | 2.05 |
| Ex. 42 | D-28 | LiPF₆ 13 % by mass | tris(trimethylsilyl)phosphate 0.5 % by mass | triethylamine 300 ppm by mass | None | 113 | 78 | 69 | 2.35 |
| Ex. 43 | D-29 | LiPF₆ 13 % by mass | tris(trimethylsilyl)phosphate 0.5 % by mass | tris(dimethylamino) silane 300 ppm by mass | None | 114 | 79 | 69 | 2.31 |
| Ex. 44 | D-30 | LiPF₆ 13 % by mass | tris(trimethylsilyl)phosphate 0.5 % by mass | heptamethyl disilazane 300 ppm by mass | None | 116 | 81 | 70 | 2.16 |
| Ex. 45 | D-31 | LiPF₆ 13 % by mass | tris(trimethylsilyl)phosphate 0.5 % by mass | 1,1,3,3,5,5-hexamethyl cyclotrisilazane 300 ppm by mass | None | 117 | 82 | 70 | 2.19 |
| Ex. 46 | D-32 | LiPF₆ 13 % by mass | tetrakis(trimethylsilyl)pyrophosphate 1.0 % by mass | 1,1,1,3,3,3-hexamethyl disilazane 300 ppm by mass | None | 114 | 80 | 70 | 2.75 |
| Ex. 47 | D-33 | LiPF₆ 13 % by mass | trimethylsilyl polyphosphate 1.0 % by mass | 1,1,1,3,3,3-hexamethyl disilazane 300 ppm by mass | None | 110 | 79 | 72 | 2.23 |
| Ex. 48 | D-34 | LiPF₆ 13 % by mass | tris(trimethylsilyl)phosphite 1.0 % by mass | 1,1,1,3,3,3-hexamethyl disilazane 300 ppm by mass | None | 113 | 81 | 72 | 2.44 |
| Ex. 49 | D-35 | LiPF₆ 13 % by mass | bis(trimethylsilyl)adipate 1.0 % by mass | 1,1,1,3,3,3-hexamethyl disilazane 300 ppm by mass | None | 113 | 80 | 71 | 2.97 |
| Ex. 50 | D-36 | LiPF₆ 13 % by mass | tris(trimethylsilyl)borate 1.0 % by mass | 1,1,1,3,3,3-hexamethyl disilazane 300 ppm by mass | None | 112 | 78 | 70 | 2.93 |
| Ex. 51 | D-37 | LiPF₆ 13 % by mass | tris(trimethylsilyl)phosphate 0.5 % by mass | 1,1,1,3,3,3-hexamethyl disilazane 300 ppm by mass | lithium difluorophosphate 0.1 % by mass | 111 | 78 | 70 | 1.89 |
| Ex. 52 | D-38 | LiPF₆ 13 % by mass | tris(trimethylsilyl)phosphate 0.5 % by mass | octamethylcyclotetrasilazane 300 ppm by mass | None | 117 | 82 | 70 | 2.18 |
| Ex. 53 | D-39 | LiPF₆ 13 % by mass | tris(trimethylsilyl)phosphate 0.5 % by mass | N,N,N',N'-tetramethyl ethylenediamine 300 ppm by mass | None | 114 | 78 | 68 | 2.34 |
| Ex. 54 | D-40 | LiPF₆ 13 % by mass | tris(trimethylsilyl)phosphate 0.5 % by mass | N,N-dimethylacetamide 300 ppm by mass | None | 113 | 75 | 66 | 2.55 |
| Ex. 55 | D-41 | LiPF₆ 13 % by mass | tris(trimethylsilyl)phosphate 0.5 % by mass | potassium tert-butoxide 300 ppm by mass | None | 113 | 76 | 67 | 2.51 |
| Com. Ex. 10 | C-5 | LiPF₆ 13 % by mass | None | None | None | 106 | 61 | 58 | 4.73 |
| Com. Ex. 11 | C-6 | LiPF₆ 13 % by mass | tris(trimethylsilyl)phosphate 0.5 % by mass | None | None | 116 | 83 | 72 | 2.06 |
| Com. Ex. 12 | C-7 | LiPF₆ 13 % by ,mass | None | 1,1,1, 3,3, 3-hexamethyl disilazane 300 ppm by mass | None | 109 | 63 | 58 | 4.76 |
| Com. Ex. 13 | C-8 | LiPF₆ 13 % by mass | tris(trimethylsilyl)phosphate 0.5 % by mass | 1,1,1,3,3,3-hexamethyl disilazane 10 % by mass | None | 103 | 62 | 60 | 3.85 |

### REFERENCE SIGNS LIST

- 100: lithium-ion secondary battery
- 110: separator
- 120: positive electrode
- 130: negative electrode
- 140: positive electrode collector
- 150: negative electrode collector
- 160: battery outer casing

## Claims

1. Use of a composition consisting of:
(a) a silyl group-containing compound (A), wherein at least one hydrogen atom of an acid selected from the group consisting of a protonic acid having phosphorus atom and/or boron atom, a sulfonic acid, and a carboxylic acid is substituted with a silyl group represented by following general formula (Al): 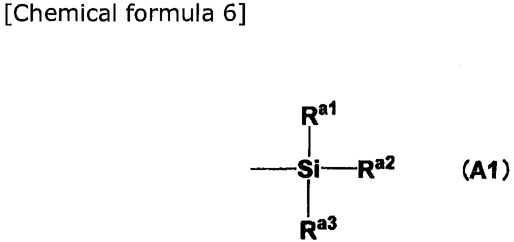 wherein, R^{a1}, R^{a2}, and R^{a3} each independently represent a hydrocarbon group having 1 to 20 carbon atoms, which may be substituted; and
(b) at least one basic compound (B) selected from the group consisting of Lewis base and a compound represented by general formula Q⁺Y⁻ wherein, Q⁺ represents a quaternary ammonium group, a quaternary phosphonium group, an alkali metal, or an alkaline earth metal, and Y⁻ represents an alkoxy group, or an aryloxy group, and at least one silicon compound (C) represented by following general formula (C): 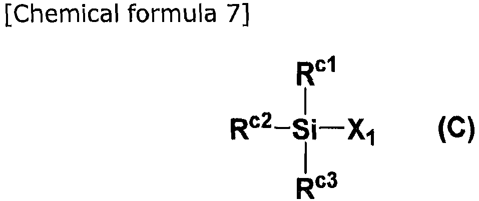
wherein R^{c1}, R^{c2}, and R^{c3} each independently represent a hydrocarbon group having 1 to 20 carbon atoms, which may be substituted, or an alkoxy group having 1 to 20 carbon atoms, which may be substituted, and X₁ is a group represented by general formula OR¹, wherein R¹ represents a hydrogen atom, a hydrocarbon group having 1 to 20 carbon atoms, which may be substituted, a silyl group having 1 to 20 carbon atoms, SO₂CH₃, or SO₂CF₃, or a halogen atom;
as an additive for an electrolytic solution,
wherein the composition consists of 0.1 % by mass or more and 10 % by mass or less of the basic compound (B) and the silicon compound (C), relative to 100 % by mass of the silyl group-containing compound (A).

2. The use according to claim 1, wherein the silyl group-containing compound (A) comprises at least one selected from the group consisting the compounds represented by general formulae (A2) to (A4): 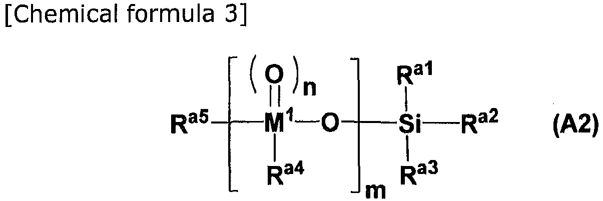 wherein M¹ is a phosphorus atom or a boron atom, m is an integer of 1 to 20, n is 0 or 1 when M¹ is a phosphorus atom, n is 0 when M¹ is a boron atom, R^{a1}, R^{a2}, and R^{a3} are as defined in general formula (A1), and R^{a4} and R^{a5} each independently represent a group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, 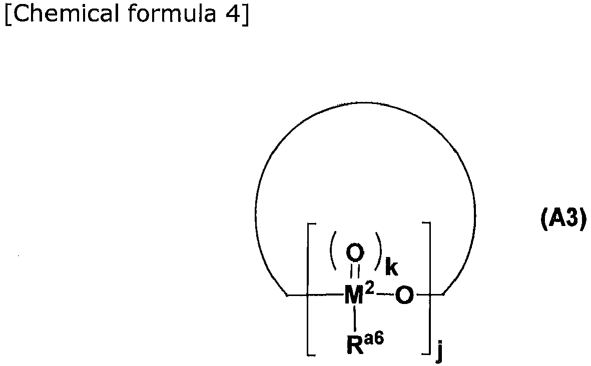 wherein M² is a phosphorus atom or a boron atom, j is an integer of 2 to 20, k is 0 or 1 when M² is a phosphorus atom, k is 0 when M² is a boron atom, and R^{a6} represents a group selected from the group consisting of an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, and a group represented by general formula OP(O)ₗ(R^{a7}R^{a8}), wherein l is 0 or 1, R^{a7} and R^{a8} each independently represent an OH group, an OLi group, a hydrocarbon group having 1 to 20 carbon atoms, which may be substituted, an alkoxy group having 1 to 20 carbon atoms, which may be substituted, and a siloxy group having 1 to 20 carbon atoms, 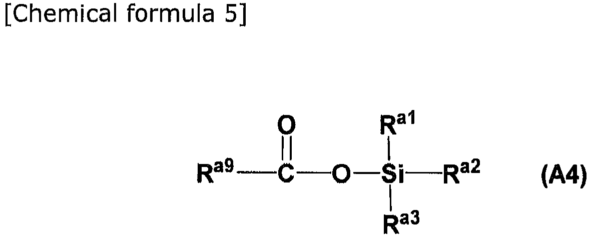 wherein R^{a1}, R^{a2}, and R^{a3} are as defined in general formula (A1), and R^{a9} represents a hydrocarbon group having 1 to 20 carbon atoms, which may be substituted.

3. The use according to claim 1 or 2, wherein the Lewis base is a nitrogen-containing organic Lewis base.

4. The use according to any one of claims 1 to 3, wherein the basic compound (B) is a compound having an Si-N bond.

5. The use according to any one of claims 1 to 4 as an additive for an electrolytic solution of a non-aqueous storage device.

6. The use according to any one of claims 1 to 5, wherein the non-aqueous storage device is a lithium-ion secondary battery.

7. The use according to claim 5, wherein the non-aqueous storage device comprises a non-aqueous solvent and a lithium salt.

8. The use according to claim 7, wherein the lithium salt is at least one selected from the group consisting of LiPF₆, LiBF₄, LiClO₄, LiAsF₆, Li₂SiF₆, LiOSO₂CₖF₂ₖ₊₁, wherein k is an integer of 0 to 8, LiN(SO₂CₖF₂ₖ₊₁)₂, wherein k is an integer of 0 to 8, and LiPFₙ(CₖF₂ₖ₊₁)₆₋ₙ, wherein n is an integer of 1 to 5, and k is an integer of 1 to 8.

9. The use according to claim 7 or 8, further comprising at least one lithium salt is selected from the group consisting of lithium difluorophosphate and lithium monofluorophosphate.

10. The use according to claim 7 to 9, wherein the non-aqueous solvent comprises a cyclic carbonate and/or a linear carbonate.

11. The use according to claim 6, wherein the lithium-ion secondary battery comprises a positive electrode containing a positive electrode active material and a negative electrode containing a negative electrode active material.

12. The use according to claim 11, wherein the positive electrode active material has a discharge capacity of 10 mAh/g or more at a potential of 4.1 V (vs Li/Li⁺) or more.

13. The use according to claim 12, wherein the positive electrode active material is at least one selected from the group consisting of:
an oxide represented by following formula (E1):
LiMn₂₋ₓMaₓO₄ (E1)
wherein Ma represents at least one selected from the group consisting of transition metals, and x is a number within the range of 0.2≤x≤0.7;
an oxide represented by following formula (E2):
LiMn₁₋ᵤMeᵤO₂ (E2)
wherein Me represents at least one selected from the group consisting of transition metals, except for Mn, and u is a number within the range of 0.1≤u≤0.9;
a composite oxide represented by following formula (E3):
zLi₂McO₃-(1-z)LiMdO₂ (E3)
wherein Mc and Md each independently represent at least one selected from the group consisting of transition metals, and z is a number within the range of 0.1≤z≤0.9;
a compound represented by following formula (E4):
LiMb_{1-y}Fe_{y}PO₄ (E4)
wherein Mb represents at least one selected from the group consisting of Mn and Co, and y is a number within the range of 0≤y≤0.9; and
a compound represented by following formula (E5):
Li₂MfPO₄F (E5)
wherein Mf represents at least one selected from the group consisting of transition metals.

14. The use according to any one of claims 11 to 13, wherein positive electrode potential based on lithium is 4.1 V (vs Li/Li⁺) or more, when the battery is fully charged.

## Patentansprüche

1. Verwendung einer Zusammensetzung, bestehend aus:
(a) einer silylgruppenhaltigen Verbindung (A), wobei wenigstens ein Wasserstoffatom einer Säure, die aus der Gruppe ausgewählt ist, die aus einer Protonensäure mit einem Phosphoratom und/oder einem Boratom, einer Sulfonsäure und einer Carbonsäure besteht, durch eine Silylgruppe ersetzt ist, die durch die folgende allgemeine Formel (A1) dargestellt wird: 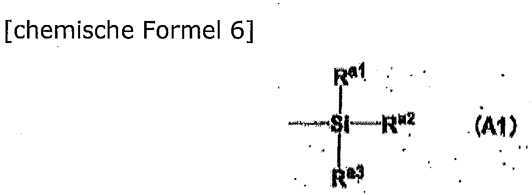 wobei R^{a1}, R^{a2} und R^{a3} jeweils unabhängig für eine Kohlenwasserstoffgruppe mit 1 bis 20 Kohlenstoffatomen stehen, die substituiert sein kann; und
(b) wenigstens einer basischen Verbindung (B), die aus der Gruppe ausgewählt ist, die aus einer Lewis-Base und einer Verbindung, die durch die allgemeine Formel Q⁺Y⁻ dargestellt wird, besteht, wobei Q⁺ für eine quartäre Ammoniumgruppe, eine quartäre Phosphoniumgruppe, ein Alkalimetall oder ein Erdalkalimetall steht und Y⁻ für eine Alkoxygruppe oder eine Aryloxygruppe steht, und wenigstens einer Siliciumverbindung (C), die durch die folgende allgemeine Formel (C) dargestellt wird: 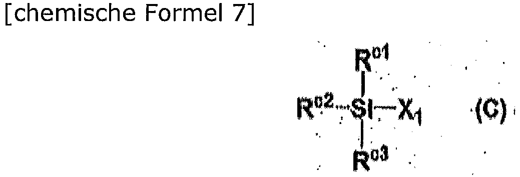
wobei R^{c1}, R^{c2} und R^{c3} jeweils unabhängig für eine Kohlenwasserstoffgruppe mit 1 bis 20 Kohlenstoffatomen, die substituiert sein kann, oder eine Alkoxygruppe mit 1 bis 20 Kohlenstoffatomen, die substituiert sein kann, stehen und X₁ eine Gruppe ist, die durch die allgemeine Formel OR¹ dargestellt wird, wobei R¹ für ein Wasserstoffatom, eine Kohlenwasserstoffgruppe mit 1 bis 20 Kohlenstoffatomen, die substituiert sein kann, eine Silylgruppe mit 1 bis 20 Kohlenstoffatomen, SO₂CH₃ oder SO₂CF₃ oder ein Halogenatom stehen kann;
als Additiv für eine Elektrolytlösung, wobei die Zusammensetzung aus 0,1 Massen-% oder mehr und 10 Massen-% oder weniger der basischen Verbindung (B) und der Siliciumverbindung (C) besteht, bezogen auf 100 Massen-% der silylgruppenhaltigen Verbindung (A).

2. Verwendung gemäß Anspruch 1, wobei die silylgruppenhaltige Verbindung (A) wenigstens eine umfasst, die aus der Gruppe ausgewählt ist, die aus den durch die allgemeinen Formeln (A2) bis (A4) dargestellten Verbindungen besteht: 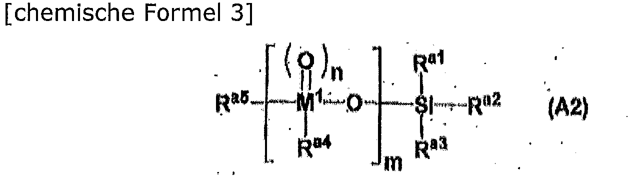 wobei M¹ ein Phosphoratom oder ein Boratom ist, m eine ganze Zahl von 1 bis 20 ist, n = 0 oder 1 ist, wenn M¹ ein Phosphoratom ist, n = 0 ist, wenn M¹ ein Boratom ist, R^{a1}, R^{a2} und R^{a3} wie in der allgemeinen Formel (A1) definiert sind und R^{a4} und R^{a5} jeweils unabhängig für eine Gruppe stehen, die aus der Gruppe ausgewählt ist, die aus einer OH-Gruppe, einer OLi-Gruppe, einer Kohlenwasserstoffgruppe mit 1 bis 20 Kohlenstoffatomen, die substituiert sein kann, einer Alkoxygruppe mit 1 bis 20 Kohlenstoffatomen, die substituiert sein kann, und einer Siloxygruppe mit 1 bis 20 Kohlenstoffatomen besteht; 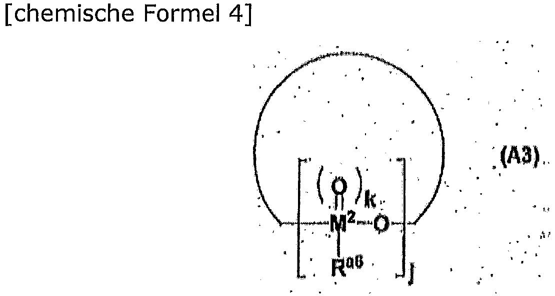 wobei M² ein Phosphoratom oder ein Boratom ist, j eine ganze Zahl von 2 bis 20 ist, k = 0 oder 1 ist, wenn M² ein Phosphoratom ist, k = 0 ist, wenn M² ein Boratom ist, und R^{a6} für eine Gruppe, die aus der Gruppe ausgewählt ist, die aus einer OH-Gruppe, einer OLi-Gruppe, einer Kohlenwasserstoffgruppe mit 1 bis 20 Kohlenstoffatomen, die substituiert sein kann, einer Alkoxygruppe mit 1 bis 20 Kohlenstoffatomen, die substituiert sein kann, und einer Siloxygruppe mit 1 bis 20 Kohlenstoffatomen besteht, und eine durch die allgemeine Formel OP(O)ₗ(R^{a7}R^{a8}) dargestellte Gruppe steht, wobei l = 0 oder 1 ist, R^{a7} und R^{a8} jeweils unabhängig für eine OH-Gruppe, eine OLi-Gruppe, eine Kohlenwasserstoffgruppe mit 1 bis 20 Kohlenstoffatomen, die substituiert sein kann, eine Alkoxygruppe mit 1 bis 20 Kohlenstoffatomen, die substituiert sein kann, und eine Siloxygruppe mit 1 bis 20 Kohlenstoffatomen stehen; 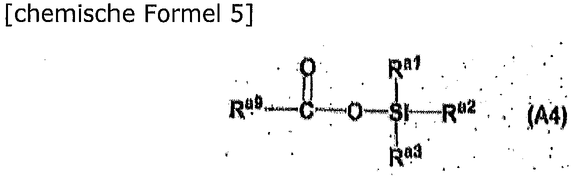 wobei R^{a1}, R^{a2} und R^{a3} wie in der allgemeinen Formel (A1) definiert sind und R^{a9} für eine Kohlenwasserstoffgruppe mit 1 bis 20 Kohlenstoffatomen, die substituiert sein kann, steht.

3. Verwendung gemäß Anspruch 1 oder 2, wobei die Lewis-Base eine stickstoffhaltige organische Lewis-Base ist.

4. Verwendung gemäß einem der Ansprüche 1 bis 3, wobei die basische Verbindung (B) eine Verbindung mit einer Si-N-Bindung ist.

5. Verwendung gemäß einem der Ansprüche 1 bis 4 als Additiv für eine Elektrolytlösung eines nichtwässrigen Speichergeräts.

6. Verwendung gemäß einem der Ansprüche 1 bis 5, wobei das nichtwässrige Speichergerät ein Lithiumionenakkumulator ist.

7. Verwendung gemäß Anspruch 5, wobei das nichtwässrige Speichergerät ein nichtwässriges Lösungsmittel und ein Lithiumsalz umfasst.

8. Verwendung gemäß Anspruch 7, wobei das Lithiumsalz wenigstens eines ist, das aus der Gruppe ausgewählt ist, die aus LiPF₆, LiBF₄, LiClO₄, LiAsF₆, Li₂SiF₆, LiOSO₂CₖF₂ₖ₊₁, wobei k eine ganze Zahl von 0 bis 8 ist, LiN(SO₂CₖF₂ₖ₊₁)₂, wobei k eine ganze Zahl von 0 bis 8 ist, und LiPFₙ(CₖF₂ₖ₊₁)₆₋ₙ, wobei n eine ganze Zahl von 1 bis 5 ist und k eine ganze Zahl von 1 bis 8 ist, besteht.

9. Verwendung gemäß Anspruch 7 oder 8, weiterhin umfassend wenigstens ein Lithiumsalz, das aus der Gruppe ausgewählt ist, die aus Lithiumdifluorophosphat und Lithiummonofluorophosphat besteht.

10. Verwendung gemäß Anspruch 7 bis 9, wobei das nichtwässrige Lösungsmittel einen cyclischen Kohlensäureester und/oder einen linearen Kohlensäureester umfasst.

11. Verwendung gemäß Anspruch 6, wobei der Lithiumionenakkumulator eine positive Elektrode, die ein aktives Material der positiven Elektrode enthält, und eine negative Elektrode, die ein aktives Material der negativen Elektrode enthält, umfasst.

12. Verwendung gemäß Anspruch 11, wobei das aktive Material der positiven Elektrode eine Entladungskapazität von 10 mAh/g oder mehr bei einem Potential von 4,1 V (vs. Li/Li⁺) oder mehr aufweist.

13. Verwendung gemäß Anspruch 12, wobei das aktive Material der positiven Elektrode wenigstens eines ist, das aus der Gruppe ausgewählt ist, die aus folgenden besteht:
einem Oxid, das durch die folgende Formel (E1) dargestellt wird:
LiMn₂₋ₓMaₓO₄ (E1);
wobei Ma für wenigstens eines steht, das aus der Gruppe ausgewählt ist, die aus Übergangsmetallen besteht, und x eine Zahl im Bereich von 0,2 ≤ x ≤ 0,7 ist;
einem Oxid, das durch die folgende Formel (E2) dargestellt wird:
LiMn₁₋ᵤMeᵤO₂ (E2);
wobei Me für wenigstens eines steht, das aus der Gruppe ausgewählt ist, die aus Übergangsmetallen außer Mn besteht, und u eine Zahl im Bereich von 0,1 ≤ u ≤ 0,9 ist;
einem Verbundoxid, das durch die folgende Formel (E3) dargestellt wird:
zLi₂McO₃/(1-z)LiMdO₂ (E3);
wobei Mc und Md jeweils unabhängig für wenigstens eines stehen, das aus der Gruppe ausgewählt ist, die aus Übergangsmetallen besteht, und z eine Zahl im Bereich von 0,1 ≤ z ≤ 0,9 ist;
einer Verbindung, die durch die folgende Formel (E4) dargestellt wird:
LiMb_{1-y}Fe_{y}PO₄ (E4);
wobei Mb für wenigstens eines steht, das aus der Gruppe ausgewählt ist, die aus Mn und Co besteht, und y eine Zahl im Bereich von 0 ≤ y ≤ 0,9 ist; und
einer Verbindung, die durch die folgende Formel (E5) dargestellt wird:
LizMfPO₄F (E5);
wobei Mf für wenigstens eines steht, das aus der Gruppe ausgewählt ist, die aus Übergangsmetallen besteht.

14. Verwendung gemäß einem der Ansprüche 11 bis 13, wobei das Potential der positiven Elektrode auf der Basis von Lithium 4,1 V (vs. Li/Li⁺) oder mehr beträgt, wenn die Batterie voll aufgeladen ist.

## Revendications

1. Utilisation d'une composition consistant en :
(a) un composé (A) contenant un groupe silyle, dans lequel au moins un atome d'hydrogène d'un acide choisi dans le groupe consistant en un acide protonique ayant un atome de phosphore et/ou un atome de bore, un acide sulfonique et un acide carboxylique, est substitué par un groupe silyle représenté par la formule générale (A1) ci-après : 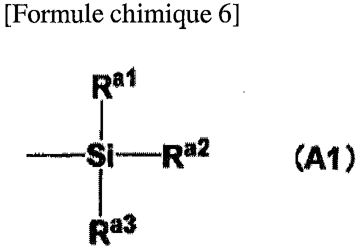 dans laquelle R^{a1}, R^{a2} et R^{a3} représentent chacun indépendamment des autres un groupe hydrocarboné ayant 1 à 20 atomes de carbone, qui peut être substitué ; et
(b) au moins un composé basique (B) choisi dans le groupe consistant en une base de Lewis et un composé représenté par la formule générale Q⁺Y⁻ dans laquelle Q⁺ représente un groupe ammonium quaternaire, un groupe phosphonium quaternaire, un métal alcalin ou un métal alcalino-terreux, et Y⁻ représente un groupe alcoxy ou un groupe aryloxy, et au moins un composé du silicium (C) représenté par la formule générale (C) ci-après : 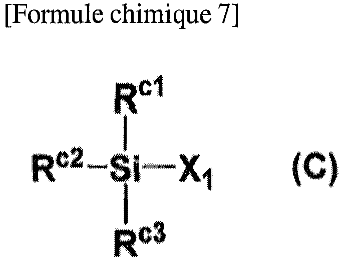
dans laquelle R^{c1}, R^{c2} et R^{c3} représentent chacun indépendamment des autres un groupe hydrocarboné ayant 1 à 20 atomes de carbone, qui peut être substitué, ou un groupe alcoxy ayant 1 à 20 atomes de carbone, qui peut être substitué, et X₁ est un groupe représenté par la formule générale OR¹ dans laquelle R¹ représente un atome d'hydrogène, un groupe hydrocarboné ayant 1 à 20 atomes de carbone, qui peut être substitué, un groupe silyle ayant 1 à 20 atomes de carbone, SO₂CH₃ ou SO₂CF₃, ou un atome d'halogène ;
en tant qu'additif pour une solution électrolytique,
pour laquelle la composition consiste en 0,1 % en masse ou plus et 10 % en masse ou moins du composé basique (B) et du composé du silicium (C), pour 100 % en masse du composé (A) contenant un groupe silyle.

2. Utilisation selon la revendication 1, pour laquelle le composé (A) contenant un groupe silyle comprend au moins un composé choisi dans le groupe consistant en les composés représentés par les formules générales (A2) à (A4) : 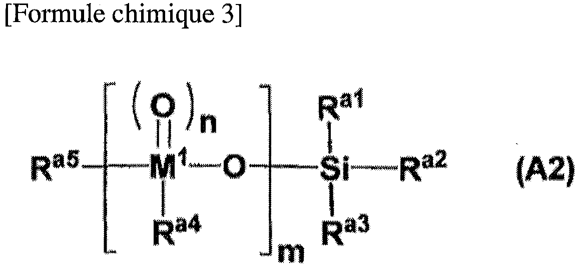 dans laquelle M¹ est un atome de phosphore ou un atome de bore, m est un entier de 1 à 20, n vaut 0 ou 1 quand M¹ est un atome de phosphore, n vaut 0 quand M¹ est un atome de bore, R^{a1}, R^{a2} et R^{a3} sont tels que définis dans la formule générale (A1) et R^{a4} et R^{a5} représentent chacun indépendamment de l'autre un groupe choisi dans le groupe consistant en un groupe OH, un groupe OLi, un groupe hydrocarboné ayant 1 à 20 atomes de carbone, qui peut être substitué, un groupe alcoxy ayant 1 à 20 atomes de carbone, qui peut être substitué, et un groupe siloxy ayant 1 à 20 atomes de carbone, 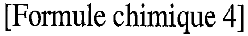 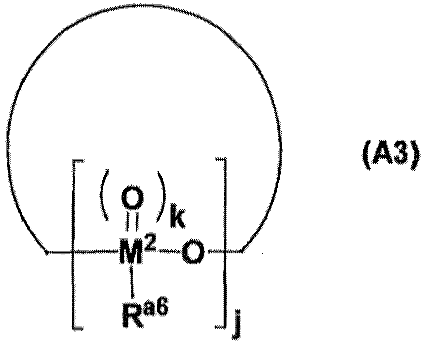 dans laquelle M² est un atome de phosphore ou un atome de bore, j est un entier de 2 à 20, k vaut 0 ou 1 quand M² est un atome de phosphore, k vaut 0 quand M² est un atome de bore, et R^{a6} représente un groupe choisi dans le groupe consistant en un groupe OH, un groupe OLi, un groupe hydrocarboné ayant 1 à 20 atomes de carbone, qui peut être substitué, un groupe alcoxy ayant 1 à 20 atomes de carbone, qui peut être substitué, et un groupe siloxy ayant 1 à 20 atomes de carbone, et un groupe représenté par la formule générale OP(O)ₗ(R^{a7}R^{a8}), dans laquelle 1 vaut 0 ou 1, R^{a7} et R^{a8} représentent chacun indépendamment de l'autre un groupe OH, un groupe OLi, un groupe hydrocarboné ayant 1 à 20 atomes de carbone, qui peut être substitué, un groupe alcoxy ayant 1 à 20 atomes de carbone, qui peut être substitué, et un groupe siloxy ayant 1 à 20 atomes de carbone, 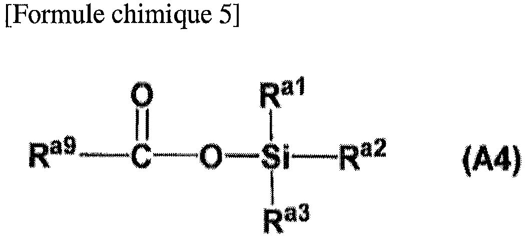 dans laquelle R^{a1}, R^{a2} et R^{a3} sont tels que définis dans la formule générale (A1), et R^{a9} représente un groupe hydrocarboné ayant 1 à 20 atomes de carbone, qui peut être substitué.

3. Utilisation selon la revendication 1 ou 2, pour laquelle la base de Lewis est une base de Lewis organique azotée.

4. Utilisation selon l'une quelconque des revendications 1 à 3, pour laquelle le composé basique (B) est un composé ayant une liaison Si-N.

5. Utilisation selon l'une quelconque des revendications 1 à 4 en tant qu'additif pour une solution électrolytique d'un dispositif de stockage non-aqueux.

6. Utilisation selon l'une quelconque des revendications 1 à 5, pour laquelle le dispositif de stockage non-aqueux est une batterie secondaire lithium-ion.

7. Utilisation selon la revendication 5, pour laquelle le dispositif de stockage non-aqueux comprend un solvant non-aqueux et un sel de lithium.

8. Utilisation selon la revendication 7, pour laquelle le sel de lithium est au moins un sel choisi dans le groupe consistant en LiPF₆, LiBF₄, LiClO₄, LiAsF₆, Li₂SiF₆, LiOSO₂CₖF₂ₖ₊₁, où k est un entier de 0 à 8, LiN(SO₂CₖF₂ₖ₊₁)₂, où k est un entier de 0 à 8, et LiPFₙ(CkF₂ₖ₊₁)₆₋ₙ, où n est un entier de 1 à 5, et k est un entier de 1 à 8.

9. Utilisation selon la revendication 7 ou 8, comprenant en outre au moins un sel de lithium choisi dans le groupe consistant en le difluorophosphate de lithium et le monofluorophosphate de lithium.

10. Utilisation selon les revendications 7 à 9, pour laquelle le solvant non-aqueux comprend un carbonate cyclique et/ou un carbonate linéaire.

11. Utilisation selon la revendication 6, pour laquelle la batterie secondaire lithium-ion comprend une électrode positive comprenant une matière active d'électrode positive et une électrode négative contenant une matière active d'électrode négative.

12. Utilisation selon la revendication 11, pour laquelle la matière active d'électrode positive présente une capacité de décharge de 10 mAh/g ou plus pour un potentiel de 4,1 V (vs Li/Li⁺) ou plus.

13. Utilisation selon la revendication 12, pour laquelle la matière active d'électrode positive est au moins une matière choisie dans le groupe consistant en :
un oxyde représenté par la formule (E1) ci-après :
LiMn₂₋ₓMaₓO₄ (E1)
dans laquelle Ma représente au moins un métal choisi dans le groupe consistant en les métaux de transition, et x est un nombre compris dans la plage 0,2≤x≤0,7 ;
un oxyde représenté par la formule (E2) ci-après :
LiMn₁₋ᵤMeᵤO₂ (E2)
dans laquelle Me représente au moins un métal choisi dans le groupe consistant en les métaux de transition, à l'exception de Mn, et u est un nombre compris dans la plage 0,1≤u≤0,9 ;
un oxyde composite représenté par la formule (E3) ci-après :
zLi₂McO₃-(1-z)LiMdO₂ (E3)
dans laquelle Mc et Md représentent chacun indépendamment de l'autre au moins un métal choisi dans le groupe consistant en les métaux de transition, et z est un nombre compris dans la plage 0,1≤z≤0,9 ;
un composé représenté par la formule (E4) ci-après :
LiMb_{1-y}Fe_{y}PO₄ (E4)
dans laquelle Mb représente au moins un métal choisi dans le groupe consistant en Mn et Co, et y est un nombre compris dans la plage 0≤y≤0,9 ; et
un composé représenté par la formule (E5) ci-après :
Li₂MfPO₄F (E5)
dans laquelle Mf représente au moins un métal choisi dans le groupe consistant en les métaux de transition.

14. Utilisation selon l'une quelconque des revendications 11 à 13, pour laquelle le potentiel d'électrode positive, sur la base du lithium, est de 4,1 V (vs Li/Li⁺) ou plus quand la batterie est entièrement chargée.
